(19) Europäisches Patentamt
European Patent Office
Office européen des brevets

(11) EP 3 543 314 B1

(12) # EUROPEAN PATENT SPECIFICATION

(45) Date of publication and mention of the grant of the patent:
**09.09.2020 Bulletin 2020/37**

(51) Int Cl.:
*C09K 19/54* (2006.01) *C09K 19/04* (2006.01)
*C09K 19/18* (2006.01) *C09K 19/12* (2006.01)
*C09K 19/30* (2006.01) *C09K 19/58* (2006.01)

(21) Application number: **19163936.8**

(22) Date of filing: **20.03.2019**

(54) **LIQUID-CRYSTALLINE MEDIUM**

FLÜSSIGKRISTALLINES MEDIUM

SUPPORT À CRISTAUX LIQUIDES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **23.03.2018 EP 18163563**

(43) Date of publication of application:
**25.09.2019 Bulletin 2019/39**

(73) Proprietor: **Merck Patent GmbH**
**64293 Darmstadt (DE)**

(72) Inventors:
- **Klass, Dagmar**
  **64291 DARMSTADT (DE)**
- **Fritzsch, Carsten**
  **64293 DARMSTADT (DE)**

(56) References cited:
**EP-A1- 2 982 730 EP-A1- 3 112 441**

EP 3 543 314 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

Printed by Jouve, 75001 PARIS (FR)

## Description

The present invention relates to liquid-crystalline media and to high-frequency components comprising these media, especially microwave components for high-frequency devices, such as devices for shifting the phase of microwaves, tunable filters, tunable metamaterial structures, and electronic beam steering antennas (e.g. phased array antennas).

Liquid-crystalline media have a been used for many years in electro-optical displays (liquid crystal displays: LCDs) in order to display information. More recently, however, liquid-crystalline media have also been proposed for use in components for microwave technology, such as, for example, in DE 10 2004 029 429.1 A and in JP 2005-120208 (A).

A. Gaebler, F. Goelden, S. Müller, A. Penirschke and R. Jakoby "Direct Simulation of Material Permittivites using an Eigen-Susceptibility Formulation of the Vector Variational Approach", 12MTC 2009 - International Instrumentation and Measurement Technology Conference, Singapore, 2009 (IEEE), pp. 463-467, describe the corresponding properties of the known liquid-crystal mixture E7 (Merck KGaA, Germany).

DE 10 2004 029 429 A describes the use of liquid-crystal media in microwave technology, inter alia in phase shifters. Therein, liquid-crystalline media with respect to their properties in the corresponding frequency range have been discussed and liquid-crystalline media based on mixtures of mostly aromatic nitriles and isothiocyanates have been shown.

In EP 2 982 730 A1, mixtures are described that completely consist of isothiocyanate compounds.

However, these compositions are all still afflicted with several disadvantages. It is required to improve these media with respect to their general physical properties, in particular the shelf life and the stability under operation in a device have to be improved.

Surprisingly, it has been found that it is possible to achieve liquid-crystalline media having excellent stability and at the same time a high dielectric anisotropy, suitably fast switching times, a suitable, nematic phase range, high tunability and low dielectric loss, by using compounds of formula D below.

The present invention relates to liquid-crystalline media comprising

a) one or more compounds of the formula D, in which

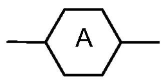

denotes

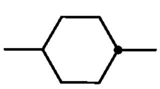
,
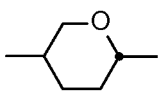

or

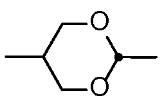

$R^{1A}$ denotes H, an alkyl, alkenyl or alkoxy radical having up to 15 C atoms, in which one or more $CH_2$-groups may be replaced by

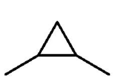
,
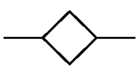
,
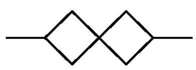
,
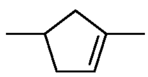

or

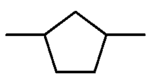
,

and in which one or more H atoms may be replaced by halogen,

$R^{2A}$ denotes H, alkyl or alkenyl or alkoxy having up to 7 C atoms, in which one or more H atoms may be replaced by halogen,

r is 0 or 1;

and

b) one or more compounds selected from the group of compounds of the formulae I, II and III,

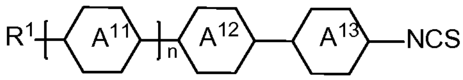

I

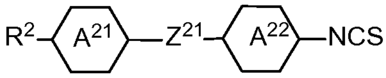

II

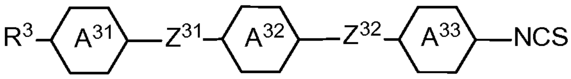

III

in which

$R^1$ denotes H, unfluorinated alkyl or unfluorinated alkoxy having 1 to 17, preferably 3 to 10 C atoms, or unfluorinated alkenyl, unfluorinated alkenyloxy or unfluorinated alkoxyalkyl having 2 to 15, preferably 3 to 10, C atoms, in which one or more $CH_2$- groups may be replaced by

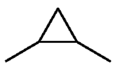, 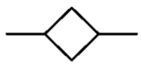,

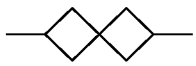, 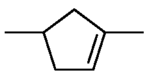 or 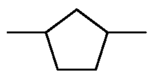,

preferably unfluorinated alkyl or unfluorinated alkenyl,

n is 0, 1 or 2,

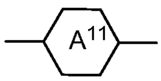

to

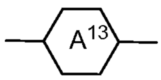,

on each occurrence, independently of one another, denote

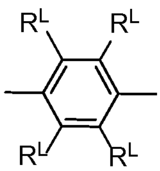, 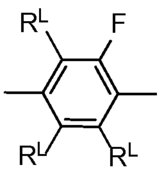, 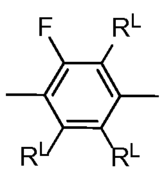,

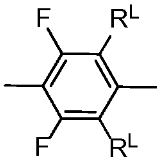, 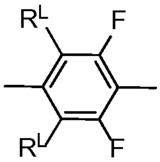, 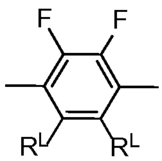

or,

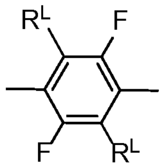,

in which $R^L$, on each occurrence identically or differently, denotes H or alkyl having 1 to 6 C atoms, preferably H, methyl or ethyl, particularly preferably H

and wherein

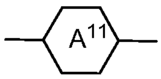

alternatively denotes

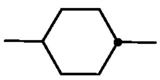, 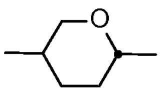, 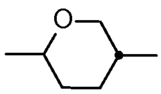, 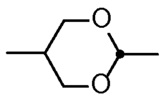,

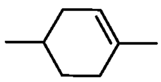 or 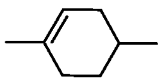,

preferably

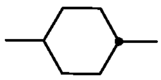,

and in case n = 2, one of

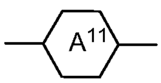

preferably denotes

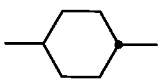

and the other preferably denotes

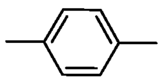, 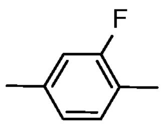, 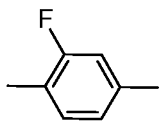,

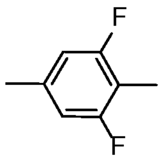 or 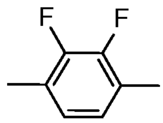,

preferably

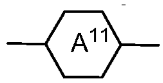

to

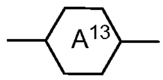,

independently of one another, denote

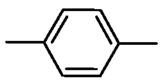, 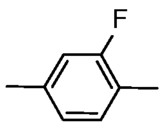, 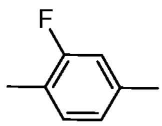,

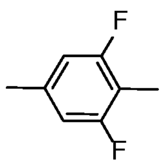, 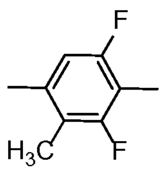 or 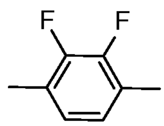,

more preferably

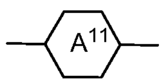

denotes

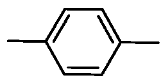 or 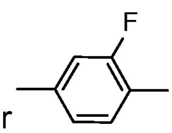,

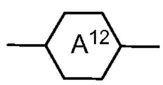

denotes

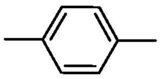, 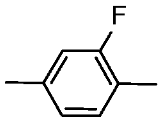 or 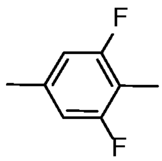,

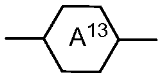

denotes

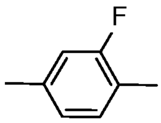 or 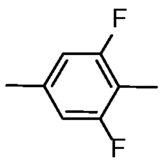;

$R^2$ denotes H, unfluorinated alkyl or unfluorinated alkoxy having 1 to 17, preferably 3 to 10 C atoms, or unfluorinated alkenyl, unfluorinated alkenyloxy or unfluorinated alkoxyalkyl having 2 to 15, preferably 3 to 10, C atoms, in which one or more $CH_2$-groups may be replaced by

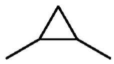, 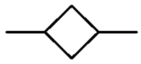, 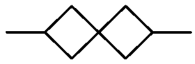,

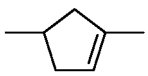 or 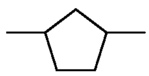,

preferably unfluorinated alkyl or unfluorinated alkenyl,

$Z^{21}$ denotes *trans*-CH=CH-, *trans*-CF=CF- or -C=C-, preferably -C=C- or *trans-CH=CH-,* and

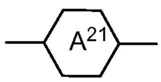 and 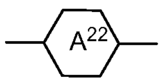,

independently of one another, denote

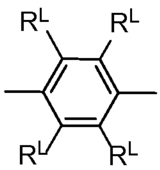, 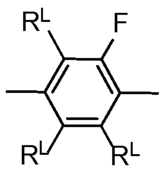, 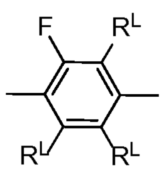,

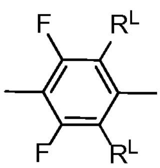, 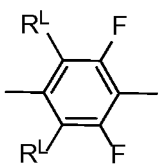, 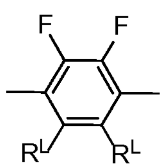

or,

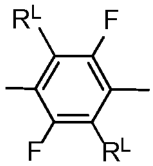,

in which $R^L$, on each occurrence identically or differently, denotes H or alkyl having 1 to 6 C atoms, preferably H, methyl or ethyl, particularly preferably H and wherein

preferably

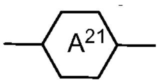 and 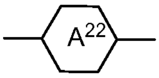,

independently of one another, denote

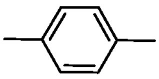, 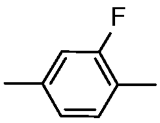

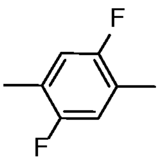, 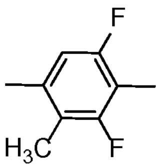 or 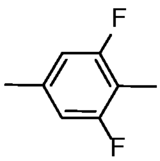,

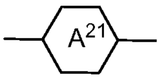

preferably denotes

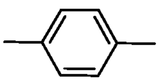, 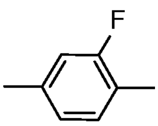

or

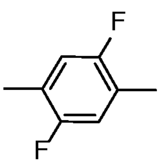,

and

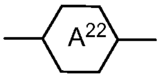

preferably denotes

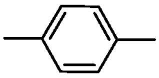,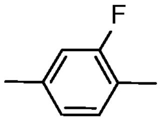

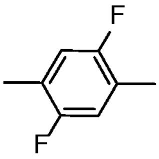, or 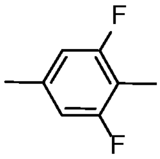,

more preferably

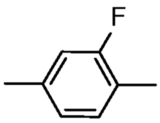 or 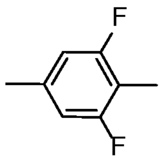;

$R^3$ denotes H, unfluorinated alkyl or unfluorinated alkoxy having 1 to 17, preferably 3 to 10 C atoms, or unfluorinated alkenyl, unfluorinated alkenyloxy or unfluorinated alkoxyalkyl having 2 to 15, preferably 3 to 10, C atoms, in which one or more $CH_2$-groups may be replaced by

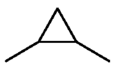, 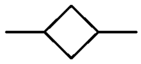, 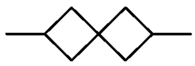,

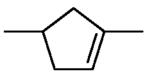 or 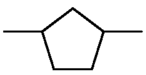,

preferably unfluorinated alkyl or unfluorinated alkenyl,

one of $Z^{31}$ and $Z^{32}$ , preferably $Z^{32}$; denotes *trans*-CH=CH-, *trans*-CF=CF- or -C=C- and the other one, independently thereof, denotes -C=C-, *trans*-CH=CH-, *trans*-CF=CF- or a single bond, preferably one of them, preferably $Z^{32}$; denotes -C=C- or *trans*-CH=CH- and the other denotes a single bond, and

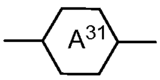

to

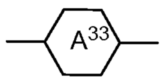,

independently of one another, denote

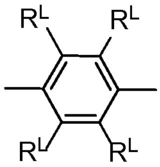, 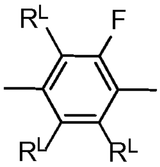, 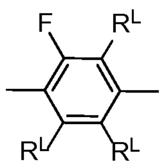,

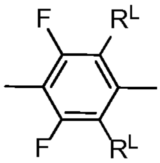, 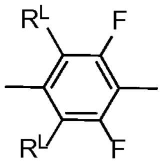, 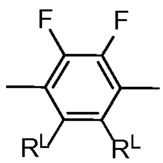

or,

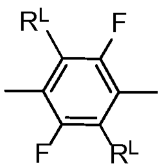,

in which $R^L$, on each occurrence identically or differently, denotes H or alkyl having 1 to 6 C atoms, preferably H, methyl or ethyl, particularly preferably H and wherein

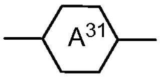

alternatively independently denotes

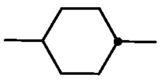, 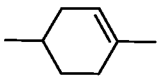 or 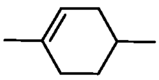,

preferably

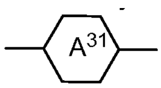

to

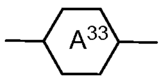,

independently of one another, denote

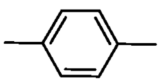, 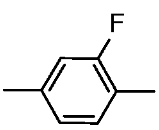, 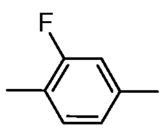,

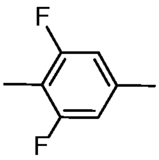 , 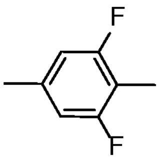 , 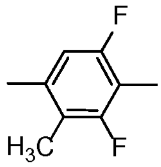 , 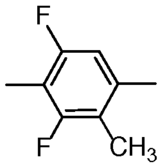

or

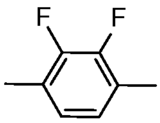 ,

more preferably

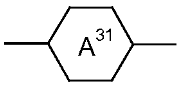

denotes

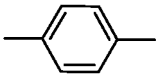 or 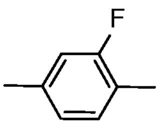 ,

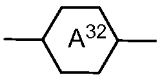

denotes

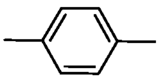 , 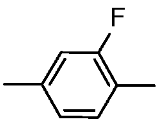 or 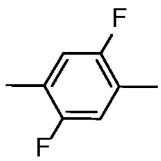 ,

more preferably

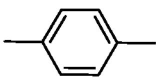 or 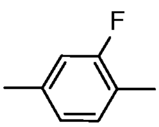 ,

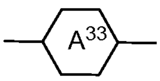

denotes

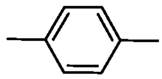, 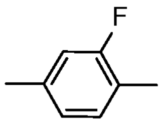 or 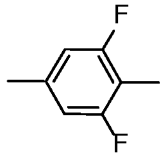,

more preferably

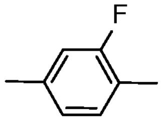 or 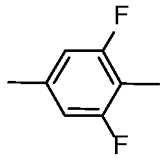.

The media according to the present invention are surprisingly stable towards heat and/or light, especially UV light. In particular, the thermal stability is very high. The media according to the present invention are furthermore distinguished by a high clearing temperature and broad nematic phase range. As a result, devices containing the media are operable under extreme temperature conditions.

The media are further distinguished by high values of the dielectric anisotropy and low rotational viscosities. As a result, the threshold voltage, i.e. the minimum voltage at which a device is switchable, is very low. A low operating voltage and low threshold voltage is desired in order to enable a device having improved switching characteristics and high energy efficiency. Low rotational viscosities enable fast switching of the devices according to the invention.

These properties as a whole make the media particularly suitable for use in components and devices for high-frequency technology and applications in the microwave range, in particular devices for shifting the phase of microwaves, tunable filters, tunable metamaterial structures, and electronic beam steering antennas (e.g. phased array antennas).

A further object of the present invention are components operable in the microwave region of the electromagnetic spectrum and devices comprising said components.

Preferred components are phase shifters, varactors, wireless and radio wave antenna arrays, matching circuits, adaptive filters and others.

Halogen is F, Cl, Br or I, preferably F or Cl, particularly preferably F.

Preferred compounds of the formula D are the compounds selected from the group of compounds of the formulae D-1 and D-2, particularly preferred from the compounds of the formula D-1:

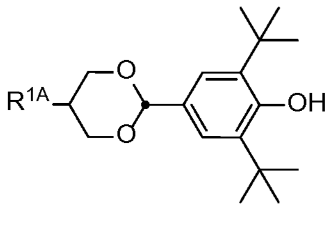

D-1

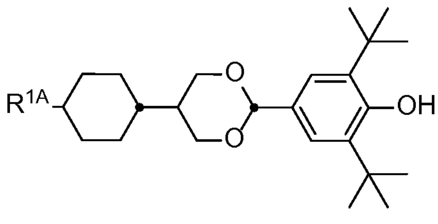

D-2

wherein

$R^{1A}$ has the meaning given above and preferably denotes alkyl having 1 to 7 C atoms, particularly preferably ethyl, n-propyl, n-butyl or n-pentyl.

The medium according to the invention preferably comprises one or more compounds of formula D-1, preferably selected from the group of compounds of the formulae D-1a to D-1e

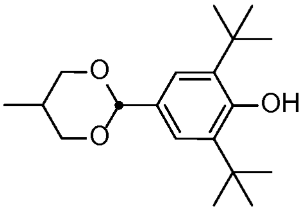

D-1a

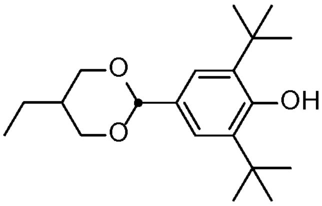

D-1b

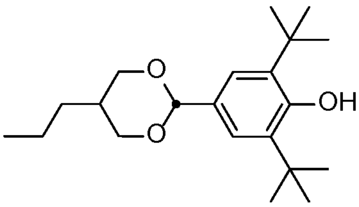

D-1c

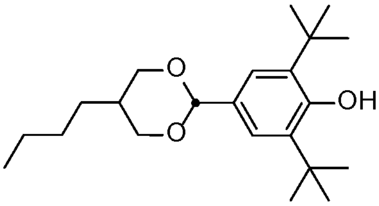

D-1d

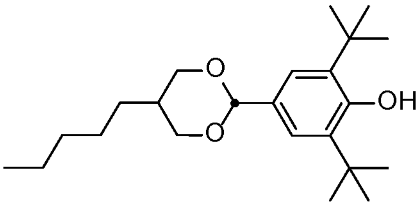

D-1e

In a preferred embodiment, the media according to the invention comprise, in addition to the compounds of formula D, one or more stabilisers selected from the group of compounds of the following formulae: 0

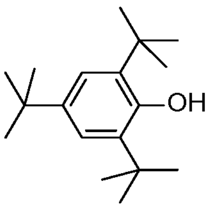

ST-1

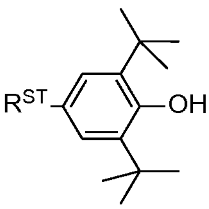

ST-2

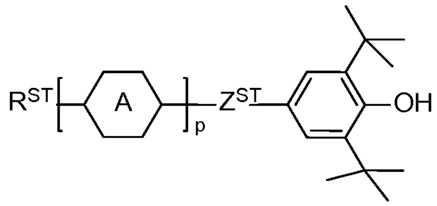

ST-3

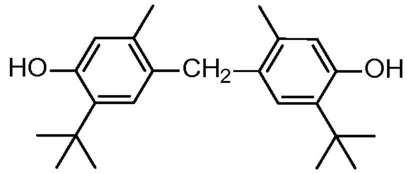

ST-4

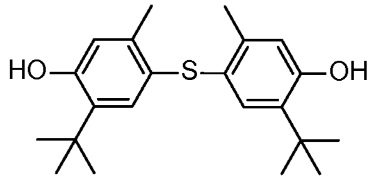

ST-5

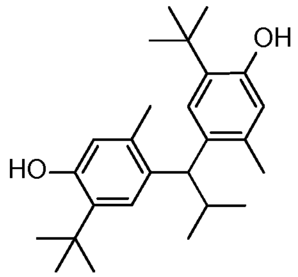

ST-6

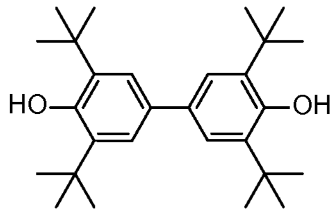

ST-7

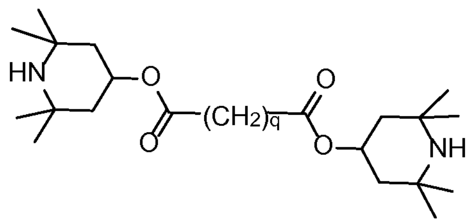

ST-8

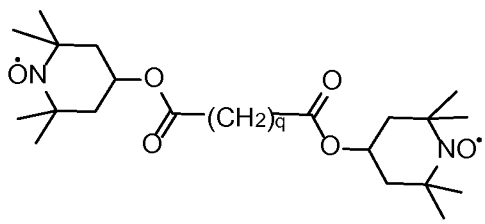

ST-9

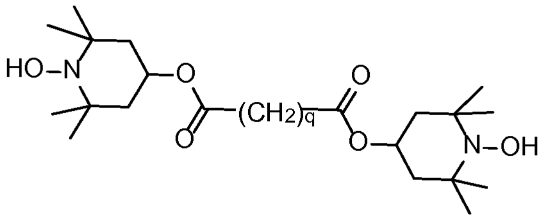

ST-10

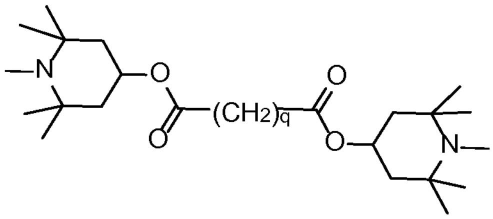

ST-11

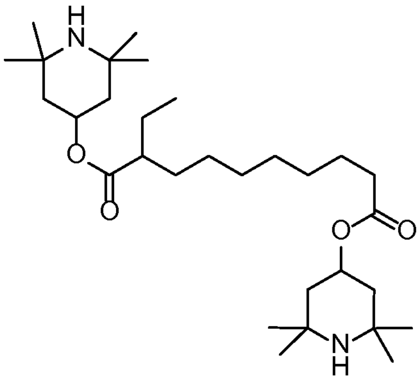

ST-12

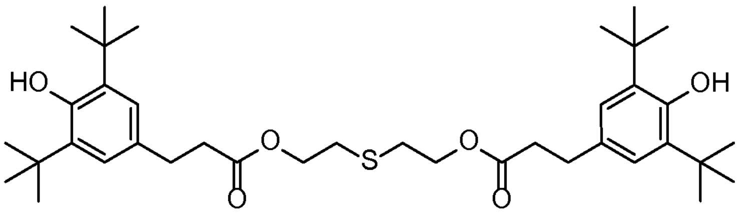

ST-13

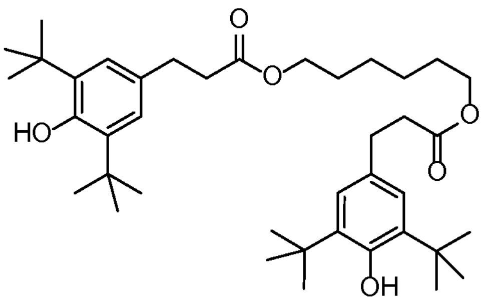

ST-14

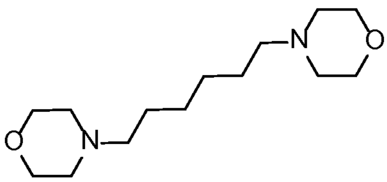

ST-15

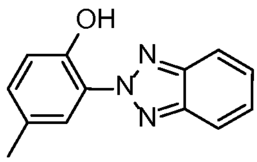

ST-16

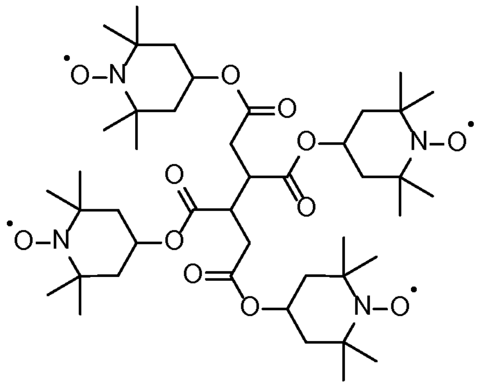

ST-17

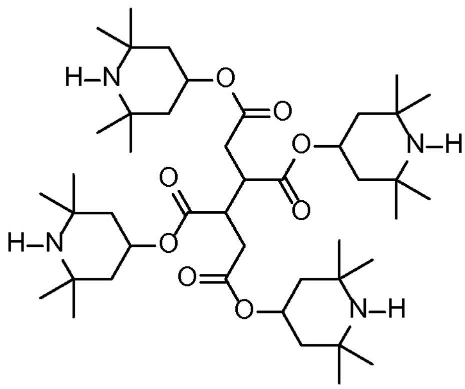

ST-18

in which

$R^{ST}$ denotes H, an alkyl or alkoxy radical having 1 to 15 C atoms, where, in addition, one or more $CH_2$ groups in these radicals may each be replaced, independently of one another, by -C≡C-, $-CF_2O-$, $-OCF_2-$, -CH=CH-,

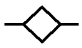 , 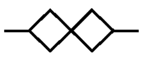 ,

-O-, -CO-O-, -O-CO- in such a way that O atoms are not linked directly to one another, and in which, in addition, one or more H atoms may be replaced by halogen, denotes

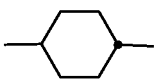 , 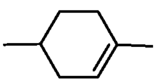 , 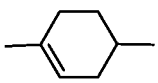 ,

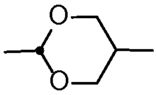, 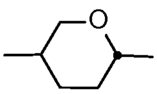, 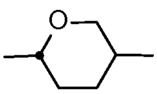, 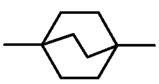,

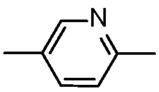, 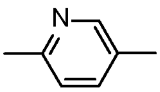, 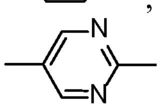, 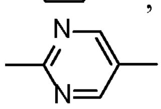,

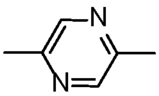, 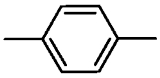, 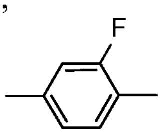, 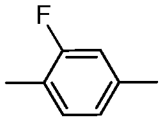,

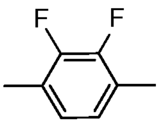, 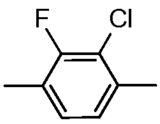, 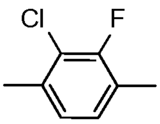, 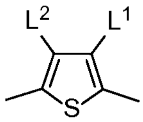,

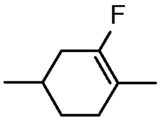, 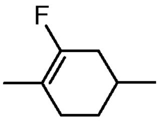, 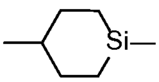, 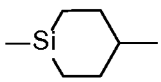,

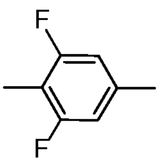, 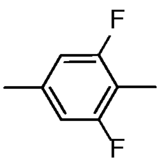, 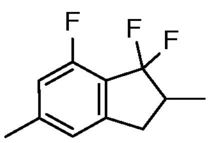, 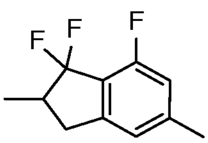,

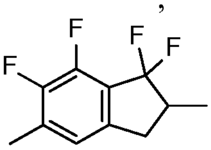, 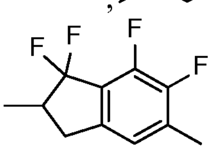, 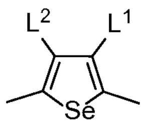, 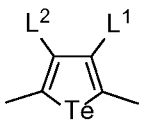,

, 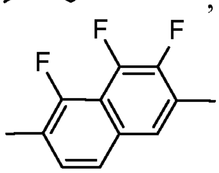, 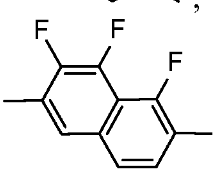,

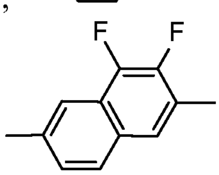, 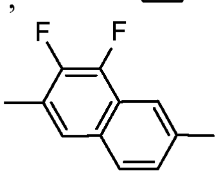, 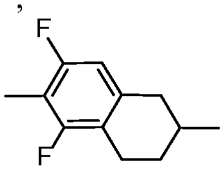

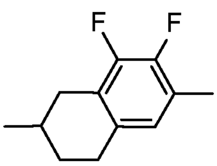, 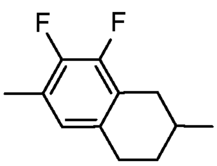, 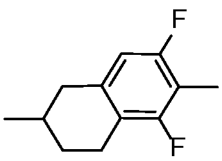

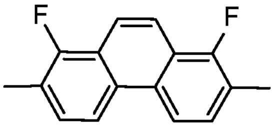, 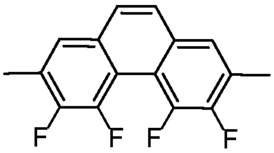, 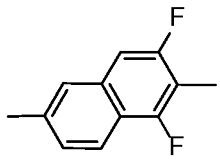

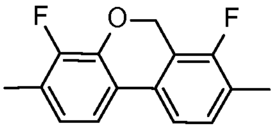, 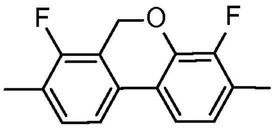,

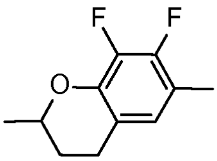, 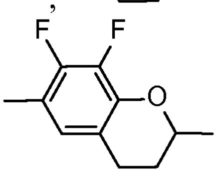, 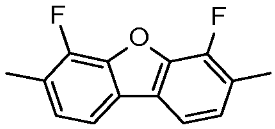

$Z^{ST}$ each, independently of one another, denote -CO-O-, -O-CO-, $-CF_2O-$, $-OCF_2-$, $-CH_2O-$, $-OCH_2-$, $-CH_2-$, $-CH_2CH_2-$, $-(CH_2)_4-$, $-CH=CH-CH_2O-$, $-C_2F_4-$, $-CH_2CF_2-$, $-CF_2CH_2-$, -CF=CF-, -CH=CF-, -CF=CH-, -CH=CH-, -C≡C- or a single bond,

$L^1$ and $L^2$ each, independently of one another, denote F, Cl, $CF_3$ or $CHF_2$,

p denotes 1 or 2,

q denotes 1, 2, 3, 4, 5, 6, 7, 8, 9 or 10.

Of the compounds of the formula ST, special preference is given to the compounds of the formulae

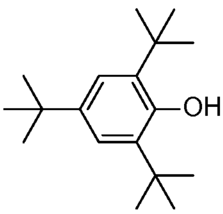

ST-1

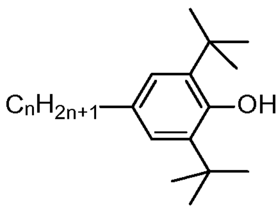

ST-2a

in which n = 1, 2, 3, 4, 5, 6 or 7, preferably n = 1 or 7

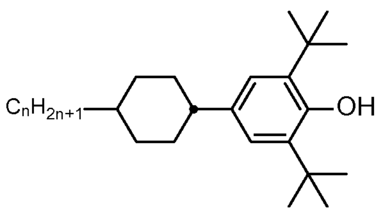

ST-3a

in which n = 1, 2, 3, 4, 5, 6 or 7, preferably n = 3

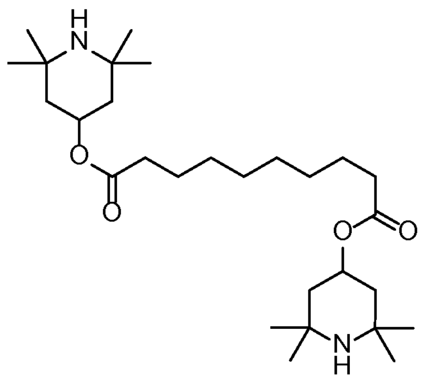

ST-8-1

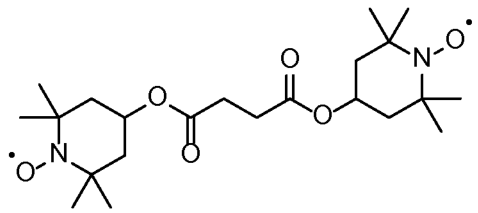

ST-9-1

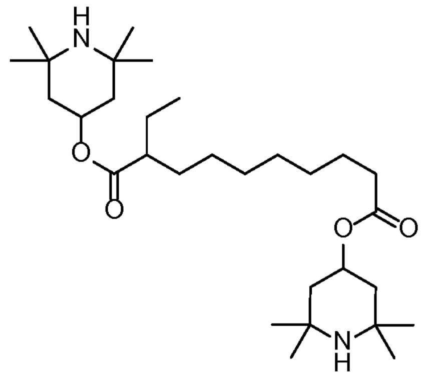

ST-12

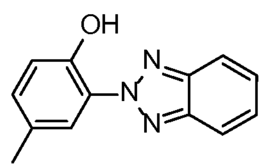

ST-16

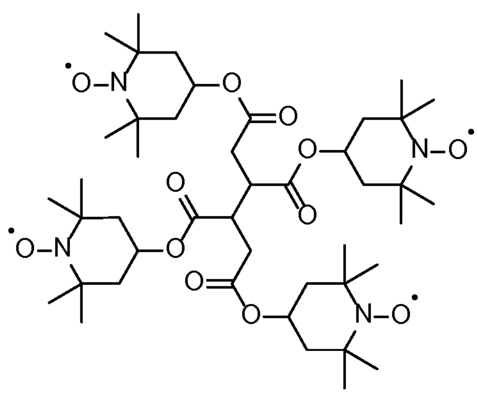

ST-17

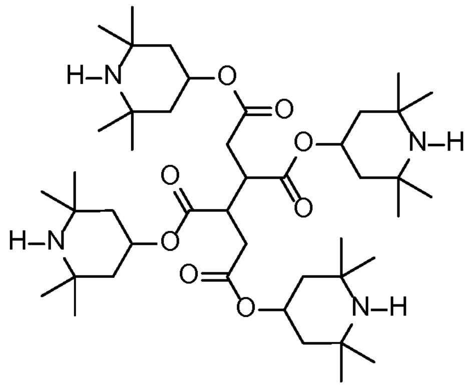

ST-18

In the compounds of the formulae ST-3a, n preferably denotes 3. In the compounds of the formula ST-2a, n preferably denotes 7.

Very particularly preferred mixtures according to the invention comprise one or more stabilisers from the group of the compounds of the formulae ST-2a-1, ST-3a-1, ST-8-1, ST-9-1 and ST-12:

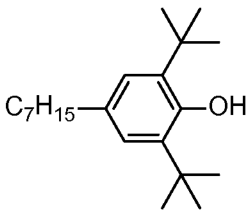

ST-2a-1

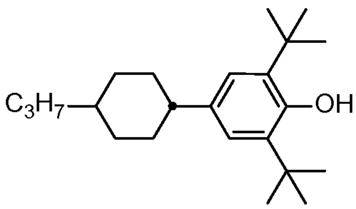

ST-3a-1

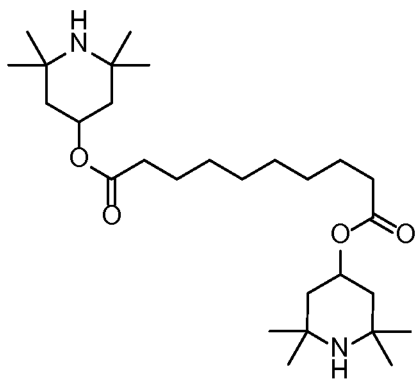

ST-8-1

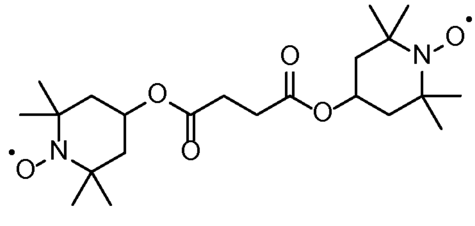

ST-9-1

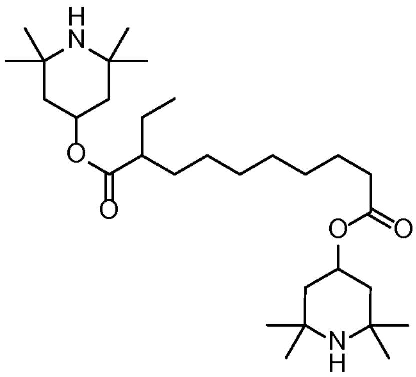

ST-12

The compounds of the formulae ST-1 to ST-18 are preferably each present in the liquid-crystal mixtures according to the invention in amounts of 0.005 - 0.5%, based on the mixture.

In a preferred embodiment of the present invention, the compounds of formula I are selected from the group of compounds of the formulae I-1 to I-5:

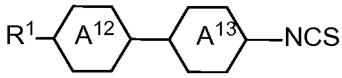

I-1

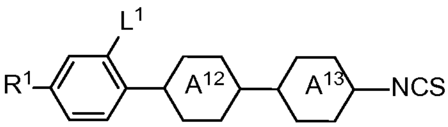

I-2

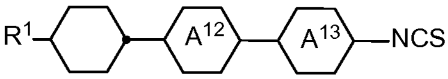

I-3

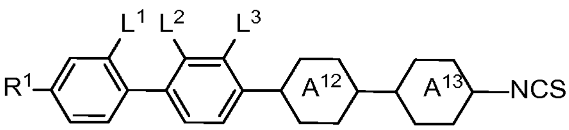

I-4

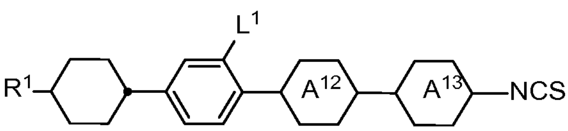

I-5

in which

$L^1$, $L^2$ and $L^3$ on each occurrence, identically or differently, denote H or F, and the other groups have the respective meanings indicated above for formula I and preferably

$R^1$ denotes unfluorinated alkyl having 1 to 7 C atoms or unfluorinated alkenyl having 2 to 7 C atoms.

The media preferably comprise one or more compounds of formula 1-1, which are preferably selected from the group of the compounds of the formulae I-1a to I-1d, preferably of formula I-1b:

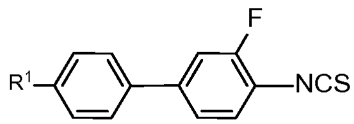

I-1a

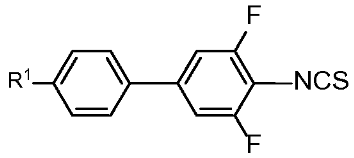

I-1b

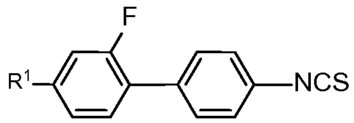

I-1c

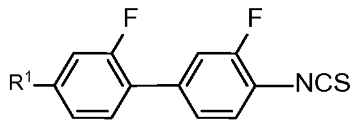

I-1d

in which $R^1$ has the meaning indicated above for formula I and preferably denotes unfluorinated alkyl having 1 to 7 C atoms or unfluorinated alkenyl having 2 to 7 C atoms.

The media preferably comprise one or more compounds of formula I-2, which are preferably selected from the group of the compounds of the formulae I-2a to I-2e, preferably of formula I-2c:

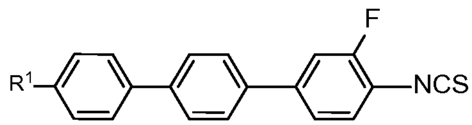

I-2a

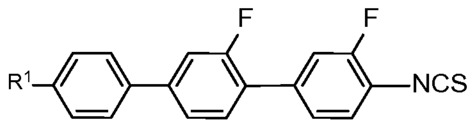

I-2b

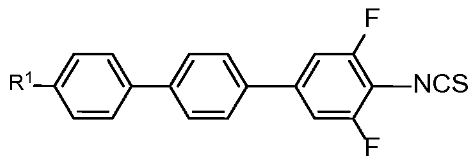

I-2c

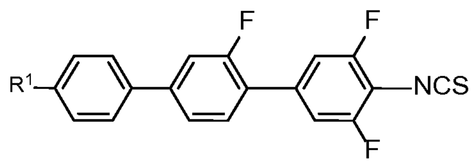

I-2d

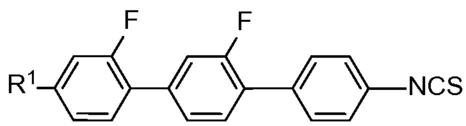

I-2e

in which $R^1$ has the meaning indicated above for formula I and preferably denotes unfluorinated alkyl having 1 to 7 C atoms or unfluorinated alkenyl having 2 to 7 C atoms.

The media preferably comprise one or more compounds of formula I-3, which are preferably selected from the group of the compounds of the formulae I-3a to I-3d , particularly preferably of formula I-3b:

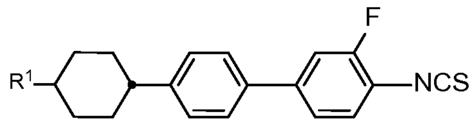

I-3a

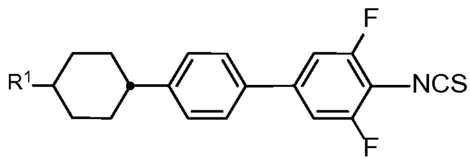

I-3b

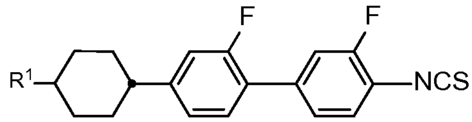

I-3c

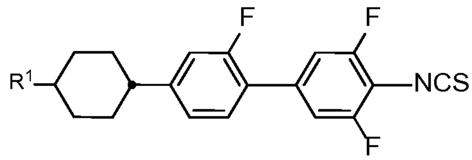

I-3d

in which $R^1$ has the meaning indicated above for formula I and preferably denotes unfluorinated alkyl having 1 to 7 C atoms or unfluorinated alkenyl having 2 to 7 C atoms.

The media preferably comprise one or more compounds of formula I-4, which are preferably selected from the group of the compounds of the formulae I-4a to I-4e, particularly preferably of formula I-4b:

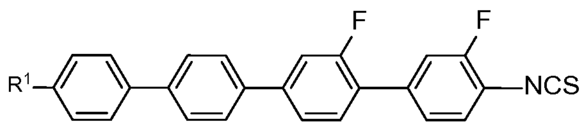

I-4a

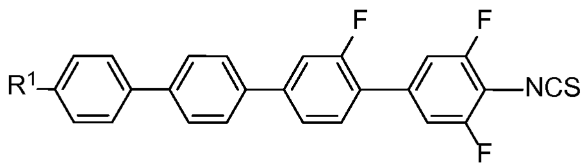

I-4b

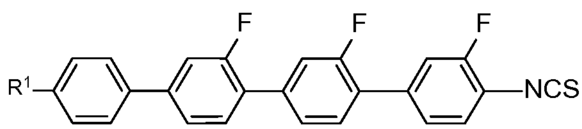

I-4c

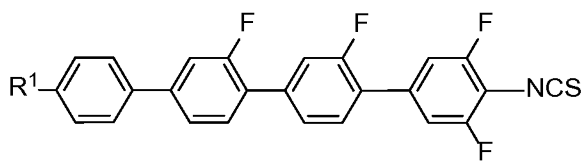

I-4d

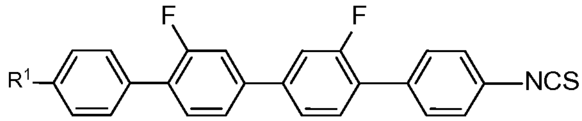

I-4e

in which $R^1$ has the meaning indicated above for formula I and preferably denotes unfluorinated alkyl having 1 to 7 C atoms or unfluorinated alkenyl having 2 to 7 C atoms.

The media preferably comprise one or more compounds of formula I-5, which are preferably selected from the group of the compounds of the formulae I-5a to I-5d, particularly preferably of formula I-5b:

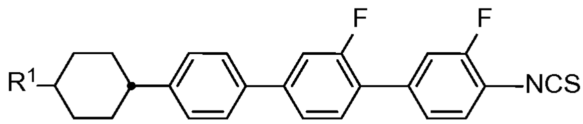

I-5a

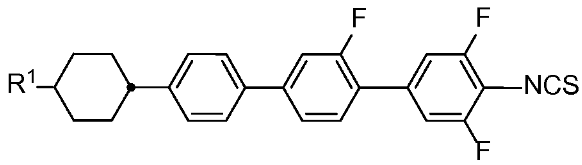

I-5b

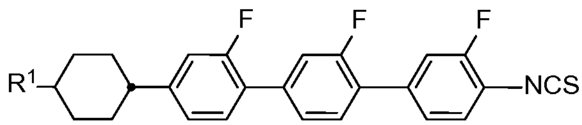

I-5c

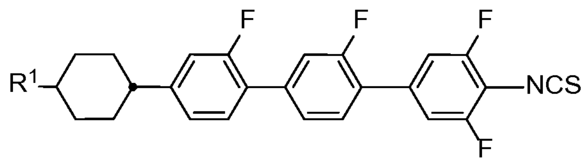

I-5d

in which $R^1$ has the meaning indicated above for formula I and preferably denotes unfluorinated alkyl having 1 to 7 C atoms or unfluorinated alkenyl having 2 to 7 C atoms.

The media preferably comprise one or more compounds of formula II, which are preferably selected from the group of the compounds of the formulae II-1 to II-3, preferably selected from the group of the compounds of the formulae II-1 and II-2:

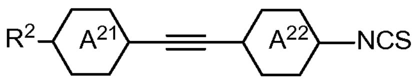

II-1

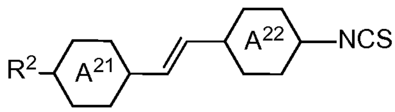

II-2

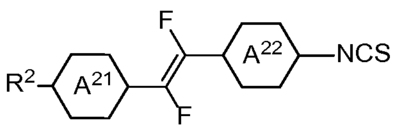

II-3

in which the occurring groups have the meanings given under formula II above and preferably

$R^2$ denotes H, unfluorinated alkyl or alkoxy having 1 to 7 C atoms or unfluorinated alkenyl having 2 to 7 C atoms,

and one of

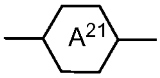 and 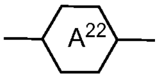

denotes

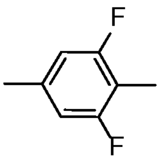 or 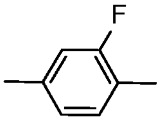 ,

and the other, independently denotes

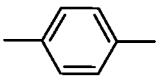 , 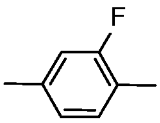 , 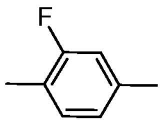 ,

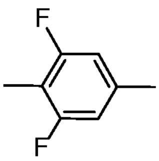 , 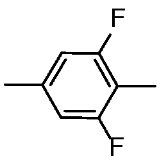 , 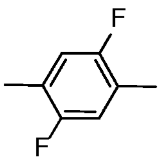

or

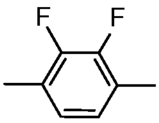 ,

preferably

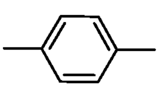 , 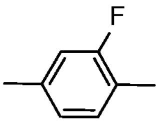 , 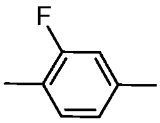 ,

most preferably

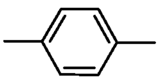 ,

and preferably

$R^2$ denotes $C_nH_{2n+1}$ or $CH_2=CH-(CH_2)_Z$, and

n denotes an integer in the range from 0 to 15, preferably in the range from 1 to 7 and particularly preferably 1 to 5, and

z denotes 0, 1, 2, 3 or 4, preferably 0 or 2.

The compounds of formula II-1 are preferably selected from the group of the compounds of the formulae II-1a to II-1e:

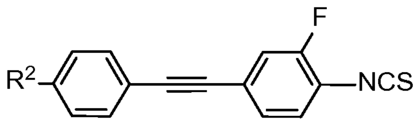

II-1a

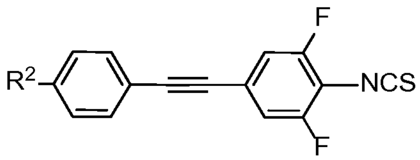

II-1b

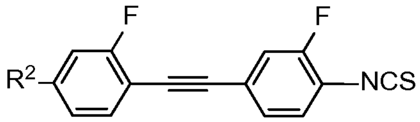

II-1c

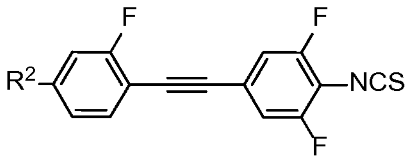

II-1d

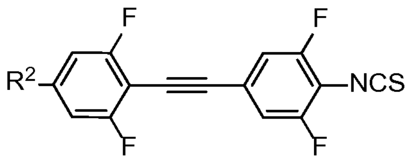

II-1e

in which

$R^2$ has the meaning indicated above and preferably denotes $C_nH_{2n+1}$ or $CH_2=CH-(CH_2)_Z$, and

n independently of one another, denote an integer in the range from 0 to 15, preferably in the range from 1 to 7 and particularly preferably 1 to 5, and

z denotes 0, 1, 2, 3 or 4, preferably 0 or 2.

The compounds of formula II-2 are preferably selected from the group of the compounds of the formulae II-2a and II-2b:

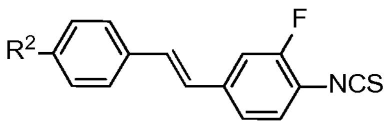

II-2a

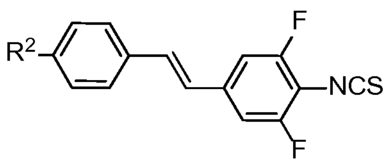

II-2b

in which

$R^2$ has the meaning indicated above and preferably denotes $C_nH_{2n+1}$ or $CH_2=CH-(CH_2)_Z$,

n denotes an integer in the range from 0 to 15, preferably in the range from 1 to 7 and particularly preferably 1 to 5, and

z denotes 0, 1, 2, 3 or 4, preferably 0 or 2.

The compounds of formula II-3 are preferably selected from the group of the compounds of the of formulae II-3a to II-3d:

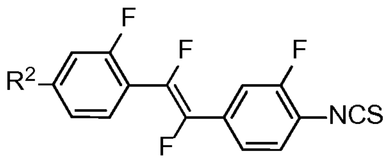

II-3a

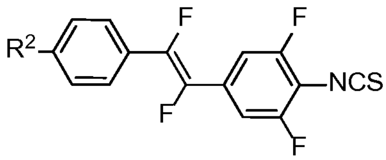

II-3b

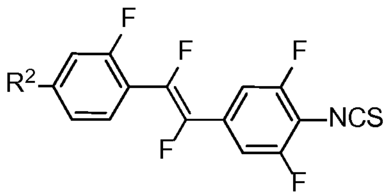

II-3c

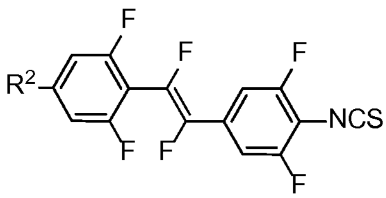

II-3d

in which

$R^2$ has the meaning indicated above and preferably denotes $C_nH_{2n+1}$ or $CH_2=CH-(CH_2)_Z$,

n denotes an integer in the range from 0 to 15, preferably in the range from 1 to 7 and particularly preferably 1 to 5, and

z denotes 0, 1, 2, 3 or 4, preferably 0 or 2.

The compounds of formula III are preferably selected from the group of the compounds of the formulae III-1 to III-6, more preferably of the formulae selected from the group of the compounds of the formulae III-1, III-2, III-3 and III-4, and particularly preferably of formula III-1:

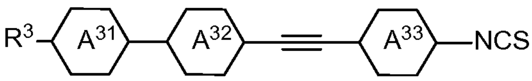

III-1

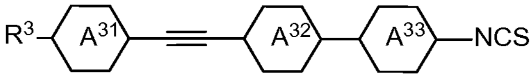

III-2

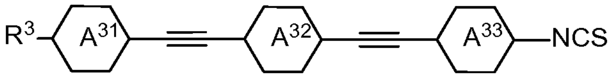

III-3

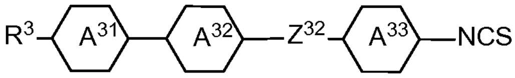

III-4

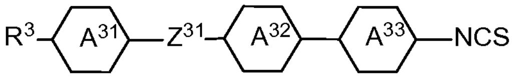

III-5

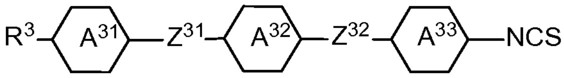

III-6

in which

| | |
|---|---|
| $Z^{31}$ and $Z^{32}$ | independently of one another denote trans-CH=CH- or trans-CF=CF-, preferably trans-CH=CH-, and in formula III-6 alternatively one of $Z^{31}$ and $Z^{32}$ may denote -C=C- and the other groups have the meanings given above under formula III, and preferably |
| $R^3$ | denotes H, unfluorinated alkyl or alkoxy having 1 to 7 C atoms or unfluorinated alkenyl having 2 to 7 C atoms, |

and one of

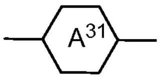

to

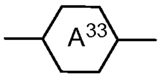

,

preferably

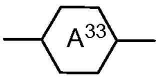

,

denotes

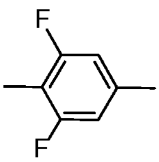

,

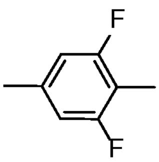

,

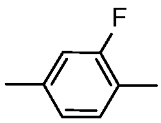 or 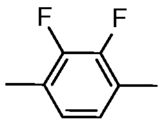,

preferably

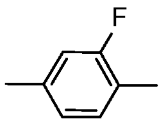 or 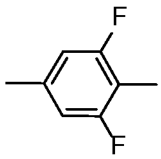,

and the others, independently of one another, denote

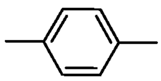, 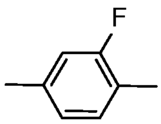, 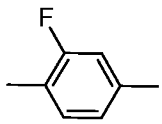,
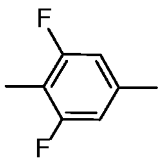, 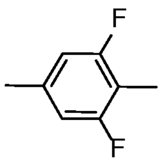, 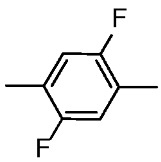

or

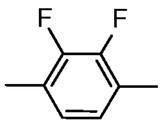,

preferably

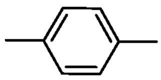, 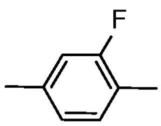, 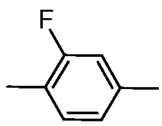,

or

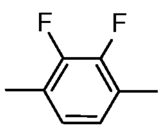,

more preferably

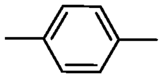 or, 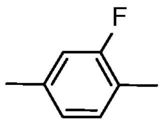 ,

and preferably

$R^3$ denotes $C_nH_{2n+1}$ or $CH_2=CH-(CH_2)_Z$,

n denotes an integer in the range from 0 to 15, preferably in the range from 1 to 7 and particularly preferably 1 to 5, and

z denotes 0, 1, 2, 3 or 4, preferably 0 or 2.

The compounds of formula III-1 are preferably selected from the group of the compounds of the formulae III-1 a to III-1f, more preferably selected from the group of the compounds of the formulae III-1a and III-1b, particularly preferably of formula III-1b,:

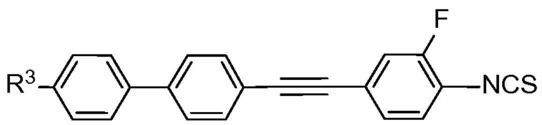

III-1a

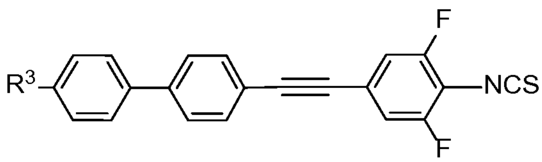

III-1b

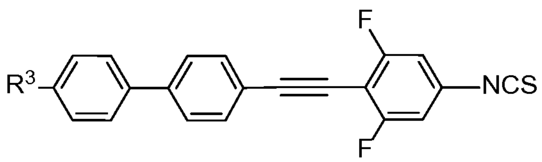

III-1c

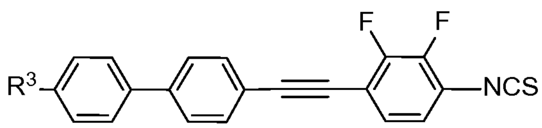

III-1d

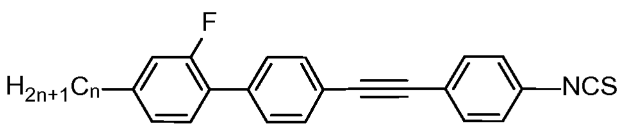

III-1e

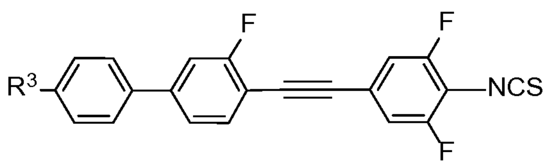

III-1f

in which

$R^3$ has the meaning indicated above and preferably denotes $C_nH_{2n+1}$ or $CH_2=CH-(CH_2)_Z$,

n denotes an integer in the range from 0 to 15, preferably in the range from 1 to 7 and particularly preferably 1 to 5, and

z denotes 0, 1, 2, 3 or 4, preferably 0 or 2.

The compounds of formula III-2 are preferably compounds of formula III-2a to III-2h:

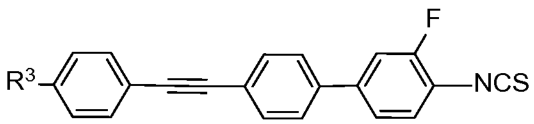

III-2a

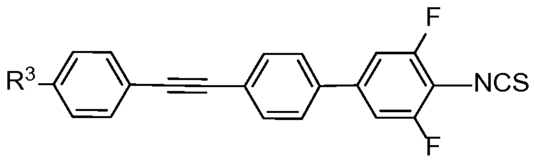

III-2b

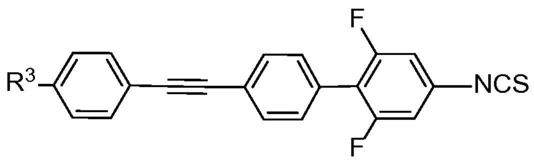

III-2c

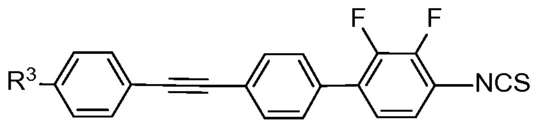

III-2d

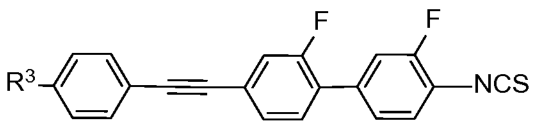

III-2e

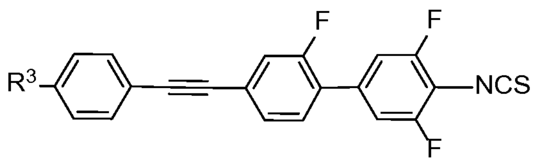

III-2f

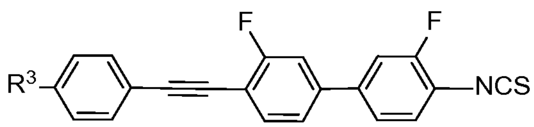

III-2g

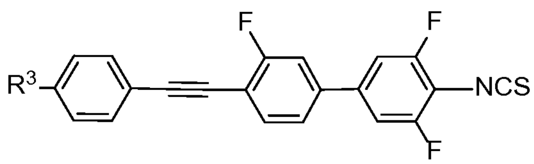

III-2h

in which

$R^3$ has the meaning indicated above and preferably denotes $C_nH_{2n+1}$ or $CH_2=CH-(CH_2)_Z$,

n denotes an integer in the range from 0 to 15, preferably in the range from 1 to 7 and particularly preferably 1 to 5, and

z denotes 0, 1, 2, 3 or 4, preferably 0 or 2.

The compounds of formula III-5 are preferably selected from the compounds of formula III-5a:

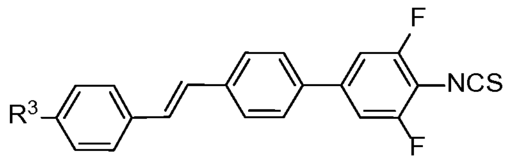

III-5a

$R^3$ has the meaning indicated above for formula III-5 and preferably denotes $C_nH_{2n+1}$, in which

n denotes an integer in the range from 0 to 7, preferably in the range from 1 to 5.

In a preferred embodiment, the media according to the invention comprise one or more compounds selected from the group of compounds of the formulae II-1A-1 to II-1A-12, very preferably II-1A-1 or II-1A-2:

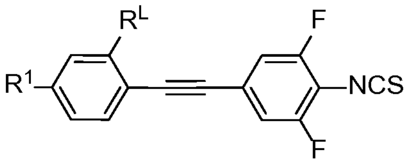

II-1A-1

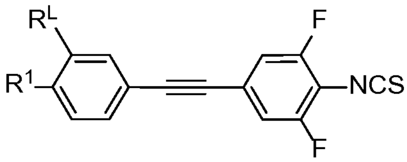

II-1A-2

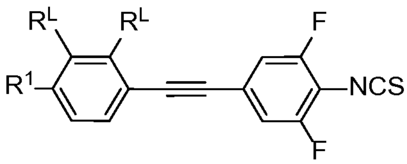

II-1A-3

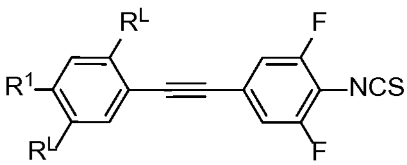

II-1A-4

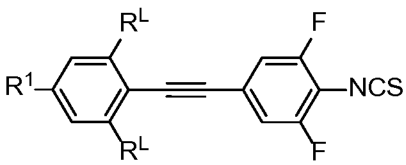

II-1A-5

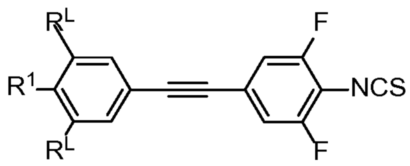

II-1A-6

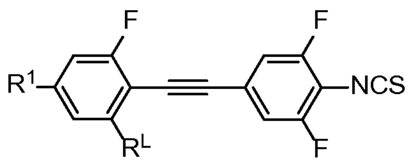

II-1A-7

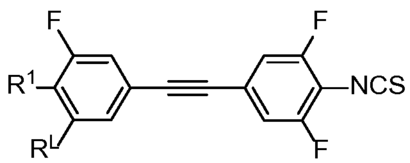

II-1A-8

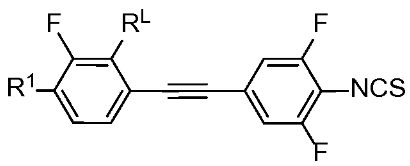

II-1A-9

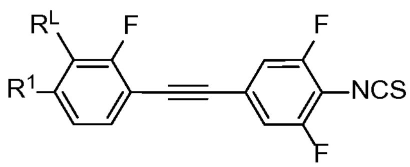

II-1A-10

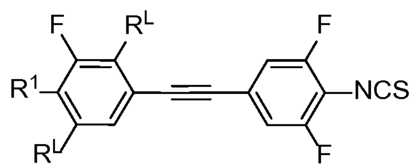

II-1A-11

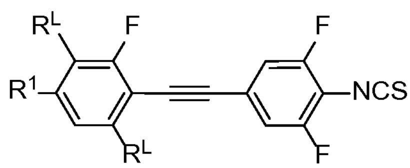

II-1A-12

in which

$R^1$ denotes alkyl or alkenyl having up to 7 C atoms, preferably ethyl, n-propyl, n-butyl or n-pentyl, n-hexyl,

$R^L$ on each occurrence, the same or differently, denotes alkyl or alkenyl having 1 to 5 C atoms, or cycloalkyl or cycloalkenyl each having 3 to 6 C atoms, preferably methyl, ethyl, n-propyl, n-butyl, isopropyl, cyclopropyl, cyclobutyl, cyclopentyl or cyclopent-1-enyl, very preferably ethyl.

Additionally, the liquid-crystalline media according to the present invention in a certain embodiment, which may

be the same or different from the previous preferred embodiments preferably comprise one or more compounds of formula IV,

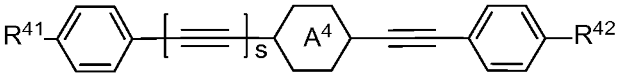 IV

in which

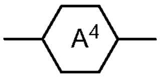

denotes

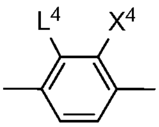, 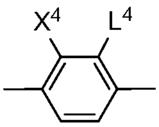, 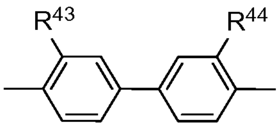,

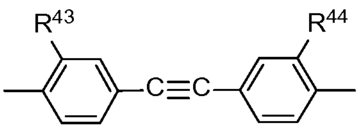 or 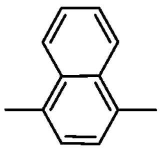,

s is 0 or 1, preferably 1,

preferably

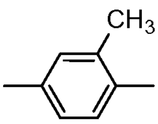, 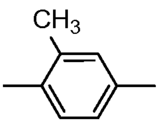, 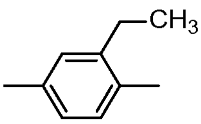, 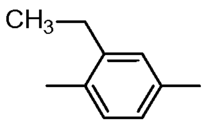,

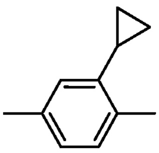, 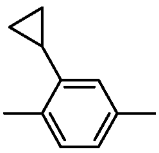, 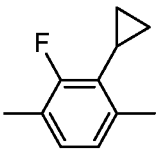, 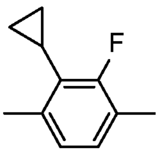,

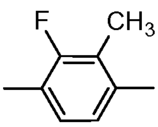, 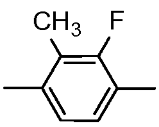, 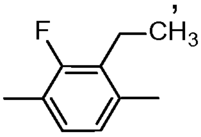, 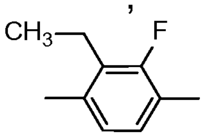,

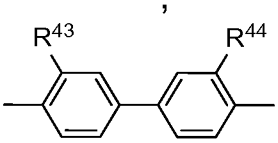, 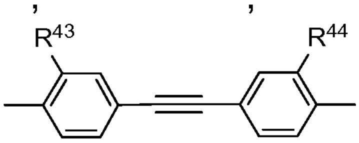,

or

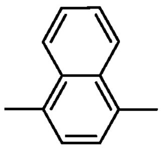,

particularly preferably

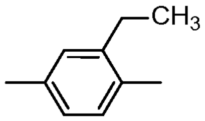, 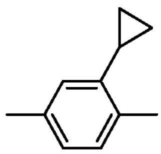, 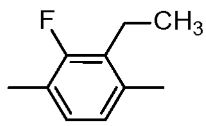,

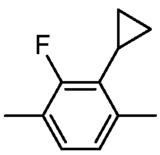 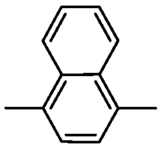

or,

$L^4$ denotes H or alkyl having 1 to 6 C atoms, cycloalkyl having 3 to 6 C atoms or cycloalkenyl having 4 to 6 C atoms, preferably $CH_3$, $C_2H_5$, $n$-$C_3H_7$, $i$-$C_3H_7$, cyclopropyl, cyclobutyl, cyclohexyl, cyclopent-1-enyl or cyclohex-1-enyl, and particularly preferably $CH_3$, $C_2H_5$, cyclopropyl or cyclobutyl,

$X^4$ denotes H, alkyl having 1 to 3 C atoms or halogen, preferably H, F or Cl, more preferably H or F and particularly preferably F,

$R^{41}$ to $R^{44}$, independently of one another, denote unfluorinated alkyl or unfluorinated alkoxy, each having 1 to 15 C atoms, unfluorinated alkenyl, unfluorinated alkenyloxy or unfluorinated alkoxyalkyl, each having 2 to 15 C atoms, or cycloalkyl, alkylcycloalkyl, cycloalkenyl, alkylcycloalkenyl, alkylcycloalkylalkyl or alkylcycloalkenylalkyl, each having up to 15 C atoms, and alternatively one of $R^{43}$ and $R^{44}$ or both also denote H,

preferably

$R^{41}$ and $R^{42}$, independently of one another, denote unfluorinated alkyl or unfluorinated alkoxy, each having 1 to 7 C atoms, or unfluorinated alkenyl, unfluorinated alkenyloxy or unfluorinated alkoxyalkyl, each having 2 to 7 C atoms,

particularly preferably

$R^{41}$ denotes unfluorinated alkyl having 1 to 7 C atoms or unfluorinated alkenyl, unfluorinated alkenyloxy or unfluorinated alkoxyalkyl, each having 2 to 7 C atoms, and

particularly preferably

$R^{42}$ denotes unfluorinated alkyl or unfluorinated alkoxy, each having 1 to 7 C atoms, and

preferably

$R^{43}$ and $R^{44}$ denote H, unfluorinated alkyl having 1 to 5 C atoms, unfluorinated cycloalkyl or cycloalkenyl having 3 to 7 C atoms, unfluorinated alkylcyclohexyl or unfluorinated cyclohexylalkyl, each having 4 to 12 C atoms, or unfluorinated alkylcyclohexylalkyl having 5 to 15 C atoms, particularly preferably cyclopropyl, cyclobutyl or cyclohexyl, and very particularly preferably at least one of $R^{43}$ and $R^{44}$ denotes $n$-alkyl, particularly preferably methyl, ethyl or $n$-propyl, and the other denotes H or $n$-alkyl, particularly preferably H, methyl, ethyl or $n$-propyl.

In a preferred embodiment of the present application, the liquid-crystal medium additionally comprises one or more compounds selected from the group of compounds of the formulae V, VI, VII, VIII and IX:

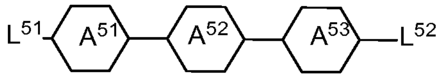
V

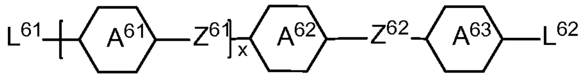
VI

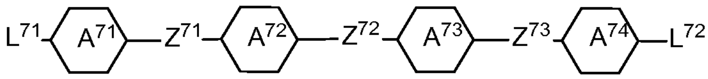
VII

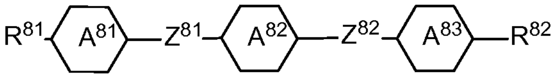
VIII

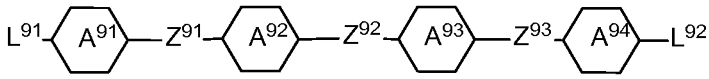
IX

in which

$L^{51}$ denotes $R^{51}$ or $X^{51}$,

$L^{52}$ denotes $R^{52}$ or $X^{52}$,

$R^{51}$ and $R^{52}$, independently of one another, denote H, unfluorinated alkyl or unfluorinated alkoxy having 1 to 17, preferably 3 to 10, C atoms or unfluorinated alkenyl, unfluorinated alkenyloxy or unfluorinated alkoxyalkyl having 2 to 15, preferably 3 to 10, C atoms, preferably alkyl or unfluorinated alkenyl,

$X^{51}$ and $X^{52}$, independently of one another, denote H, F, Cl, -CN, $SF_5$, fluorinated alkyl or fluorinated alkoxy having 1 to 7 C atoms or fluorinated alkenyl, fluorinated alkenyloxy or fluorinated alkoxyalkyl having 2 to 7 C atoms, preferably fluorinated alkoxy, fluorinated alkenyloxy, F or Cl, and

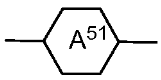

to

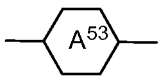
,

independently of one another, denote

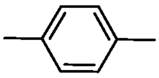
, 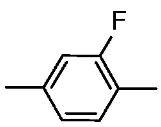
, 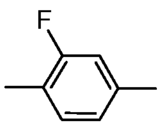
,

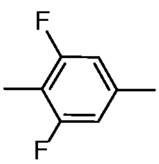
, 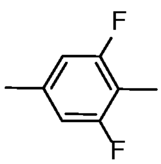
, 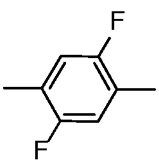

or

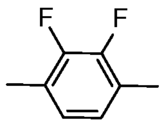,

preferably

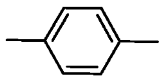, 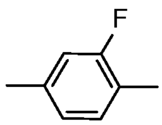, 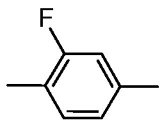,

or

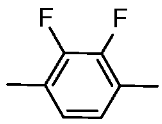,

$L^{61}$ denotes $R^{61}$ and, in the case where $Z^{61}$ and/or $Z^{62}$ denote trans-CH=CH- or trans-CF=CF-, alternatively also denotes $X^{61}$,

$L^{62}$ denotes $R^{62}$ and, in the case where $Z^{61}$ and/or $Z^{62}$ denote trans-CH=CH- or trans-CF=CF-, alternatively also denotes $X^{62}$,

$R^{61}$ and $R^{62}$, independently of one another, denote H, unfluorinated alkyl or unfluorinated alkoxy having 1 to 17, preferably 3 to 10, C atoms or unfluorinated alkenyl, unfluorinated alkenyloxy or unfluorinated alkoxyalkyl having 2 to 15, preferably 3 to 10, C atoms, preferably alkyl or unfluorinated alkenyl,

$X^{61}$ and $X^{62}$, independently of one another, denote F or Cl, -CN, $SF_5$, fluorinated alkyl or alkoxy having 1 to 7 C atoms or fluorinated alkenyl, alkenyloxy or alkoxyalkyl having 2 to 7 C atoms,

one of

$Z^{61}$ and $Z^{62}$ denotes *trans*-CH=CH-, *trans*-CF=CF- or -C=C- and the other, independently thereof, denotes trans-CH=CH-, *trans*-CF=CF- or a single bond, preferably one of them denotes -C=C- or *trans*-CH=CH- and the other denotes a single bond, and

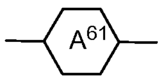

to

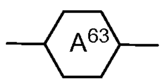,

independently of one another, denote

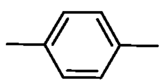, 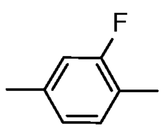, 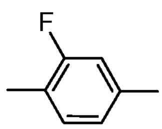,

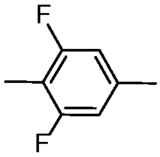 , 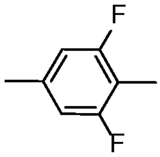 , 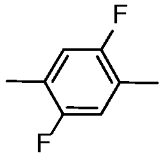

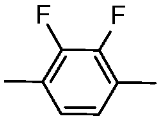 , 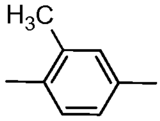 , or 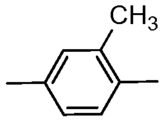 ,

preferably

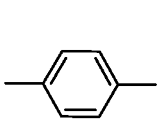 , 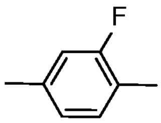 , 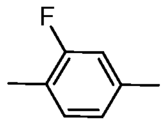 ,

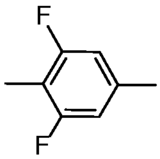 , 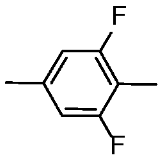 , or 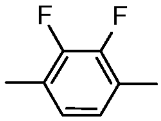 ,

and

x denotes 0 or 1;

$L^{71}$ denotes $R^{71}$ or $X^{71}$,

$L^{72}$ denotes $R^{72}$ or $X^{72}$,

$R^{71}$ and $R^{72}$, independently of one another, denote H, unfluorinated alkyl or unfluorinated alkoxy having 1 to 17, preferably 3 to 10, C atoms or unfluorinated alkenyl, unfluorinated alkenyloxy or unfluorinated alkoxyalkyl having 2 to 15, preferably 3 to 10, C atoms, preferably alkyl or unfluorinated alkenyl,

$X^{71}$ and $X^{72}$, independently of one another, denote H, F, Cl, -CN, -NCS, $-SF_5$, fluorinated alkyl or fluorinated alkoxy having 1 to 7 C atoms or fluorinated alkenyl, unfluorinated or fluorinated alkenyloxy or unfluorinated or fluorinated alkoxyalkyl having 2 to 7 C atoms, preferably fluorinated alkoxy, fluorinated alkenyloxy, F or Cl, and

$Z^{71}$ to $Z^{73}$, independently of one another, denote trans-CH=CH-, trans-CF=CF-, -C=C- or a single bond, preferably one or more of them denote a single bond, particularly preferably all denote a single bond and

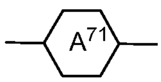

to

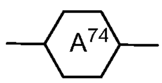 ,

independently of one another, denote

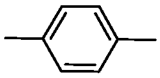, 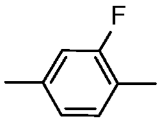, 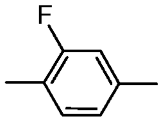,

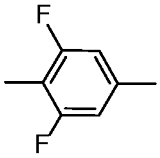, 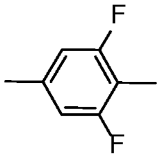, 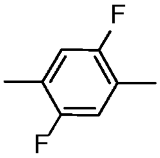

or 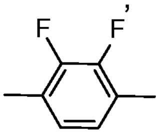,

preferably

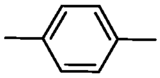, 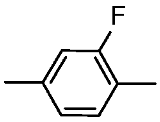, 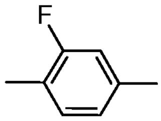,

or 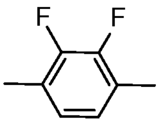,

$R^{81}$ and $R^{82}$, independently of one another, denote H, unfluorinated alkyl or alkoxy having 1 to 15, preferably 3 to 10, C atoms or unfluorinated alkenyl, alkenyloxy or alkoxyalkyl having 2 to 15, preferably 3 to 10, C atoms, preferably unfluorinated alkyl or alkenyl,

one of

$Z^{81}$ and $Z^{82}$ denotes *trans*-CH=CH-, *trans*-CF=CF- or -C=C- and the other, independently thereof, denotes trans-CH=CH-, *trans*-CF=CF- or a single bond, preferably one of them denotes -C=C- or *trans*-CH=CH- and the other denotes a single bond, and

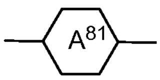

denotes

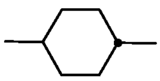,

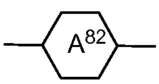 and 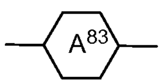,

independently of one another, denote

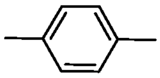, 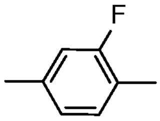, 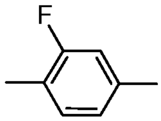,

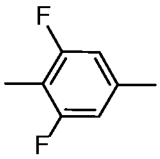, 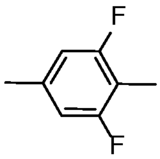, 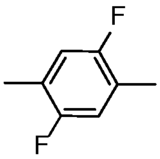

or 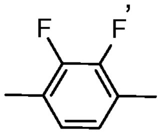,

$L^{91}$ denotes $R^{91}$ or $X^{91}$,

$L^{92}$ denotes $R^{92}$ or $X^{92}$,

$R^{91}$ and $R^{92}$, independently of one another, denote H, unfluorinated alkyl or alkoxy having 1 to 15, preferably 3 to 10, C atoms or unfluorinated alkenyl, alkenyloxy or alkoxyalkyl having 2 to 15, preferably 3 to 10, C atoms, preferably unfluorinated alkyl or alkenyl,

$X^{91}$ and $X^{92}$, independently of one another, denote H, F, Cl, -CN, -NCS, $-SF_5$, fluorinated alkyl or fluorinated alkoxy having 1 to 7 C atoms or fluorinated alkenyl, unfluorinated or fluorinated alkenyloxy or unfluorinated or fluorinated alkoxyalkyl having 2 to 7 C atoms, preferably fluorinated alkoxy, fluorinated alkenyloxy, F or Cl, and

$Z^{91}$ to $Z^{93}$, independently of one another, denote trans-CH=CH-, trans-CF=CF-, -C=C- or a single bond, preferably one or more of them denotes a single bond, and particularly preferably all denote a single bond,

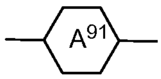

denotes

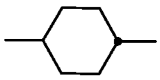, 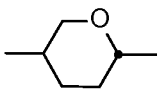

or

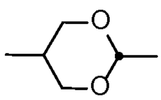,

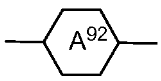

to

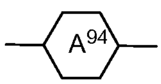

independently of one another, denote

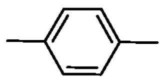, 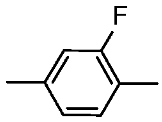, 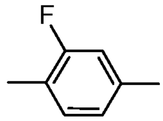,
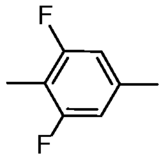, 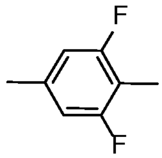, 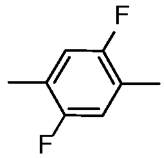
or 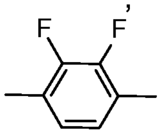.

In a preferred embodiment of the present invention, the liquid-crystal medium comprises one or more compounds of the formula V, preferably selected from the group of the compounds of the formulae V-1 to V-3, preferably of the formulae V-1 and/or V-2 and/or V-3, preferably of the formulae V-1 and V-2:

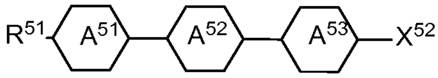
V-1

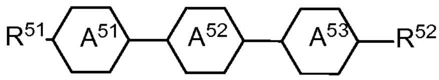
V-2

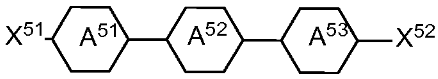
V-3

in which the parameters have the respective meanings indicated above for formula V and preferably

$R^{51}$ denotes unfluorinated alkyl having 1 to 7 C atoms or unfluorinated alkenyl having 2 to 7 C atoms,

$R^{52}$ denotes unfluorinated alkyl having 1 to 7 C atoms or unfluorinated alkenyl having 2 to 7 C atoms or unfluorinated alkoxy having 1 to 7 C atoms,

$X^{51}$ and $X^{52}$, independently of one another, denote F, Cl, $-OCF_3$, $-CF_3$, -CN or $-SF_5$, preferably F, Cl, $-OCF_3$ or -CN.

The compounds of the formula V-1 are preferably selected from the group of the compounds of the formulae V-1a to V-1d, preferably V-1c and V-1d :

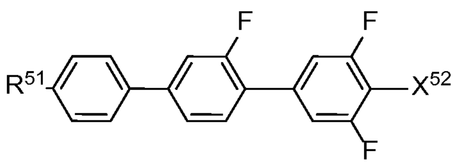
V-1a

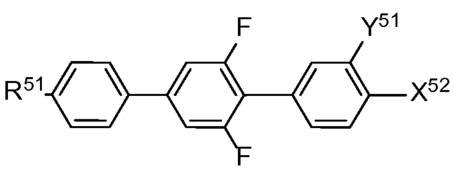
V-1b

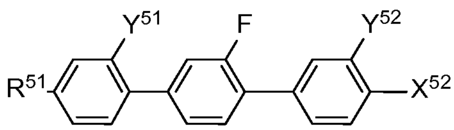

V-1c

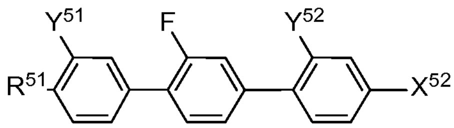

V-1d

in which the parameters have the respective meanings indicated above for formula V-1 and in which

| | |
|---|---|
| $Y^{51}$ and $Y^{52}$, | in each case independently of one another, denote H or F, and preferably |
| $R^{51}$ | denotes alkyl or alkenyl, and |
| $X^{51}$ | denotes F, Cl or $-OCF_3$. |

The compounds of the formula V-2 are preferably selected from the group of the compounds of the formulae V-2a to V-2e and/or from the group of the compounds of the formulae V-2f and V-2g:

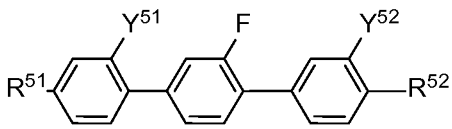

V-2a

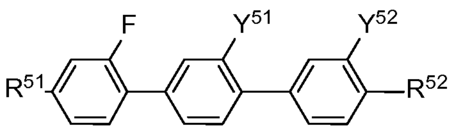

V-2b

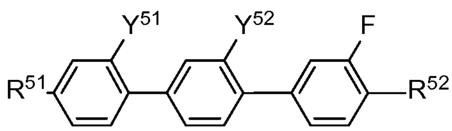

V-2c

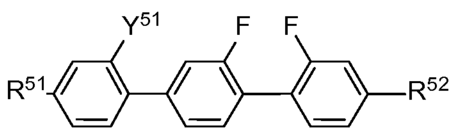

V-2d

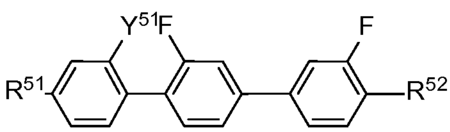

V-2e

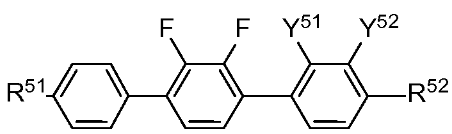

V-2f

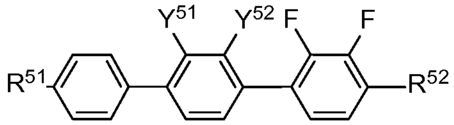

V-2g

where in each case the compounds of the formula V-2a are excluded from the compounds of the formulae V-2b and V-2c, the compounds of the formula V-2b are excluded from the compounds of the formula V-2c and the compounds of the formula V-2e are excluded from the compounds of the formula V-2f, and in which the parameters have the respective meanings indicated above for formula V-1 and in which

$Y^{51}$ and $Y^{52}$, in each case independently of one another, denote H or F, and preferably

$Y^{51}$ and $Y^{52}$ denotes H and the other denotes H or F, preferably likewise denotes H.

The compounds of the formula V-3 are preferably compounds of the formula V-3a:

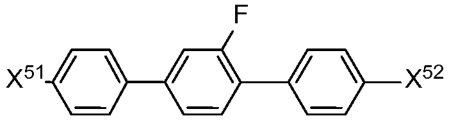

V-3a

in which the parameters have the respective meanings indicated above for formula V-1 and in which preferably

$X^{51}$ denotes F, Cl, preferably F,
$X^{52}$ denotes F, Cl or $-OCF_3$, preferably $-OCF_3$.

The compounds of the formula V-1a are preferably selected from the group of the compounds of the formulae V-1a-1 and V-1a-2, more preferably these compounds of the formula V predominantly consist, even more preferably essentially consist and very particularly preferably completely consist thereof:

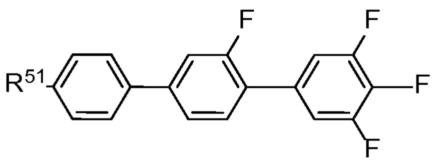

V-1a-1

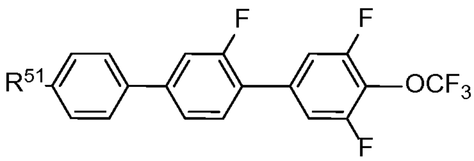

V-1a-2

in which

$R^{51}$ has the meaning indicated above and preferably denotes $C_nH_{2n+1}$, in which

n denotes an integer in the range from 0 to 7, preferably in the range from 1 to 5 and particularly preferably 3 or 7.

The compounds of the formula V-1b are preferably compounds of the formula V-1b-1:

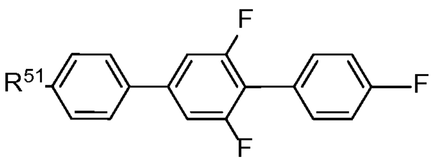

V-1b-1

in which

$R^{51}$ has the meaning indicated above and preferably denotes $C_nH_{2n+1}$, in which
n denotes an integer in the range from 0 to 15, preferably in the range from 1 to 7 and particularly preferably 1 to 5.

The compounds of the formula V-1c are preferably selected from the group of the compounds of the formulae V-1c-1 to V-1c-4, particularly preferably selected from the group of the compounds of the formulae V-1c-1 and V-1c-2:

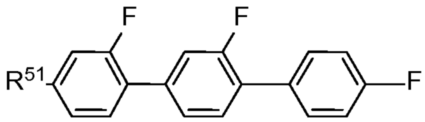

V-1c-1

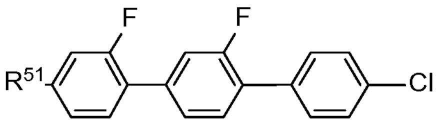

V-1c-2

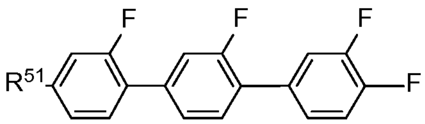

V-1c-3

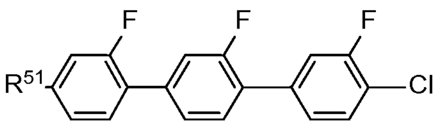

V-1c-4

in which

$R^{51}$ has the meaning indicated above and preferably denotes $C_nH_{2n+1}$, in which

n denotes an integer in the range from 0 to 15, preferably in the range from 1 to 7 and particularly preferably 1 to 5.

The compounds of the formula V-1d are preferably selected from the group of the compounds of the formulae V-1d-1 and V-1d-2, particularly preferably the compound of the formula V-1d-2:

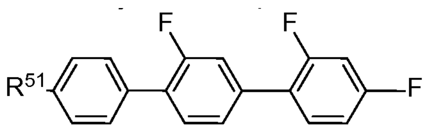

V-1d-1

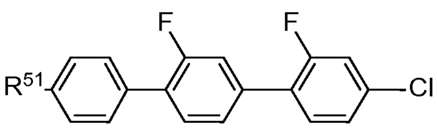

V-1d-2

in which

$R^{51}$ has the meaning indicated above and preferably denotes $C_nH_{2n+1}$, in which

n denotes an integer in the range from 0 to 15, preferably in the range from 1 to 7 and particularly preferably 1 to 5.

The compounds of the formula V-2a are preferably selected from the group of the compounds of the formulae V-2a-1 and V-2a-2, particularly preferably the compounds of the formula V-2a-1:

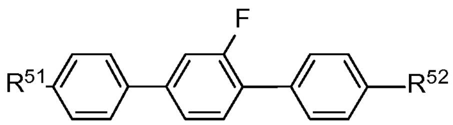

V-2a-1

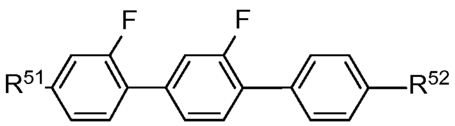

V-2a-2

in which

$R^{51}$ has the meaning indicated above and preferably denotes $C_nH_{2n+1}$ or $CH_2{=}CH{-}(CH_2)_Z$, and

$R^{52}$ has the meaning indicated above and preferably denotes $C_mH_{2m+1}$ or $O{-}C_mH_{2m+1}$ or $(CH_2)_Z{-}CH{=}CH_2$, and in which

n and m, independently of one another, denote an integer in the range from 0 to 15, preferably in the range from 1 to 7 and particularly preferably 1 to 5, and

z denotes 0, 1, 2, 3 or 4, preferably 0 or 2.

Preferred combinations of ($R^{51}$ and $R^{52}$), in particular in the case of formula V-2a-1, are ($C_nH_{2n+1}$ and $C_mH_{2m+1}$), ($C_nH_{2n+1}$ and $O{-}C_mH_{2m+1}$), ($CH_2{=}CH{-}(CH_2)_Z$ and $C_mH_{2m+1}$), ($CH_2{=}CH{-}(CH_2)_Z$ and $O{-}C_mH_{2m+1}$) and ($C_nH_{2n+1}$ and $(CH_2)_Z{-}CH{=}CH_2$).

Preferred compounds of the formula V-2b are the compounds of the formula V-2b-1:

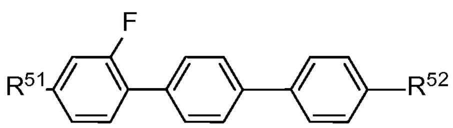

V-2b-1

in which

$R^{51}$ has the meaning indicated above and preferably denotes $C_nH_{2n+1}$ or $CH_2{=}CH{-}(CH_2)_Z$, and

$R^{52}$ has the meaning indicated above and preferably denotes $C_mH_{2m+1}$ or $O{-}C_mH_{2m+1}$ or $(CH_2)_Z{-}CH{=}CH_2$, and in which

n and m, independently of one another, denote an integer in the range from 0 to 15, preferably in the range from 1 to 7 and particularly preferably 1 to 5, and

z denotes 0, 1, 2, 3 or 4, preferably 0 or 2.

The preferred combination of ($R^{51}$ and $R^{52}$) here is, in particular, ($C_nH_{2n+1}$ and $C_mH_{2m+1}$).

Preferred compounds of the formula V-2c are the compounds of the formula V-2c-1:

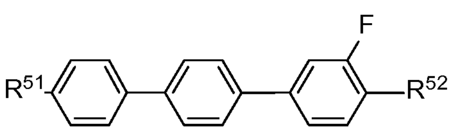

V-2c-1

in which

$R^{51}$ has the meaning indicated above and preferably denotes $C_nH_{2n+1}$ or $CH_2$=CH-$(CH_2)_Z$, and

$R^{52}$ has the meaning indicated above and preferably denotes $C_mH_{2m+1}$ or O-$C_mH_{2m+1}$ or $(CH_2)_Z$-CH=$CH_2$, and in which

n and m, independently of one another, denote an integer in the range from 0 to 15, preferably in the range from 1 to 7 and particularly preferably 1 to 5, and

z denotes 0, 1, 2, 3 or 4, preferably 0 or 2.

The preferred combination of ($R^{51}$ and $R^{52}$) here is, in particular, ($C_nH_{2n+1}$ and $C_mH_{2m+1}$).

Preferred compounds of the formula V-2d are the compounds of the formula V-2d-1:

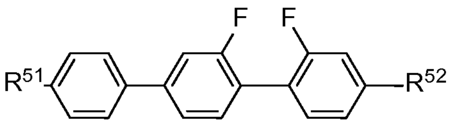

V-2d-1

in which

$R^{51}$ has the meaning indicated above and preferably denotes $C_nH_{2n+1}$ or $CH_2$=CH-$(CH_2)_Z$, and

$R^{52}$ has the meaning indicated above and preferably denotes $C_mH_{2m+1}$ or O-$C_mH_{2m+1}$ or $(CH_2)_Z$-CH=$CH_2$, and in which

n and m, independently of one another, denote an integer in the range from 0 to 15, preferably in the range from 1 to 7 and particularly preferably 1 to 5, and

z denotes 0, 1, 2, 3 or 4, preferably 0 or 2.

The preferred combination of ($R^{51}$ and $R^{52}$) here is, in particular, ($C_nH_{2n+1}$ and $C_mH_{2m+1}$).

Preferred compounds of the formula V-2e are the compounds of the formula V-2e-1:

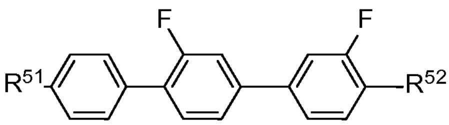

V-2e-1

in which

$R^{51}$ has the meaning indicated above and preferably denotes $C_nH_{2n+1}$ or $CH_2$=CH-$(CH_2)_Z$, and

$R^{52}$ has the meaning indicated above and preferably denotes $C_mH_{2m+1}$ or O-$C_mH_{2m+1}$ or $(CH_2)_Z$-CH=$CH_2$, and in which

n and m, independently of one another, denote an integer in the range from 0 to 15, preferably in the range from 1 to 7 and particularly preferably 1 to 5, and

z denotes 0, 1, 2, 3 or 4, preferably 0 or 2.

The preferred combination of ($R^{51}$ and $R^{52}$) here is, in particular, ($C_nH_{2n+1}$ and O-$C_mH_{2m+1}$).

Preferred compounds of the formula V-2f are the compounds of the formula V-2f-1:

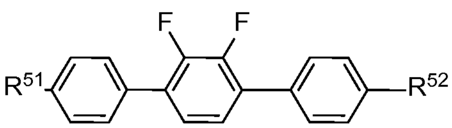

V-2f-1

in which

$R^{51}$ has the meaning indicated above and preferably denotes $C_nH_{2n+1}$ or $CH_2=CH-(CH_2)_Z$, and

$R^{52}$ has the meaning indicated above and preferably denotes $C_mH_{2m+1}$ or $O-C_mH_{2m+1}$ or $(CH_2)_Z-CH=CH_2$, and in which

n and m, independently of one another, denote an integer in the range from 0 to 15, preferably in the range from 1 to 7 and particularly preferably 1 to 5, and

z denotes 0, 1, 2, 3 or 4, preferably 0 or 2.

The preferred combinations of ($R^{51}$ and $R^{52}$) here are, in particular, ($C_nH_{2n+1}$ and $C_mH_{2m+1}$) and ($C_nH_{2n+1}$ and $O-C_mH_{2m+1}$), particularly preferably ($C_nH_{2n+1}$ and $C_mH_{2m+1}$).

Preferred compounds of the formula V-2g are the compounds of the formula V-2g-1:

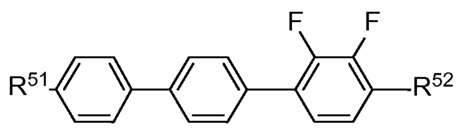

V-2g-1

in which

$R^{51}$ has the meaning indicated above and preferably denotes $C_nH_{2n+1}$ or $CH_2=CH-(CH_2)_Z$, and

$R^{52}$ has the meaning indicated above and preferably denotes $C_mH_{2m+1}$ or $O-C_mH_{2m+1}$ or $(CH_2)_Z-CH=CH_2$, and in which

n and m, independently of one another, denote an integer in the range from 0 to 15, preferably in the range from 1 to 7 and particularly preferably 1 to 5, and

z denotes 0, 1, 2, 3 or 4, preferably 0 or 2.

The preferred combinations of ($R^{51}$ and $R^{52}$) here are, in particular, ($C_nH_{2n+1}$ and $C_mH_{2m+1}$) and ($C_nH_{2n+1}$ and $O-C_mH_{2m+1}$), particularly preferably ($C_nH_{2n+1}$ and $O-C_mH_{2m+1}$).

The compounds of the formula VI are preferably selected from the group of the compounds of the formulae VI-1 to VI-5:

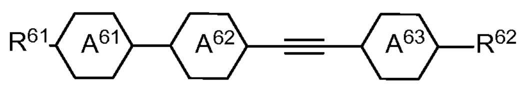

VI-1

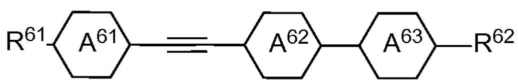

VI-2

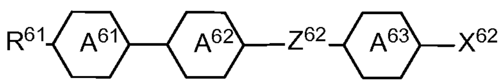

VI-3

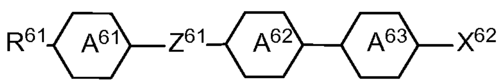

VI-4

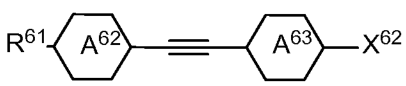

VI-5

in which

$Z^{61}$ and $Z^{62}$ denote -C≡C-, *trans*-CH=CH- or *trans*-CF=CF-, preferably -C≡C-or trans-CH=CH-, and the other occurring groups and parameters have the meaning given above under formula VI,

and preferably

$R^{61}$ and $R^{62}$, independently of one another, denote H, unfluorinated alkyl or alkoxy having 1 to 7 C atoms or unfluorinated alkenyl having 2 to 7 C atoms,

$X^{62}$ denotes F, Cl, $-OCF_3$ or -CN.

The compounds of the formula VI-1 are preferably selected from the group of the compounds of the formulae VI-1a and VI-1b, more preferably selected from compounds of the formula VI-1a:

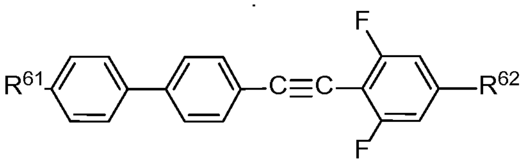

VI-1a

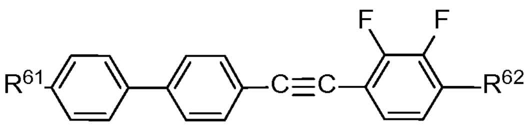

VI-1b

in which

$R^{61}$ has the meaning indicated above and preferably denotes $C_nH_{2n+1}$ or $CH_2=CH-(CH_2)_Z$, and

$R^{62}$ has the meaning indicated above and preferably denotes $C_mH_{2m+1}$ or $O-C_mH_{2m+1}$ or $(CH_2)_Z-CH=CH_2$, and in which

n and m, independently of one another, denote an integer in the range from 0 to 15, preferably in the range from 1 to 7 and particularly preferably 1 to 5, and

z denotes 0, 1, 2, 3 or 4, preferably 0 or 2.

The preferred combinations of ($R^{61}$ and $R^{62}$) here are, in particular, ($C_nH_{2n+1}$ and $C_mH_{2m+1}$) and ($C_nH_{2n+1}$ and $O-C_mH_{2m+1}$), in the case of formula VI-1a particularly preferably ($C_nH_{2n+1}$ and $C_mH_{2m+1}$) and in the case of formula VI-1b particularly preferably ($C_nH_{2n+1}$ and $O-C_mH_{2m+1}$).

The compounds of the formula VI-3 are preferably selected from the compounds of the formula VI-3a to VI-3c:

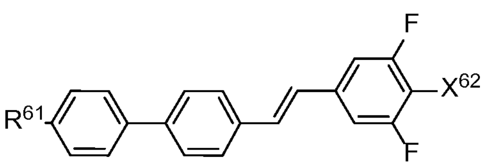

VI-3a

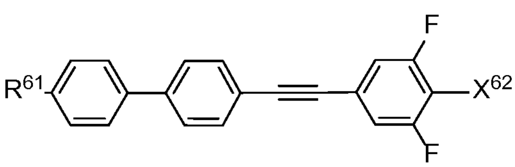

VI-3b

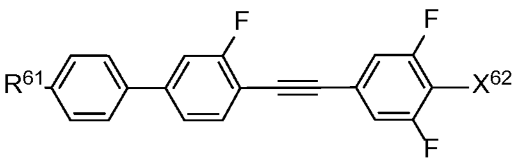

VI-3c

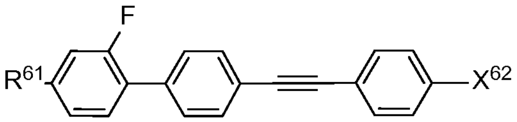

VI-3d

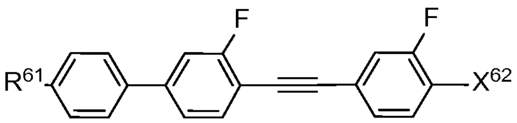

VI-3e

in which the parameters have the meaning given above under formula VI-3 and preferably

$R^{61}$ has the meaning indicated above and preferably denotes $C_nH_{2n+1}$, in which

n denotes an integer in the range from 0 to 7, preferably in the range from 1 to 5, and

$X^{62}$ denotes -F, -Cl, $-OCF_3$, or -CN.

The compounds of the formula VI-4 are preferably selected from compounds of the formulae VI-4a to VI-4e:

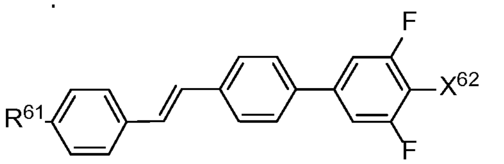

VI-4a

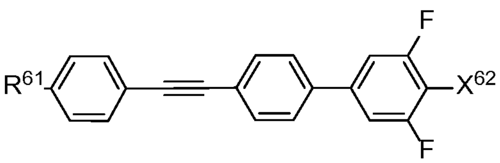

VI-4b

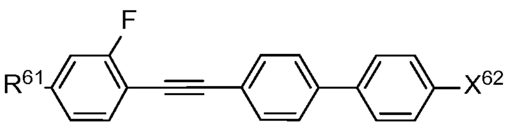

VI-4c

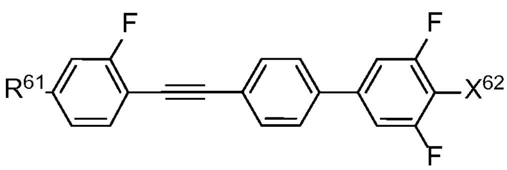

VI-4d

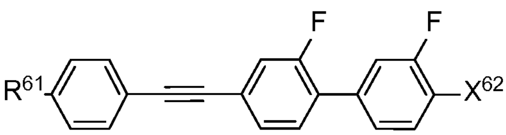

VI-4e

in which the parameters have the meaning given above under formula VI-4 and preferably

$R^{61}$ has the meaning indicated above and preferably denotes $C_nH_{2n+1}$, in which

n denotes an integer in the range from 0 to 7, preferably in the range from 1 to 5, and

$X^{62}$ denotes F, Cl, $OCF_3$, or -CN.

The compounds of the formula VI-5 are preferably selected from the compounds of the formula VI-5b:

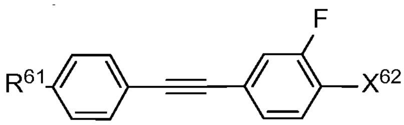

VI-5a

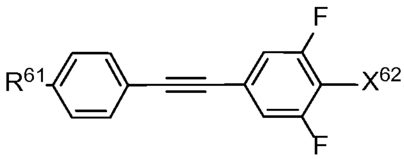

VI-5b

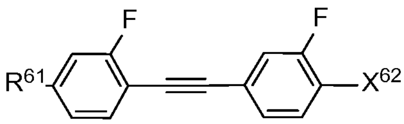

VI-5c

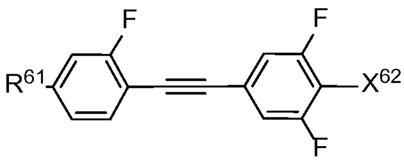

VI-5d

in which the parameters have the meaning given above under formula VI-5 and preferably

$R^{61}$ has the meaning indicated above and preferably denotes $C_nH_{2n+1}$, in which

n denotes an integer in the range from 0 to 7, preferably in the range from 1 to 5, and

$X^{62}$ denotes -F, -Cl, -$OCF_3$, or -CN, particularly preferably-$OCF_3$.

The compounds of the formula VII are preferably selected from the group of the compounds of the formulae VII-1 to VII-6:

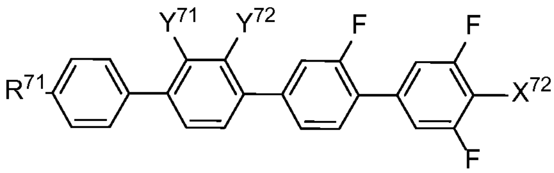

VII-1

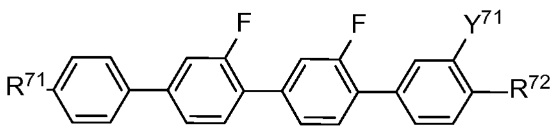

VII-2

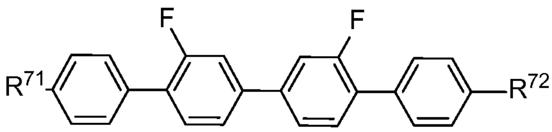

VII-3

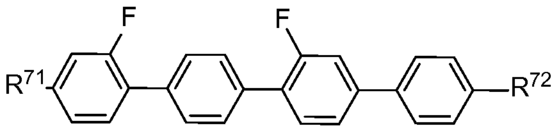

VII-4

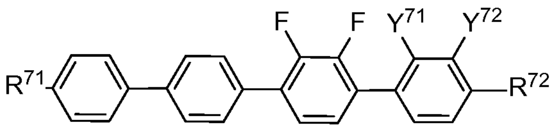

VII-5

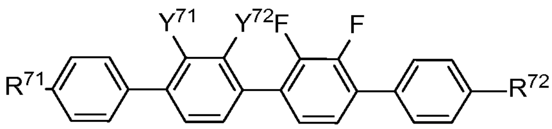

VII-6

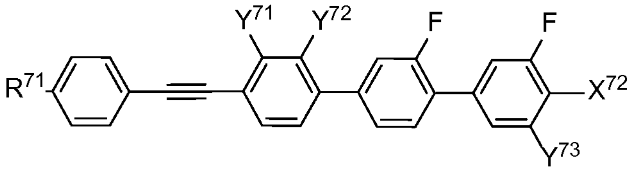

VII-7

where the compounds of the formula VII-5 are excluded from the compounds of the formula VII-6, and in which the parameters have the respective meanings indicated above for formula VII,

$Y^{71}$, $Y^{72}$, $Y^{73}$ independently from one another, denote H or F,

and preferably

$R^{71}$ denotes unfluorinated alkyl or alkoxy, each having 1 to 7 C atoms, or unfluorinated alkenyl having 2 to 7 C atoms,
$R^{72}$ denotes unfluorinated alkyl or alkoxy, each having 1 to 7 C atoms, or unfluorinated alkenyl having 2 to 7 C atoms,
$X^{72}$ denotes F, Cl; NCS or $-OCF_3$, preferably F or NCS, and

particularly preferably

$R^{71}$ has the meaning indicated above and preferably denotes $C_nH_{2n+1}$ or $CH_2=CH-(CH_2)_z$, and
$R^{72}$ has the meaning indicated above and preferably denotes $C_mH_{2m+1}$ or $O-C_mH_{2m+1}$ or $(CH_2)_z-CH=CH_2$, and in which
n and m, independently of one another, denote an integer in the range from 0 to 15, preferably in the range from 1 to 7 and particularly preferably 1 to 5, and
z denotes 0, 1, 2, 3 or 4, preferably 0 or 2.

The compounds of the formula VII-1 are preferably selected from the group of the compounds of the formulae VII-1 a to VII-1d:

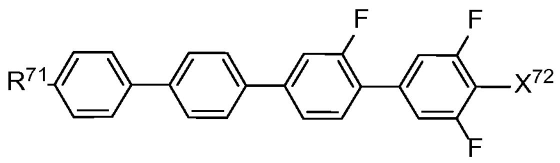

VII-1a

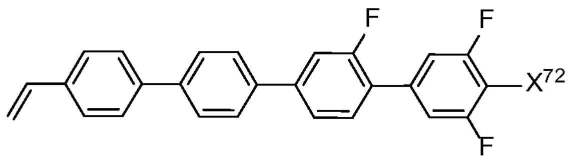

VII-1b

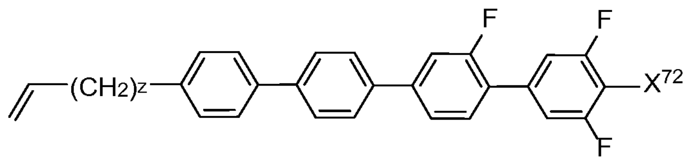

VII-1c

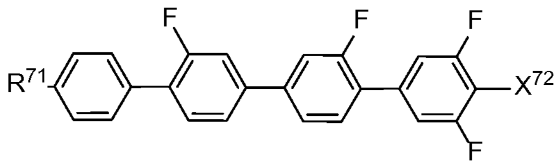

VII-1d

in which $X^{72}$ has the meaning given above for formula VII-2 and

$R^{71}$ has the meaning indicated above and preferably denotes $C_nH_{2n+1}$, in which

n denotes 1 to 7, preferably 2 to 6, particularly preferably 2, 3 or 5, and

z denotes 0, 1, 2, 3 or 4, preferably 0 or 2, and

$X^{72}$ preferably denotes F.

The compounds of the formula VII-2 are preferably selected from the group of the compounds of the formulae VII-2a and VII-2b, particularly preferably of the formula VII-2a:

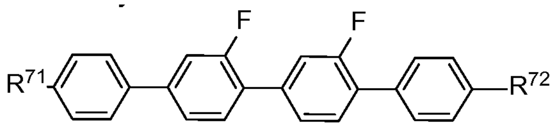

VII-2a

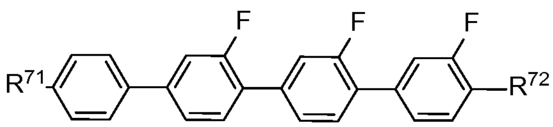

VII-2b

in which

$R^{71}$ has the meaning indicated above and preferably denotes $C_nH_{2n+1}$ or $CH_2$=CH-$(CH_2)_z$, and

$R^{72}$ has the meaning indicated above and preferably denotes $C_mH_{2m+1}$ or O-$C_mH_{2m+1}$ or $(CH_2)_z$-CH=$CH_2$, and in which

n and m, independently of one another, denote an integer in the range from 0 to 15, preferably in the range from 1 to 7 and particularly preferably 1 to 5, and

z denotes 0, 1, 2, 3 or 4, preferably 0 or 2.

The preferred combinations of ($R^{71}$ and $R^{72}$) here are, in particular, ($C_nH_{2n+1}$ and $C_mH_{2m+1}$) and ($C_nH_{2n+1}$ and $O\text{-}C_mH_{2m+1}$), particularly preferably ($C_nH_{2n+1}$ and $C_mH_{2m+1}$).
The compounds of the formula VII-3 are preferably compounds of the formula VII-3a:

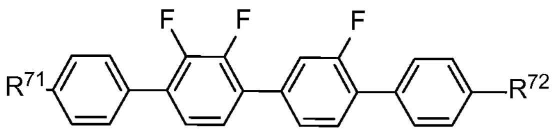

VII-3a

in which

$R^{71}$ has the meaning indicated above and preferably denotes $C_nH_{2n+1}$ or $CH_2\text{=}CH\text{-}(CH_2)_z$, and

$R^{72}$ has the meaning indicated above and preferably denotes $C_mH_{2m+1}$ or $O\text{-}C_mH_{2m+1}$ or $(CH_2)_z\text{-}CH\text{=}CH_2$, and in which

n and m, independently of one another, denote an integer in the range from 0 to 15, preferably in the range from 1 to 7 and particularly preferably 1 to 5, and

z denotes 0, 1, 2, 3 or 4, preferably 0 or 2.

The preferred combinations of ($R^{71}$ and $R^{72}$) here are, in particular, ($C_nH_{2n+1}$ and $C_mH_{2m+1}$) and ($C_nH_{2n+1}$ and $O\text{-}C_mH_{2m+1}$), particularly preferably ($C_nH_{2n+1}$ and $C_mH_{2m+1}$).
The compounds of the formula VII-4 are preferably compounds of the formula VII-4a:

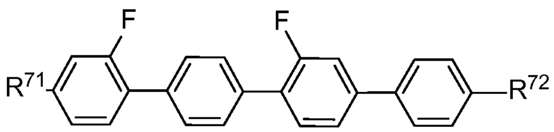

VII-4a

in which

$R^{71}$ has the meaning indicated above and preferably denotes $C_nH_{2n+1}$ or $CH_2\text{=}CH\text{-}(CH_2)_z$, and

$R^{72}$ has the meaning indicated above and preferably denotes $C_mH_{2m+1}$ or $O\text{-}C_mH_{2m+1}$ or $(CH_2)_z\text{-}CH\text{=}CH_2$, and in which

n and m, independently of one another, denote an integer in the range from 0 to 15, preferably in the range from 1 to 7 and particularly preferably 1 to 5, and

z denotes 0, 1, 2, 3 or 4, preferably 0 or 2.

The preferred combinations of ($R^{71}$ and $R^{72}$) here are, in particular, ($C_nH_{2n+1}$ and $C_mH_{2m+1}$) and ($C_nH_{2n+1}$ and $O\text{-}C_mH_{2m+1}$), particularly preferably ($C_nH_{2n+1}$ and $C_mH_{2m+1}$).
The compounds of the formula VII-5 are preferably selected from the group of the compounds of the formulae VII-5a and VII-5b, more preferably of the formula VII-5a:

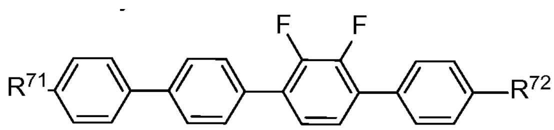

VII-5a

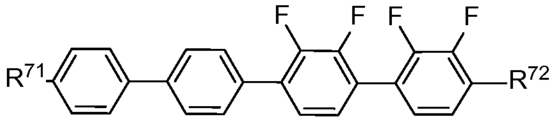

VII-5b

in which

$R^{71}$ has the meaning indicated above and preferably denotes $C_nH_{2n+1}$ or $CH_2$=CH-$(CH_2)_z$, and

$R^{72}$ has the meaning indicated above and preferably denotes $C_mH_{2m+1}$ or O-$C_mH_{2m+1}$ or $(CH_2)_z$-CH=$CH_2$, and in which

n and m, independently of one another, denote an integer in the range from 0 to 15, preferably in the range from 1 to 7 and particularly preferably 1 to 5, and

z denotes 0, 1, 2, 3 or 4, preferably 0 or 2.

The preferred combinations of ($R^{71}$ and $R^{72}$) here are, in particular, ($C_nH_{2n+1}$ and $C_mH_{2m+1}$) and ($C_nH_{2n+1}$ and O-$C_mH_{2m+1}$), particularly preferably ($C_nH_{2n+1}$ and $C_mH_{2m+1}$).

The compounds of the formula VII-6 are preferably selected from the group of the compounds of the formulae VII-6a and VII-6b:

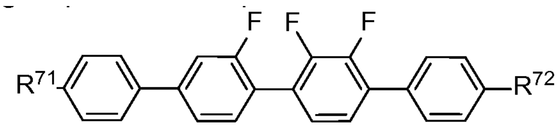

VII-6a

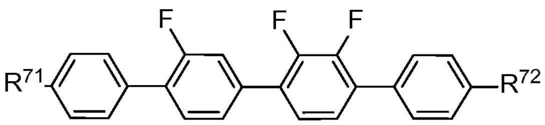

VII-6b

in which

$R^{71}$ has the meaning indicated above and preferably denotes $C_nH_{2n+1}$ or $CH_2$=CH-$(CH_2)_z$, and

$R^{72}$ has the meaning indicated above and preferably denotes $C_mH_{2m+1}$ or O-$C_mH_{2m+1}$ or $(CH_2)_z$-CH=$CH_2$, and in which

n and m, independently of one another, denote an integer in the range from 0 to 15, preferably in the range from 1 to 7 and particularly preferably 1 to 5, and

z denotes 0, 1, 2, 3 or 4, preferably 0 or 2.

The preferred combinations of ($R^{71}$ and $R^{72}$) here are, in particular, ($C_nH_{2n+1}$ and $C_mH_{2m+1}$) and ($C_nH_{2n+1}$ and O-$C_mH_{2m+1}$), particularly preferably ($C_nH_{2n+1}$ and $C_mH_{2m+1}$).

The compounds of the formula VII-7 are preferably selected from the group of the compounds of the formulae VII-7a and VII-7b:

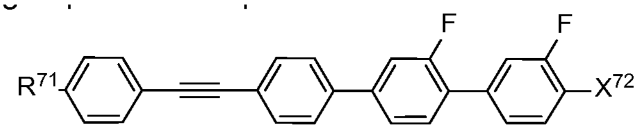

VII-7a

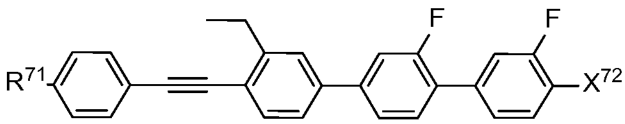

VII-7a

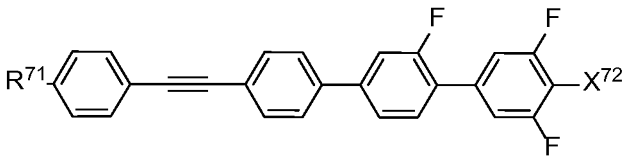

VII-7b

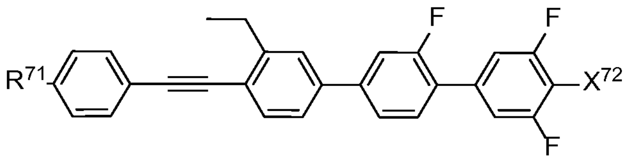

VII-7b

in which

$R^{71}$ has the meaning indicated above and preferably denotes $C_nH_{2n+1}$ or $CH_2$=CH-$(CH_2)_z$,

$X^{72}$ denotes F, -$OCF_3$ or -NCS,

n denotes an integer in the range from 0 to 15, preferably in the range from 1 to 7 and particularly preferably 1 to 5, and,

z denotes 0, 1, 2, 3 or 4, preferably 0 or 2.

The compounds of the formula VIII are preferably selected from the group of the compounds of the formulae VIII-1 to VIII-3, more preferably these compounds of the formula VIII predominantly consist, even more preferably essentially consist and very particularly preferably completely consist thereof:

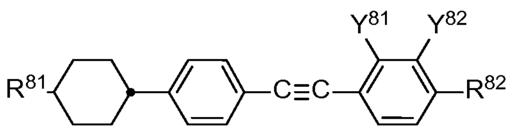

VIII-1

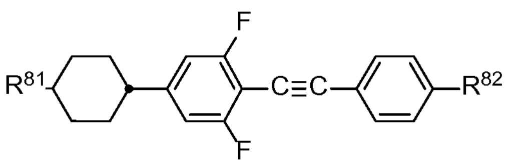

VIII-2

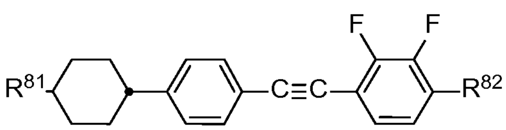

VIII-3

in which
one of

$Y^{81}$ and $Y^{82}$ denotes H and the other denotes H or F, and

$R^{81}$ has the meaning indicated above and preferably denotes $C_nH_{2n+1}$ or $CH_2$=CH-$(CH_2)_z$, and

$R^{82}$ has the meaning indicated above and preferably denotes $C_mH_{2m+1}$ or O-$C_mH_{2m+1}$ or $(CH_2)_z$-CH=$CH_2$,

and in which

n and m, independently of one another, denote an integer in the range from 0 to 15, preferably in the range from 1 to 7 and particularly preferably 1 to 5, and

z denotes 0, 1, 2, 3 or 4, preferably 0 or 2.

The preferred combinations of ($R^{81}$ and $R^{82}$) here are, in particular, ($C_nH_{2n+1}$ and $C_mH_{2m+1}$) and ($C_nH_{2n+1}$ and O-$C_mH_{2m+1}$), particularly preferably ($C_nH_{2n+1}$ and $C_mH_{2m+1}$).

The compounds of the formula VIII-1 are preferably selected from the group of the compounds of the formulae VIII-1 a to VIII-1 c:

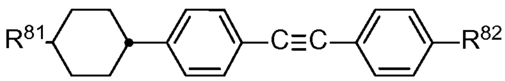

VIII-1a

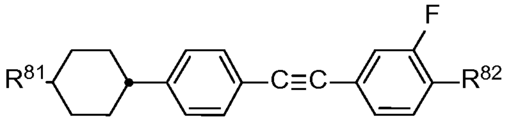

VIII-1b

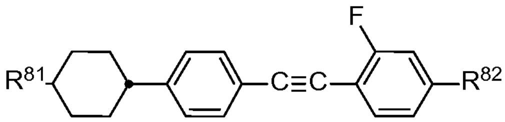

VIII-1c

in which

$R^{81}$ has the meaning indicated above and preferably denotes $C_nH_{2n+1}$ or $CH_2$=CH-$(CH_2)_z$, and

$R^{82}$ has the meaning indicated above and preferably denotes $C_mH_{2m+1}$ or O-$C_mH_{2m+1}$ or $(CH_2)_z$-CH=$CH_2$, and in which

n and m, independently of one another, denote an integer in the range from 0 to 15, preferably in the range from 1 to 7 and particularly preferably 1 to 5, and

z denotes 0, 1, 2, 3 or 4, preferably 0 or 2.

The preferred combinations of ($R^{81}$ and $R^{82}$) here are, in particular, ($C_nH_{2n+1}$ and $C_mH_{2m+1}$) and ($C_nH_{2n+1}$ and O-$C_mH_{2m+1}$), particularly preferably ($C_nH_{2n+1}$ and $C_mH_{2m+1}$).

The compounds of the formula VIII-2 are preferably compounds of the formula VIII-2a:

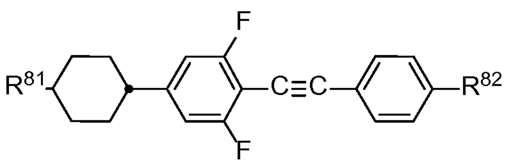

VIII-2a

in which

$R^{81}$ has the meaning indicated above and preferably denotes $C_nH_{2n+1}$ or $CH_2$=CH-$(CH_2)_z$, and

$R^{82}$ has the meaning indicated above and preferably denotes $C_mH_{2m+1}$ or O-$C_mH_{2m+1}$ or $(CH_2)_z$-CH=$CH_2$, and in which

n and m, independently of one another, denote an integer in the range from 0 to 15, preferably in the range from 1

to 7 and particularly preferably 1 to 5, and

z denotes 0, 1, 2, 3 or 4, preferably 0 or 2.

The preferred combinations of ($R^{81}$ and $R^{82}$) here are, in particular, ($C_nH_{2n+1}$ and $C_mH_{2m+1}$), ($C_nH_{2n+1}$ and O-$C_mH_{2m+1}$) and (CH2=CH-(CH2)z and $C_mH_{2m+1}$), particularly preferably ($C_nH_{2n+1}$ and $C_mH_{2m+1}$).

The compounds of the formula VIII-3 are preferably compounds of the formula VIII-3a:

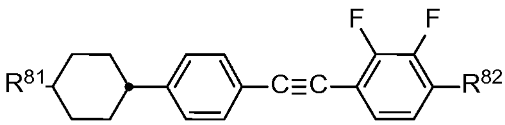

VIII-3a

in which

$R^{81}$ has the meaning indicated above and preferably denotes $C_nH_{2n+1}$ or $CH_2$=CH-$(CH_2)_z$, and

$R^{82}$ has the meaning indicated above and preferably denotes $C_mH_{2m+1}$ or O-$C_mH_{2m+1}$ or $(CH_2)_z$-CH=$CH_2$, and in which

n and m, independently of one another, denote an integer in the range from 0 to 15, preferably in the range from 1 to 7 and particularly preferably 1 to 5, and

z denotes 0, 1, 2, 3 or 4, preferably 0 or 2.

The preferred combinations of ($R^{81}$ and $R^{82}$) here are, in particular, ($C_nH_{2n+1}$ and $C_mH_{2m+1}$) and ($C_nH_{2n+1}$ and O-$C_mH_{2m+1}$).

The compounds of the formula IX are preferably selected from the group of the compounds of the formulae IX-1 to IX-3:

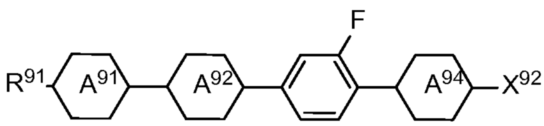

IX-1

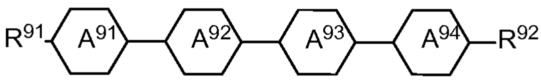

IX-2

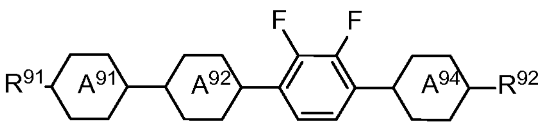

IX-3

in which the parameters have the respective meaning indicated above under formula IX and preferably one of

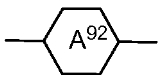

to

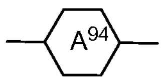

denotes

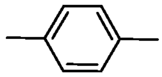, 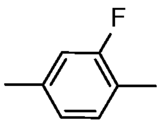, 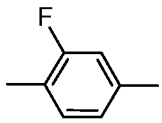,

and
in which

$R^{91}$ has the meaning indicated above and preferably denotes $C_nH_{2n+1}$ or $CH_2=CH-(CH_2)_z$, and

$R^{92}$ has the meaning indicated above and preferably denotes $C_mH_{2m+1}$ or $O-C_mH_{2m+1}$ or $(CH_2)_z-CH=CH_2$, and in which

n and m, independently of one another, denote an integer in the range from 0 to 15, preferably in the range from 1 to 7 and particularly preferably 1 to 5, and

z denotes 0, 1, 2, 3 or 4, preferably 0 or 2.

The preferred combinations of ($R^{91}$ and $R^{92}$) here are, in particular, ($C_nH_{2n+1}$ and $C_mH_{2m+1}$) and ($C_nH_{2n+1}$ and $O-C_mH_{2m+1}$).

The compounds of the formula IX-1 are preferably selected from the group of the compounds of the formulae IX-1 a to IX-1 e:

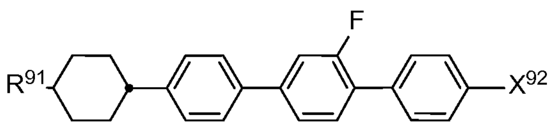

IX-1a

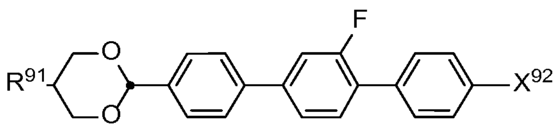

IX-1b

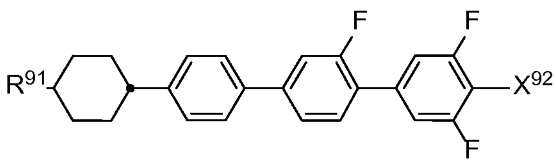

IX-1c

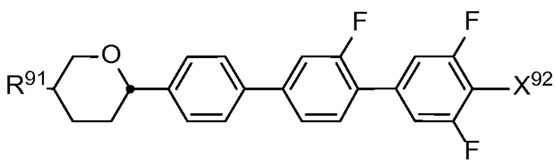

IX-1d

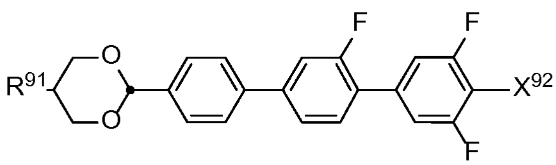

IX-1e

in which the parameters have the meaning given above and preferably

$R^{91}$ has the meaning indicated above and preferably denotes $C_nH_{2n+1}$, and

n denotes an integer in the range from 0 to 15, preferably in the range from 1 to 7 and particularly preferably 1 to 5, and

$X^{92}$ preferably denotes F or Cl.

The compounds of the formula IX-2 are preferably selected from the group of the compounds of the formulae IX-2a and IX-2b:

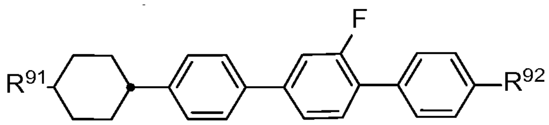

IX-2a

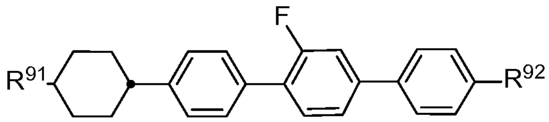

IX-2b

in which

$R^{91}$ has the meaning indicated above and preferably denotes $C_nH_{2n+1}$ or $CH_2=CH-(CH_2)_z$, and

$R^{92}$ has the meaning indicated above and preferably denotes $C_mH_{2m+1}$ or $O-C_mH_{2m+1}$ or $(CH_2)_z-CH=CH_2$, and in which

n and m, independently of one another, denote an integer in the range from 0 to 15, preferably in the range from 1 to 7 and particularly preferably 1 to 5, and

z denotes 0, 1, 2, 3 or 4, preferably 0 or 2.

The preferred combination of ($R^{91}$ and $R^{92}$) here is, in particular, ($C_nH_{2n+1}$ and $C_mH_{2m+1}$).

The compounds of the formula IX-3 are preferably compounds of the formulae IX-3a and IX-3b:

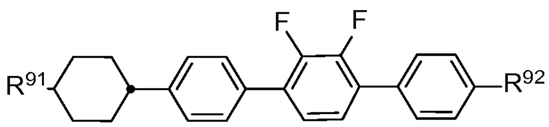

IX-3a

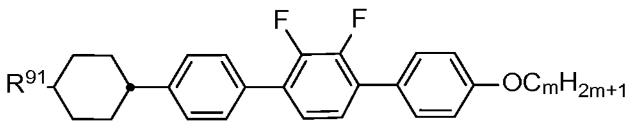

IX-3b

in which

$R^{91}$ has the meaning indicated above and preferably denotes $C_nH_{2n+1}$ or $CH_2=CH-(CH_2)_z$, and

$R^{92}$ has the meaning indicated above and preferably denotes $C_mH_{2m+1}$ or $O-C_mH_{2m+1}$ or $(CH_2)_z-CH=CH_2$, and in which

n and m, independently of one another, denote an integer in the range from 0 to 15, preferably in the range from 1 to 7 and particularly preferably 1 to 5, and

z denotes 0, 1, 2, 3 or 4, preferably 0 or 2.

The preferred combinations of ($R^{91}$ and $R^{92}$) here are, in particular, ($C_nH_{2n+1}$ and $C_mH_{2m+1}$) and ($C_nH_{2n+1}$ and $O-C_mH_{2m+1}$), particularly preferably ($C_nH_{2n+1}$ and $O-C_mH_{2m+1}$).

In a preferred embodiment of the present invention the medium comprises one or more compounds of formula X

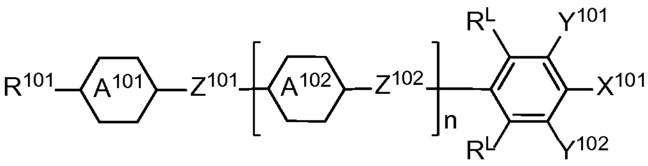

X

in which

R101 denotes H, alkyl or alkoxy having 1 to 15, preferably 3 to 10, C atoms or unfluorinated alkenyl, unfluorinated alkenyloxy or unfluorinated alkoxyalkyl having 2 to 15, preferably 3 to 10, C atoms, preferably alkyl or alkenyl,

X101 denotes H, F, Cl, -CN, $SF_5$, NCS, fluorinated alkyl or fluorinated alkoxy having 1 to 7 C atoms or fluorinated alkenyl, fluorinated alkenyloxy or fluorinated alkoxyalkyl having 2 to 7 C atoms, preferably fluorinated alkoxy, fluorinated alkenyloxy, F, Cl or NCS, particularly preferably NCS,

Y101 denotes methyl, ethyl or Cl,

Y102 denotes H, methyl, ethyl, F or Cl, preferably H or F,

Z101, Z102 identically or differently, denote a single bond, -CH=CH-, -CF=CF- or -C≡C-,

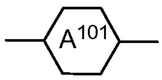

and,

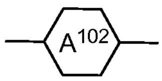

independently of one another, denote

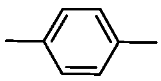
,
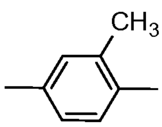
,
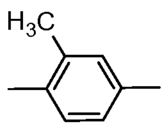
,
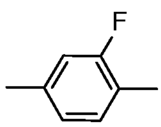
,
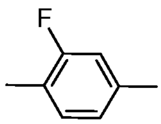
,

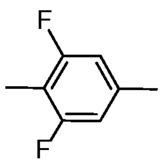
,
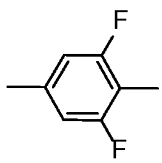
,
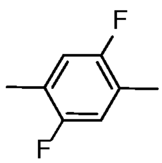

or

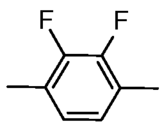
,

preferably

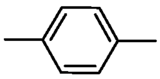, 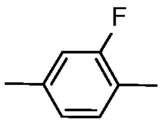, 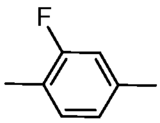,

or

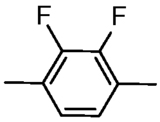,

and where

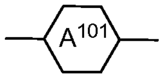

alternatively denotes

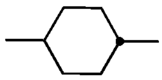,

and

n is 0 or 1.

Preferably, the compounds of formula X are selected from the sub-formulae X-1 and X-2 X-1

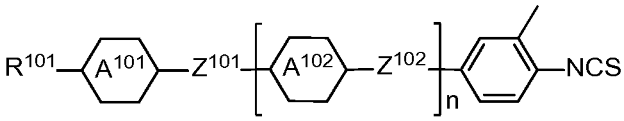

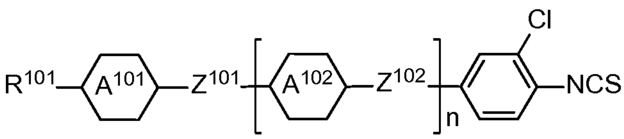

X-2

in which the occurring groups and parameters have the meanings given above for formula X.

Particularly preferably, the media according to the invention comprise one or more compounds selected from the group of compounds of the formulae X-1-1 to X-1-9

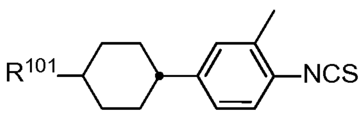

X-1-1

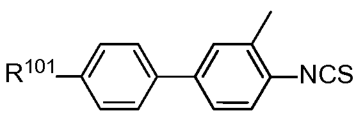

X-1-2

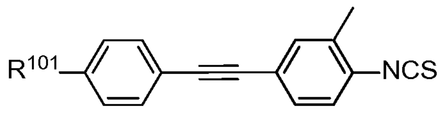

X-1-3

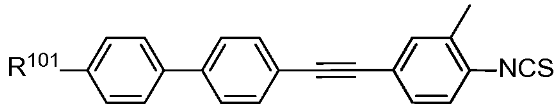

X-1-4

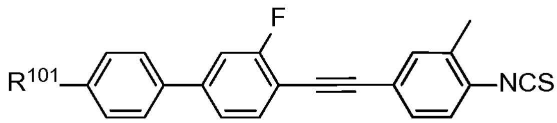

X-1-5

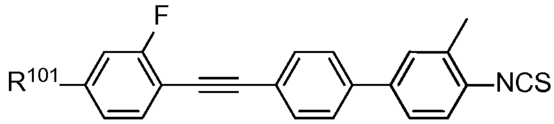

X-1-6

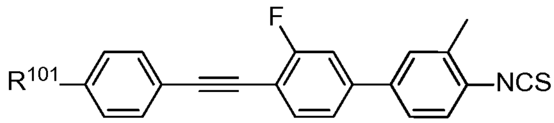

X-1-7

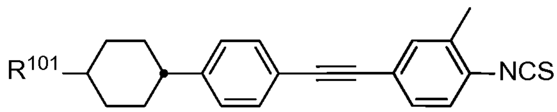

X-1-8

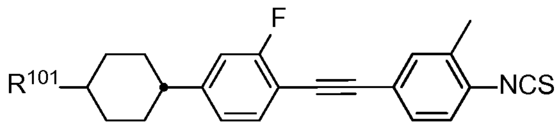

X-1-9

The media according to the present invention comprise one or more chiral dopants. Preferably these chiral dopants have an absolute value of the helical twisting power (HTP) in the range of from 1 $\mu m^{-1}$ to 150 $\mu m^{-1}$, preferably in the range of from 10 $\mu m^{-1}$ to 100 $\mu m^{-1}$. In case the media comprise two or more chiral dopants, these may have opposite signs of their HTP-values. This condition is preferred for some specific embodiments, as it allows to compensate the chirality of the respective compounds to some degree and, thus, may be used to compensate various temperature dependent properties of the resulting media in the devices. Generally, however, it is preferred that most, preferably all of the chiral compounds present in the media according to the present invention have the same sign of their HTP-values. Preferably the chiral dopants present in the media according to the instant application are mesogenic compounds and most preferably they exhibit a mesophase on their own.

In a preferred embodiment of the present invention, the medium comprises two or more chiral compounds which all have the same algebraic sign of the HTP.

The temperature dependence of the HTP of the individual compounds may be high or low. The temperature dependence of the pitch of the medium can be compensated by mixing compounds having different temperature dependencies of the HTP in corresponding ratios.

For the optically active component, a multitude of chiral dopants, some of which are commercially available, is available to the person skilled in the art, such as, for example, cholesteryl nonanoate, R- and S-811, R- and S-1011, R- and S-2011, R- and S-3011, R- and S-4011, or CB15 (all Merck KGaA, Darmstadt).

Particularly suitable dopants are compounds which contain one or more chiral groups and one or more mesogenic groups, or one or more aromatic or alicyclic groups which form a mesogenic group with the chiral group.

Suitable chiral groups are, for example, chiral branched hydrocarbon radicals, chiral ethane diols, binaphthols or dioxolanes, furthermore mono- or polyvalent chiral groups selected from the group consisting of sugar derivatives, sugar alcohols, sugar acids, lactic acids, chiral substituted glycols, steroid derivatives, terpene derivatives, amino acids or sequences of a few, preferably 1-5, amino acids.

Preferred chiral groups are sugar derivatives, such as glucose, mannose, galactose, fructose, arabinose and dextrose; sugar alcohols, such as, for example, sorbitol, mannitol, iditol, galactitol or anhydro derivatives thereof, in particular dianhydrohexitols, such as dianhydrosorbide (1,4:3,6-dianhydro-D-sorbide, isosorbide), dianhydromannitol (isosorbitol) or dianhydroiditol (isoiditol); sugar acids, such as, for example, gluconic acid, gulonic acid and ketogulonic acid; chiral substituted glycol radicals, such as, for example, mono- or oligoethylene or propylene glycols, in which one or more $CH_2$ groups are substituted by alkyl or alkoxy; amino acids, such as, for example, alanine, valine, phenylglycine or phenylalanine, or sequences of from 1 to 5 of these amino acids; steroid derivatives, such as, for example, cholesteryl or cholic acid radicals; terpene derivatives, such as, for example, menthyl, neomenthyl, campheyl, pineyl, terpineyl, isolongifolyl, fenchyl, carreyl, myrthenyl, nopyl, geraniyl, linaloyl, neryl, citronellyl or dihydrocitronellyl.

The media according to the present invention preferably comprise chiral dopants which are selected from the group of known chiral dopants. Suitable chiral groups and mesogenic chiral compounds are described, for example, in DE 34 25 503, DE 35 34 777, DE 35 34 778, DE 35 34 779 and DE 35 34 780, DE 43 42 280, EP 01 038 941 and DE 195 41 820. Examples are also compounds listed in Table F below.

Chiral compounds preferably used according to the present invention are selected from the group consisting of the formulae shown below.

Particular preference is given to chiral dopants selected from the group consisting of compounds of the following formulae A-I to A-III and A-Ch:

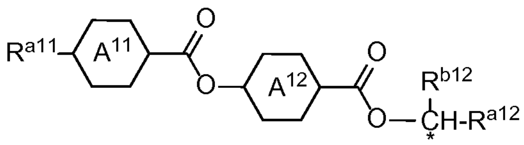

A-I

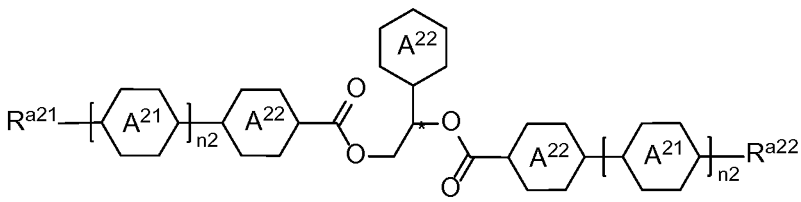

A-II

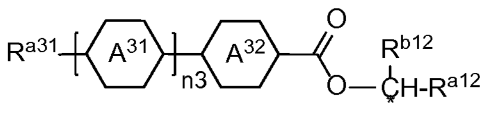

A-III

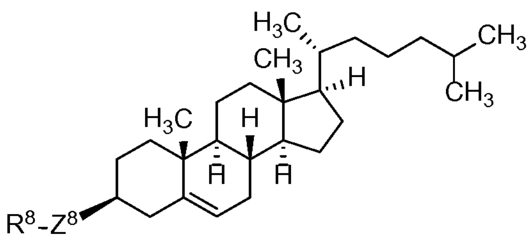

A-Ch

in which

| | |
|---|---|
| $R^{a11}$, $R^{a12}$ and $R^{b12}$, | independently of one another, denote alkyl having 1 to 15 C atoms, in which, in addition, one or more non-adjacent $CH_2$ groups may each be replaced, independently of one another, by -C($R^z$)=C($R^z$)-, -C≡C-, -O-, -S-, -CO-, -CO-O-, -O-CO- or -O-CO-O- in such a way that O and/or S atoms are not linked directly to one another, and in which, in addition, one or more H atoms may each be replaced by F, Cl, Br, I or CN, preferably alkyl, more preferably n-alkyl, with the proviso that $R^{a12}$ is different from $R^{b12}$ |
| $R^{a21}$ and $R^{a22}$, | independently of one another, denote alkyl having 1 to 15 C atoms, in which, in addition, one or more non-adjacent $CH_2$ groups may each be replaced, independently of one another, by -C($R^z$)=C($R^z$)-, -C≡C-, -O-, -S-, -CO-, -CO-O-, -O-CO- or-O-CO-O- in such a way that O and/or |

S atoms are not linked directly to one another, and in which, in addition, one or more H atoms may be replaced by F, Cl, Br, I or CN, preferably both are alkyl, more preferably n-alkyl,

$R^{a31}$, $R^{a31}$ and $R^{b32}$, independently of one another, denote straight-chain or branched alkyl having 1 to 15 C atoms, in which, in addition, one or more non-adjacent $CH_2$ groups may each be replaced, independently of one another, by $-C(R^z)=C(R^z)-$,$-C{\equiv}C-$, -O-, -S-, -CO-, -CO-O-, -O-CO- or -O-CO-O- in such a way that O and/or S atoms are not linked directly to one another, and in which, in addition, one or more H atoms may be replaced by F, Cl, Br, I or CN,
preferably alkyl, more preferably n-alkyl, with the proviso that $R^{a32}$ is different from $R^{b32}$;

$R^z$ denotes H, $CH_3$, F, Cl, or CN, preferably H or F,

$R^8$ has one of the meanings of $R^{a11}$ given above, preferably alkyl, more preferably n-alkyl having 1 to 15 C atoms,

$Z^8$ denotes- C(O)O-, $CH_2O$, $CF_2O$ or a single bond, preferably -C(O)O-,

$A^{11}$ is defined as $A^{12}$ below, or alternatively denotes

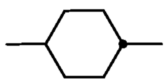, 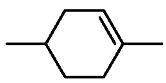, 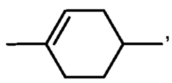,

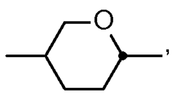, 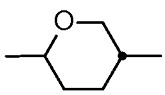,

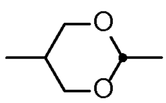 or 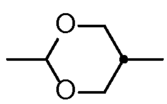

$A^{12}$ denotes

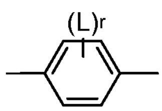,

preferably

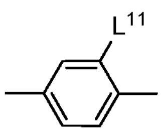, 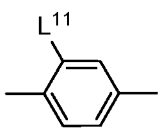, 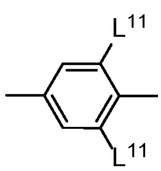, 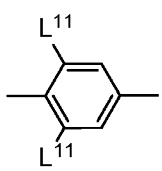

or

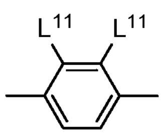,

in which L and $L^{11}$, on each occurrence, independently of one another, denotes halogen, CN,

or alkyl, alkenyl, alkoxy or alkenyloxy having up to 12 C atoms and in which one or more H atoms are optionally replaced with halogen, preferably methyl, ethyl, Cl or F, particularly preferably F.

$A^{21}$ denotes

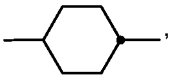, 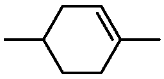, 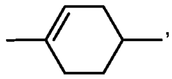,

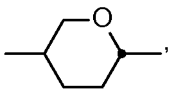, 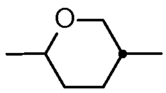,

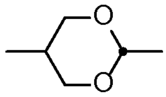 or 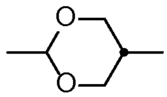

$A^{22}$ has the meanings given for $A^{12}$

$A^{31}$ has the meanings given for $A^{11}$, or alternatively denotes

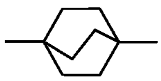

$A^{32}$ has the meanings given for $A^{12}$.

n2 on each occurrence, identically or differently, is 0, 1 or 2, and

n3 is 1, 2 or 3.

Particular preference is given to dopants selected from the group consisting of the compounds of the following formulae:

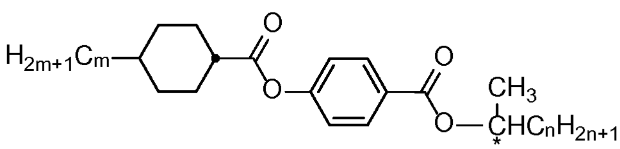

A-I-1

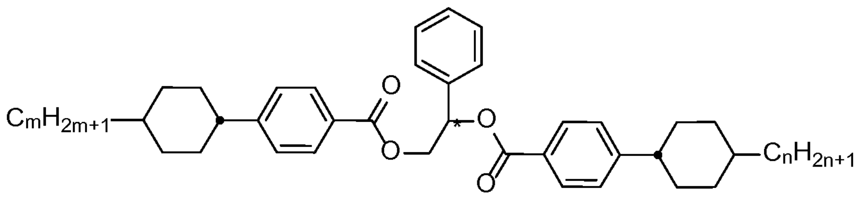

A-II-1

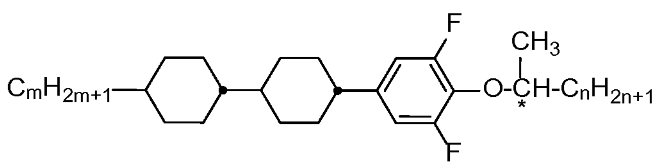

A-III-1

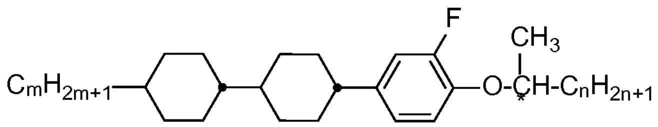

A-III-2

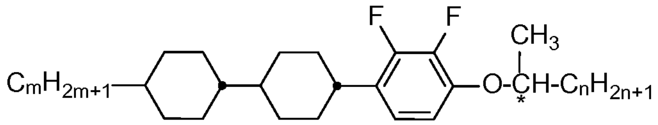

A-III-3

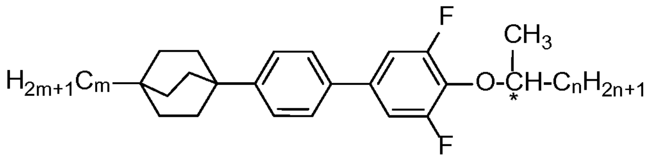

A-III-4

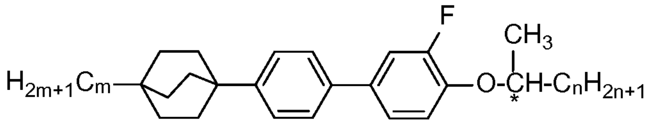

A-III-5

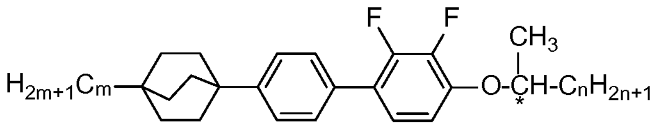

A-III-6

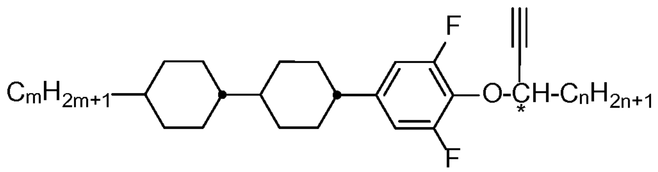

A-III-7

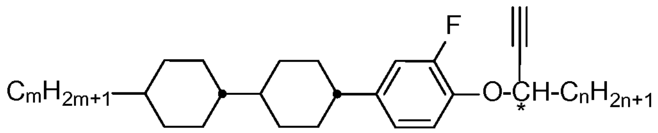

A-III-8

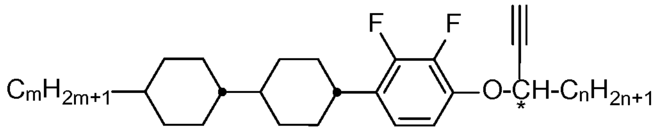

A-III-9

in which

m is, on each occurrence, identically or differently, an integer from 1 to 9 and
n is, on each occurrence, identically or differently, an integer from 2 to 9.

Particularly preferred compounds of formula A are compounds of formula A-III.

Further preferred dopants are derivatives of the isosorbide, isomannitol or isoiditol of the following formula A-IV:

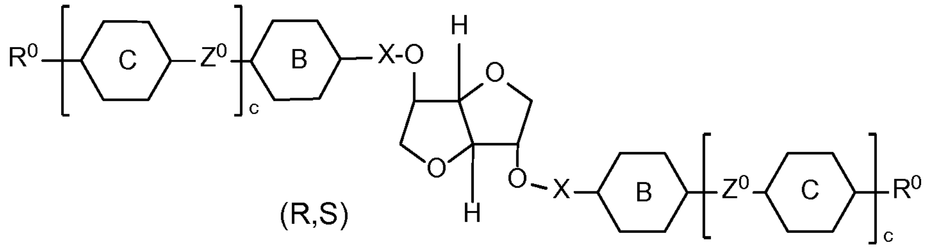

A-IV

in which the group

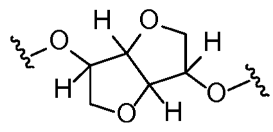

is

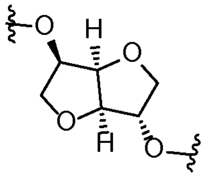

(dianhydrosorbitol),

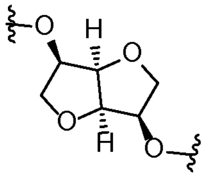

(dianhydromannitol), or

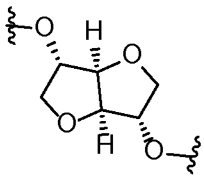

(dianhydroiditol),
preferably dianhydrosorbitol,
and chiral ethane diols, such as, for example, diphenylethanediol (hydrobenzoin), in particular mesogenic hydrobenzoin derivatives of the following formula A-V:

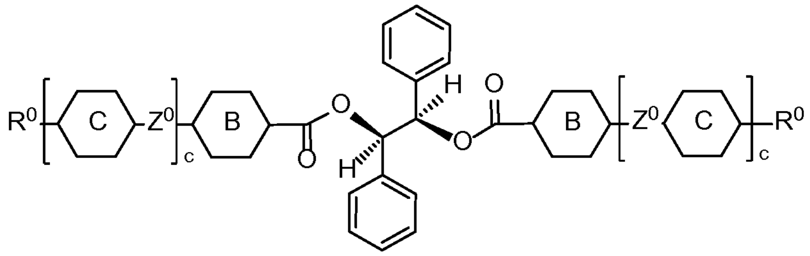

A-V

including the (S,S) enantiomers, which are not shown,
in which

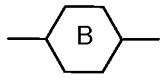

and

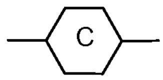

are each, independently of one another, 1,4-phenylene, which may also be mono-, di- or trisubstituted by L, or 1,4-cyclohexylene,

L is H, F, Cl, CN or optionally halogenated alkyl, alkoxy, alkylcarbonyl, alkoxycarbonyl or alkoxycarbonyloxy having 1-7 carbon atoms,

c is 0 or 1,

X is $CH_2$ or -C(O)-,

$Z^0$ is -COO-, -OCO-, $-CH_2CH_2-$ or a single bond, and

$R^0$ is alkyl, alkoxy, alkylcarbonyl, alkoxycarbonyl or alkylcarbonyloxy having 1-12 carbon atoms.

Examples of compounds of formula IV are:

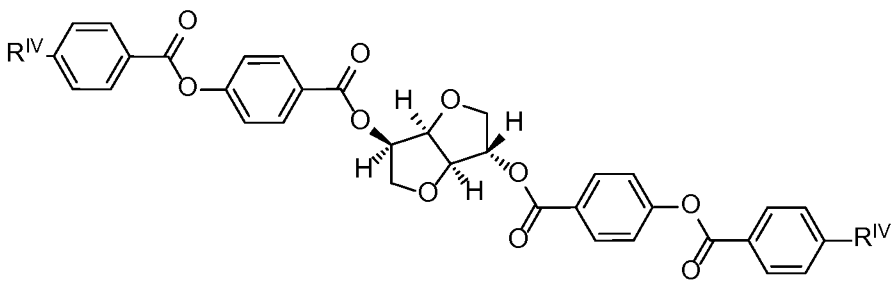

A-IV-1

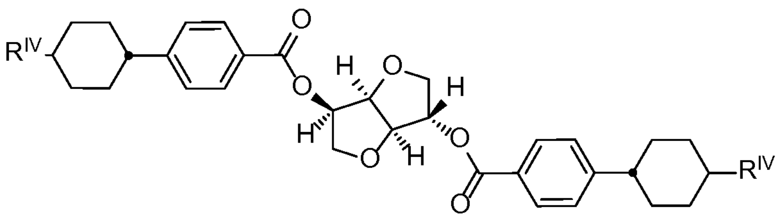

A-IV-2

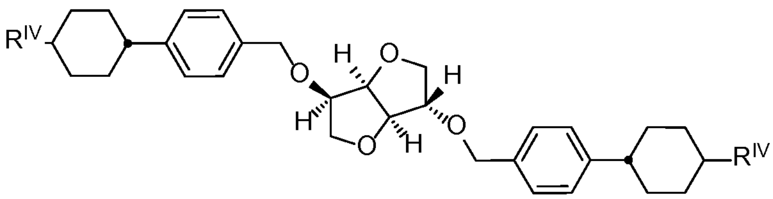

A-IV-3

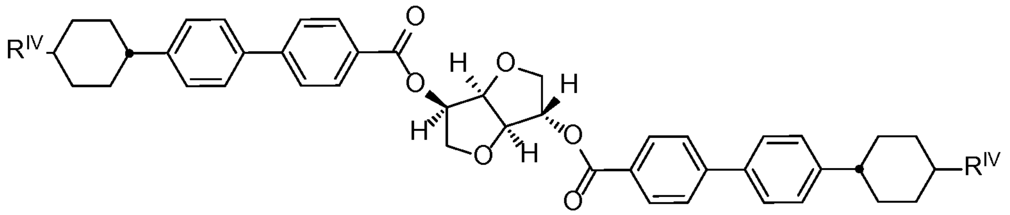

A-IV-4

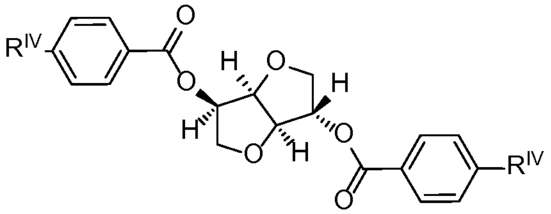

A-IV-5

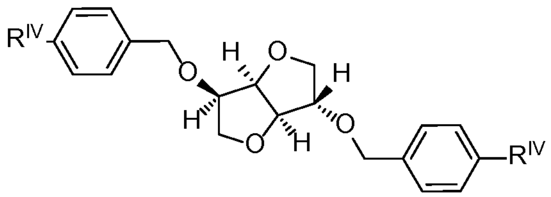

A-IV-6

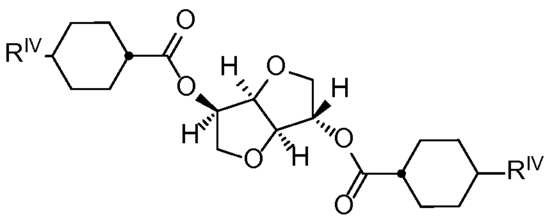

A-IV-7

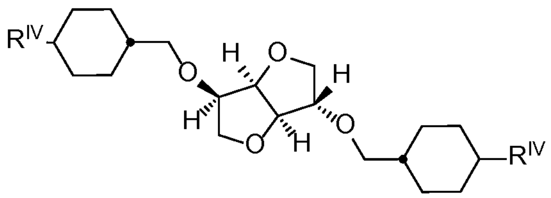

A-IV-8

The compounds of the formula A-IV are described in WO 98/00428. The compounds of the formula A-V are described in GB-A-2,328,207.

Very particularly preferred dopants are chiral binaphthyl derivatives, as described in WO 02/94805, chiral binaphthol acetal derivatives, as described in WO 02/34739, chiral TADDOL derivatives, as described in WO 02/06265, and chiral dopants having at least one fluorinated bridging group and a terminal or central chiral group, as described in WO 02/06196 and WO 02/06195.

Particular preference is given to chiral compounds of the formula A-VI

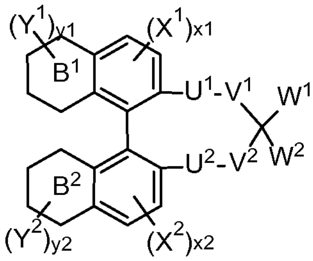

A-VI

in which

$X^1$, $X^2$, $Y^1$ and $Y^2$ are each, independently of one another, F, Cl, Br, I, CN, SCN, $SF_5$, straight-chain or branched alkyl having from 1 to 25 carbon atoms, which is unsubstituted or monosubstituted or polysubstituted by F, Cl, Br, I or CN and in which, in addition, one or more non-adjacent $CH_2$ groups may each, independently of one another, be replaced by -O-, -S-, -NH-, $NR^0$-, -CO-, -COO-, -OCO-, -OCOO-, -S-CO-, -CO-S-, -CH=CH- or -C≡C- in such a way that O and/or S atoms are not bonded directly to one another, a polymerisable group or cycloalkyl or aryl having up to 20 carbon atoms, which may optionally be monosubstituted or polysubstituted by halogen, preferably F, or by a polymerisable group,

$x^1$ and $x^2$ are each, independently of one another, 0, 1 or 2,

$y^1$ and $y^2$ are each, independently of one another, 0, 1, 2, 3 or 4,

$B^1$ and $B^2$ are each, independently of one another, an aromatic or partially or fully saturated aliphatic six-membered ring in which one or more CH groups may each be replaced by N and one or more non-adjacent $CH_2$ groups may each be replaced by O or S,

$W^1$ and $W^2$ are each, independently of one another, $-Z^1-A^1-(Z^2-A^2)_m-R$, and one of the two is alternatively $R^1$ or $A^3$, but both are not simultaneously H, or

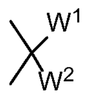

is

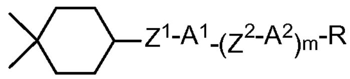

or

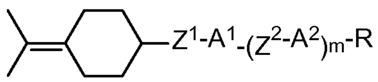,

$U^1$ and $U^2$ are each, independently of one another, $CH_2$, O, S, CO or CS,

$V^1$ and $V^2$ are each, independently of one another, $(CH_2)_n$, in which from one to four non-adjacent $CH_2$ groups may each be replaced by O or S, and one of $V^1$ and $V^2$ and, in the case where

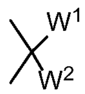

is

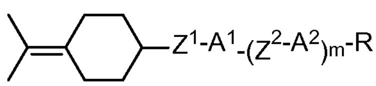

both are a single bond,

n is 1,2 or 3

$Z^1$ and $Z^2$ are each, independently of one another, -O-, -S-, -CO-, -COO-, -OCO-, -O-COO-, $-CO-NR^0-$, $-NR^0-CO-$, $-O-CH_2-$, $-CH_2-O-$, $-S-CH_2-$, $-CH_2-S-$, $-CF_2-O-$, $-O-CF_2-$, $-CF_2-S-$, $-S-CF_2-$, $-CH_2-CH_2-$, $-CF_2-CH_2-$, $-CH_2-CF_2-$, $-CF_2-CF_2-$, -CH=N-, -N=CH-, -N=N-, -CH=CH-, -CF=CH-, -CH=CF-, -CF=CF-, -C≡C-, a combination of two of these groups, where no two O and/or S and/or N atoms are bonded directly to one another, preferably -CH=CH-COO-, or -COO-CH=CH-, or a single bond,

$A^1$, $A^2$ and $A^3$ are each, independently of one another, 1,4-phenylene, in which one or two non-adjacent CH groups may each be replaced by N, 1,4-cyclohexylene, in which one or two non-adjacent $CH_2$ groups may each be replaced by O or S, 1,3-dioxolane-4,5-diyl, 1,4-cyclohexenylene, 1,4-bicyclo[2.2.2]octylene, piperidine-1,4-diyl, naphthalene-2,6-diyl, decahydronaphthalene-2,6-diyl or 1,2,3,4-tetrahydronaphthalene-2,6-diyl, where each of these groups may be monosubstituted or polysubstituted by L, and in addition $A^1$ can be a single bond,

L is a halogen atom, preferably F, CN, $NO_2$, alkyl, alkoxy, alkylcarbonyl, alkoxycarbonyl or alkoxycarbonyloxy having 1-7 carbon atoms, in which one or more H atoms may each be replaced by F or Cl,

m is in each case, independently, 0, 1, 2 or 3, and

R and $R^1$ are each, independently of one another, H, F, Cl, Br, I, CN, SCN, $SF_5$, straight-chain or branched alkyl having from 1 or 3 to 25 carbon atoms respectively, which may optionally be monosubstituted or polysubstituted by F, Cl, Br, I or CN, and in which one or more non-adjacent $CH_2$ groups may each be replaced by -O-, -S-, -NH-, -$NR^0$-, -CO-, -COO-, -OCO-, -O-COO-, -S-CO-, -CO-S-, -CH=CH- or -C≡C-, where no two O and/or S atoms are bonded directly to one another, or a polymerisable group.

Particular preference is given to chiral binaphthyl derivatives of the formula A-VI-1

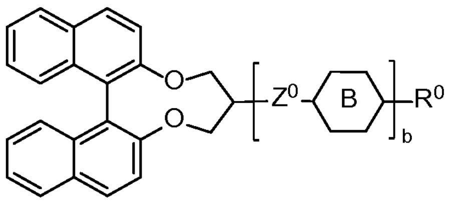

A-VI-1

in which ring B, $R^0$ and $Z^0$ are as defined for the formulae A-IV and A-V, and b is 0, 1, or 2, in particular those selected from the following formulae A-VI-1a to A-VI-1c:

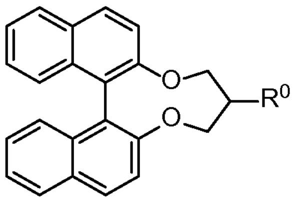

A-VI-1a

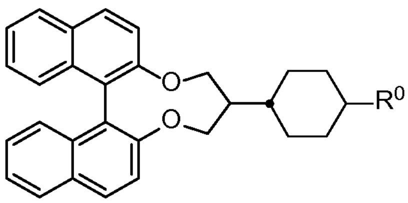

A-VI-1b

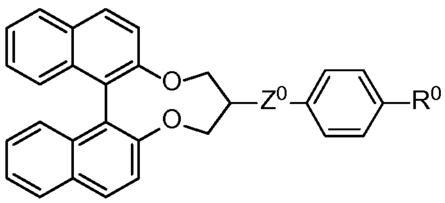

A-VI-1c

in which ring B, $R^0$, and $Z^0$ are as defined for the formula A-VI-1, and

$R^0$ as defined for formula A-IV or H or alkyl having from 1 to 4 carbon atoms, and

b is 0, 1 or 2,

and $Z^0$ is, in particular, -OC(O)- or a single bond.

The concentration of the one or more chiral dopant(s), in the LC medium is preferably in the range from 0.001

% to 20 %, preferably from 0.05 % to 5 %, more preferably from 0.1 % to 2 %, and, most preferably from 0.5 % to 1.5 %. These preferred concentration ranges apply in particular to the chiral dopant S-4011 or R-4011 (both from Merck KGaA) and for chiral dopants having the same or a similar HTP. For Chiral dopants having either a higher or a lower absolute value of the HTP compared to S-4011 these preferred concentrations have to be decreased, respectively increased proportionally according to the ratio of their HTP values relatively to that of S-4011.

The pitch p of the LC media or host mixtures according to the invention is preferably in the range of from 5 to 50 μm, more preferably from 8 to 30 μm and particularly preferably from 10 to 20 μm.

The compounds according to the present invention can be synthesized by or in analogy to known methods described in the literature (for example in the standard works such as Houben-Weyl, Methoden der Organischen Chemie [Methods of Organic Chemistry], Georg-Thieme-Verlag, Stuttgart), under reaction conditions which are known and suitable for said reactions. Use may also be made here of variants which are known per se, but are not mentioned here. In particular, they can be prepared as described in or in analogy to the following reaction schemes. Further methods for preparing the inventive compounds can be taken from the examples.

Other mesogenic compounds which are not explicitly mentioned above can optionally and advantageously also be used in the media in accordance with the present invention. Such compounds are known to the person skilled in the art.

The total concentration of compounds of formula D in the liquid-crystalline medium is in the range of from 0.01 % to 1%, preferably from 0.05 % to 0.75 %, more preferably from 0.08 % to 0.4 %, more preferably from 0.09 % to 0.3 %, particularly preferably from 0.1 % to 0.2 %.

Preferably the total concentration of the compounds of formulae I to III in the medium is in the range of from 80 % to 99 %, more preferably from 90 % to 99 % and most preferably in the range of from 95 % to 99 %.

The total concentration of the compounds of formula I-3, preferably of the formula I-3b, in the media is in the range of from 10 % to 70 %, more preferably from 20 % to 60 %, more preferably from 30 % to 55 % and, most preferably from 40 % to 50 %.

The liquid-crystalline media according to the present invention preferably comprise in total 5 % to 45 %, preferably 10 % to 40 % and particularly preferably 15 % to 35 %, of compounds of formula III.

In a preferred embodiment of the present invention the medium comprises one or more compounds of formula III-1, in a total concentration of 2 % to 25 %, more preferably 5 % to 20 %, particularly preferably 8 % to 16 %.

In a further preferred embodiment of the present invention, in which the liquid-crystalline media comprise in each case one or more compounds of the formulae I, II and III, the concentration of the compounds of formula I is preferably 15 % to 40 %, preferably 20 % to 35 % and particularly preferably 25 % to 30 %, the concentration of the compounds of formula II is preferably 10 % to 35 %, preferably 15 % to 30 % and particularly preferably 20 % to 25 % and the concentration of the compounds of formula III is preferably 25 % to 50 %, preferably 30 % to 45 % and particularly preferably 35 % to 40 %.

In a preferred embodiment of the present invention, in which the liquid-crystalline media comprise in each case one or more compounds of the formulae I and II, but at most 5 % and preferably no compounds of formula III, the concentration of the compounds of formula I is preferably 10 % to 50 %, preferably 20 % to 40 % and particularly preferably 25 % to 35 % the concentration of the compounds of formula II is preferably 40 % to 70 % preferably 50 % to 65 % and particularly preferably 55 % to 60 %, and the concentration of the compounds of formula III is preferably 1 % to 4 %, preferably 1 % to 3 % and particularly preferably 0 %.

In a preferred embodiment of the present invention, the liquid-crystalline medium comprises in total 30 % or more, preferably 40 % or more and particularly preferably 50 % or more compounds of formula I, preferably selected from the group of compounds of the I-1, I-2 and I-3, particularly preferably selected from the compounds of the formulae I-2 and I-3. Preferably, the medium according to the invention comprises a total concentration of less than 40% of compounds of formula I-1, preferably less than 20%, and particularly preferably less than 15%.

In a preferred embodiment of the present invention, the liquid-crystalline medium comprises one or more compounds of formula I in the range of from 1% to 20%, preferably from 5% to 15%.

In a preferred embodiment, the medium comprises one or more compounds of formula I-2 in a total concentration in the range of from 5 % to 30 %, more preferably from 10 % to 25 %, and particularly preferably from 15 % to 20 %.

In a preferred embodiment, the total concentration of the compounds of formula I-3 in the media according to the present invention is in the range of from 10 % to 70 %, more preferably from 20 % to 60 %, and particularly preferably from 25 % to 55 %.

In a preferred embodiment, the total concentration of the compounds of formula I-3 in the media according to the present invention is 20 % or more, more preferably 25 % or more and particularly preferably 30 % or more.

In a preferred embodiment of the present invention the medium comprises one or more compounds of formula II in a total concentration of 5 % to 35 %, more preferably 10 % to 30 %, particularly preferably 15 % to 20 %.

In a preferred embodiment of the present invention the medium comprises one or more compounds of formula II-1 in a total concentration of 5 % to 25 %, more preferably 7 % to 20 %, particularly preferably 10 % to 15 %.

In a preferred embodiment of the present invention the medium comprises one or more compounds of formula

II-1 in an total concentration of 25% or less, more preferably 20% or less, particularly preferably 15% or less, very particularly preferably 10% or less.

Further preferred embodiments of the present invention are as follows, wherein some compounds are abbreviated using the acronyms given in Table C:

- The medium comprises one or more compounds of formula D-1, preferably the compound D-1c
- The medium comprises one or more compounds of formula D-1 and one or more compounds of formula I and/or II and/or III;
- The medium comprises one or more compounds of formula III-1;
- The medium comprises one or more compounds of formula I-3b, preferably the compounds CPU-2-S and/or CPU-4-S;
- The medium comprises one or more compounds of formula PPTU-n-S in a total concentration in the range of from 10 to 20 %;
- The medium comprises one or more compounds of formula PPTU-n-S and PGTU-n-S in an total concentration in the range of from 15 to 25 %;
- The medium comprises one or more compounds of formula PTU-n-S and one or more compounds of formula CPU-n-S or CGU-n-S.

The liquid-crystal media in accordance with the present invention preferably have a clearing point of 90°C or more, more preferably 100°C or more, more preferably 110°C or more, more preferably 120°C or more, more preferably 130°C or more, particularly preferably 140°C or more and very particularly preferably 150°C or more.

The liquid-crystal media in accordance with the present invention preferably have a clearing point of 160°C or less, more preferably 140°C or less, particularly preferably 120°C or less, and very particularly preferably 100°C or less.

The nematic phase of the media according to the invention preferably extends at least from 0°C or less to 90°C or more. It is advantageous for the media according to the invention to exhibit even broader nematic phase ranges, preferably at least from -10°C or less to 120°C or more, very preferably at least from -20°C or less to 140°C or more and in particular at least from -30°C or less to 150°C or more, very particularly preferably at least from -40°C or less to 170°C or more.

The $\Delta\varepsilon$ of the liquid-crystal medium according to the present invention, at 1 kHz and 20°C, is preferably 1 or more, more preferably 2 or more and very preferably 3 or more.

The $\Delta n$ of the liquid-crystal media according to the present invention, at 589 nm ($Na^D$) and 20°C, is preferably in the range from 0.200 or more to 0.90 or less, more preferably in the range from 0.250 or more to 0.90 or less, even more preferably in the range from 0.300 or more to 0.85 or less and very particularly preferably in the range from 0.350 or more to 0.800 or less.

In a preferred embodiment of the present application, the $\Delta n$ of the liquid-crystal media in accordance with the present invention is preferably 0.50 or more, more preferably 0.55 or more.

The compounds of the formulae I to III in each case include dielectrically positive compounds having a dielectric anisotropy of greater than 3, dielectrically neutral compounds having a dielectric anisotropy of less than 3 and greater than -1.5 and dielectrically negative compounds having a dielectric anisotropy of -1.5 or less.

The compounds of the formulae I, II and III are preferably dielectrically positive.

In the present application, the expression dielectrically positive describes compounds or components where $\Delta\varepsilon > 3.0$, dielectrically neutral describes those where $-1.5 \leq \Delta\varepsilon \leq 3.0$ and dielectrically negative describes those where $\Delta\varepsilon < -1.5$. $\Delta\varepsilon$ is determined at a frequency of 1 kHz and at 20°C. The dielectric anisotropy of the respective compound is determined from the results of a solution of 10 % of the respective individual compound in a nematic host mixture. If the solubility of the respective compound in the host mixture is less than 10 %, the concentration is reduced to 5 %. The capacitances of the test mixtures are determined both in a cell having homeotropic alignment and in a cell having homogeneous alignment. The cell thickness of both types of cells is approximately 20 μm. The voltage applied is a rectangular wave having a frequency of 1 kHz and an effective value of typically 0.5 V to 1.0 V, but it is always selected to be below the capacitive threshold of the respective test mixture.

$\Delta\varepsilon$ is defined as $(\varepsilon_\parallel - \varepsilon_\perp)$, while $\varepsilon_{ave.}$ is $(\varepsilon_\parallel + 2\,\varepsilon_\perp) / 3$.

The host mixture used for dielectrically positive compounds is mixture ZLI-4792 and that used for dielectrically neutral and dielectrically negative compounds is mixture ZLI-3086, both from Merck KGaA, Germany. The absolute values of the dielectric constants of the compounds are determined from the change in the respective values of the host mixture on addition of the compounds of interest. The values are extrapolated to a concentration of the compounds of interest of 100 %.

Components having a nematic phase at the measurement temperature of 20°C are measured as such, all others are treated like compounds.

The expression threshold voltage in the present application refers to the optical threshold and is quoted for 10

% relative contrast ($V_{10}$), and the expression saturation voltage refers to the optical saturation and is quoted for 90 % relative contrast ($V_{90}$), in both cases unless expressly stated otherwise. The capacitive threshold voltage ($V_0$), also called the Freedericks threshold ($V_{Fr}$), is only used if expressly mentioned.

The parameter ranges indicated in this application all include the limit values, unless expressly stated otherwise.

The different upper and lower limit values indicated for various ranges of properties in combination with one another give rise to additional preferred ranges.

Throughout this application, the following conditions and definitions apply, unless expressly stated otherwise. All concentrations are quoted in per cent by weight and relate to the respective mixture as a whole, all temperatures are quoted in degrees Celsius and all temperature differences are quoted in differential degrees. All physical properties are determined in accordance with "Merck Liquid Crystals, Physical Properties of Liquid Crystals", Status Nov. 1997, Merck KGaA, Germany, and are quoted for a temperature of 20°C, unless expressly stated otherwise. The optical anisotropy ($\Delta n$) is determined at a wavelength of 589.3 nm. The dielectric anisotropy ($\Delta\varepsilon$) is determined at a frequency of 1 kHz. The threshold voltages, as well as all other electro-optical properties, are determined using test cells produced at Merck KGaA, Germany. The test cells for the determination of $\Delta\varepsilon$ have a cell thickness of approximately 20 $\mu$m. The electrode is a circular ITO electrode having an area of 1.13 $cm^2$ and a guard ring. The orientation layers are SE-1211 from Nissan Chemicals, Japan, for homeotropic orientation ($\varepsilon\|$) and polyimide AL-1054 from Japan Synthetic Rubber, Japan, for homogeneous orientation ($\varepsilon\perp$). The capacitances are determined using a Solatron 1260 frequency response analyser using a sine wave with a voltage of 0.3 $V_{rms}$. The light used in the electro-optical measurements is white light. A set-up using a commercially available DMS instrument from Autronic-Melchers, Germany, is used here. The characteristic voltages have been determined under perpendicular observation. The threshold ($V_{10}$), mid-grey ($V_{50}$) and saturation ($V_{90}$) voltages have been determined for 10 %, 50 % and 90 % relative contrast, respectively.

The liquid-crystalline media are investigated with respect to their properties in the microwave frequency range as described in A. Penirschke et al. "Cavity Perturbation Method for Characterization of Liquid Crystals up to 35 GHz", 34th European Microwave Conference - Amsterdam, pp. 545-548. Compare in this respect also A. Gaebler et al. "Direct Simulation of Material Permittivities ...", 12MTC 2009 - International Instrumentation and Measurement Technology Conference, Singapore, 2009 (IEEE), pp. 463-467, and DE 10 2004 029 429 A, in which a measurement method is likewise described in detail.

The liquid crystal is introduced into a polytetrafluoroethylene (PTFE) or quartz capillary. The capillary has an inner diameter of 0.5mm and an outer diameter of 0.78mm. The effective length is 2.0 cm. The filled capillary is introduced into the centre of the cylindrical cavity with a resonance frequency of 19 GHz. This cavity has a length of 11.5 mm and a radius of 6 mm. The input signal (source) is then applied, and the frequency depending response of the cavity is recorded using a commercial vector network analyser (N5227A PNA Microwave Network Analyzer, Keysight Technologies Inc. USA. For other frequencies, the dimensions of the cavity are adapted correspondingly.

The change in the resonance frequency and the Q factor between the measurement with the capillary filled with the liquid crystal and the measurement without the capillary filled with the liquid crystal is used to determine the dielectric constant and the loss angle at the corresponding target frequency by means of equations 10 and 11 in the above-mentioned publication A. Penirschke et al., 34th European Microwave Conference - Amsterdam, pp. 545-548, as described therein.

The values for the components of the properties perpendicular and parallel to the director of the liquid crystal are obtained by alignment of the liquid crystal in a magnetic field. To this end, the magnetic field of a permanent magnet is used. The strength of the magnetic field is 0.35 tesla.

Preferred components are phase shifters, varactors, wireless and radio wave antenna arrays, matching circuit adaptive filters and others.

In the present application, the term compounds is taken to mean both one compound and a plurality of compounds, unless expressly stated otherwise.

The liquid-crystal media according to the invention preferably have nematic phases in preferred ranges given above. The expression have a nematic phase here means on the one hand that no smectic phase and no crystallisation are observed at low temperatures at the corresponding temperature and on the other hand that no clearing occurs on heating from the nematic phase. At high temperatures, the clearing point is measured in capillaries by conventional methods. The investigation at low temperatures is carried out in a flow viscometer at the corresponding temperature and checked by storage of bulk samples: The storage stability in the bulk (LTS) of the media according to the invention at a given temperature T is determined by visual inspection. 2 g of the media of interest are filled into a closed glass vessel (bottle) of appropriate size placed in a refrigerator at a predetermined temperature. The bottles are checked at defined time intervals for the occurrence of smectic phases or crystallisation. For every material and at each temperature two bottles are stored. If crystallisation or the appearance of a smectic phase is observed in at least one of the two correspondent bottles the test is terminated and the time of the last inspection before the one at which the occurrence of a higher ordered phase is observed is recorded as the respective storage stability. The test is finally terminated after 1000 h, *i.e.* an LTS value of 1000 h means that the mixture is stable at the given temperature for at least 1000 h.

Furthermore, the liquid-crystal media according to the invention are characterised by high optical anisotropy values in the visible range, especially at a wavelength of 589.0 nm (i.e. at the Na"D" line). The birefringence at 589 nm is preferably 0.20 or more, particularly preferably 0.25 or more, particularly preferably 0.30 or more, particularly preferably 0.40 or more and very particularly preferably 0.45 or more. In addition, the birefringence is preferably 0.80 or less.
The liquid crystals employed preferably have a positive dielectric anisotropy. This is preferably 2 or more, preferably 4 or more, particularly preferably 6 or more and very particularly preferably 10 or more.
Furthermore, the liquid-crystal media according to the invention are characterised by high anisotropy values in the microwave range. The birefringence at about 19 GHz is, for example, preferably 0.14 or more, particularly preferably 0.15 or more, particularly preferably 0.20 or more, particularly preferably 0.25 or more and very particularly preferably 0.30 or more. In addition, the birefringence is preferably 0.80 or less.
The dielectric anisotropy in the microwave range is defined as

$$\Delta\varepsilon_r \equiv (\varepsilon_{r,||} - \varepsilon_{r,\perp}) .$$

The tunability ($\tau$) is defined as

$$\tau \equiv (\Delta\varepsilon_r / \varepsilon_{r,||}) .$$

The material quality ($\eta$) is defined as

$$\eta \equiv (\tau / \tan \delta_{\varepsilon\ r,max.}),$$

where
the maximum dielectric loss is

$$\tan \delta_{\varepsilon\ r,max.} \equiv \max. \{ \tan \delta_{\varepsilon\ r,\perp,};\ \tan \delta_{\varepsilon\ r,||} \} .$$

The material quality ($\eta$) of the preferred liquid-crystal materials is 6 or more, preferably 8 or more, preferably 10 or more, preferably 15 or more, preferably 17 or more, preferably 20 or more, particularly preferably 25 or more and very particularly preferably 30 or more.
In the corresponding components, the preferred liquid-crystal materials have phase shifter qualities of 15°/dB or more, preferably 20°/dB or more, preferably 30°/dB or more, preferably 40°/dB or more, preferably 50°/dB or more, particularly preferably 80°/dB or more and very particularly preferably 100°/dB or more.
In some embodiments, however, liquid crystals having a negative value of the dielectric anisotropy can also advantageously be used.
The liquid crystals employed are either individual substances or mixtures. They preferably have a nematic phase.
The term "alkyl" preferably encompasses straight-chain and branched alkyl groups having 1 to 15 carbon atoms, in particular the straight-chain groups methyl, ethyl, propyl, butyl, pentyl, hexyl and heptyl. Groups having 2 to 10 carbon atoms are generally preferred.
The term "alkenyl" preferably encompasses straight-chain and branched alkenyl groups having 2 to 15 carbon atoms, in particular the straight-chain groups. Particularly preferred alkenyl groups are $C_2$- to $C_7$-1E-alkenyl, $C_4$-to $C_7$-3E-alkenyl, $C_5$- to $C_7$-4-alkenyl, $C_6$- to $C_7$-5-alkenyl and $C_7$-6-alkenyl, in particular $C_2$- to $C_7$-1E-alkenyl, $C_4$- to $C_7$-3E-alkenyl and $C_5$- to $C_7$-4-alkenyl. Examples of further preferred alkenyl groups are vinyl, 1 E-propenyl, 1 E-butenyl, 1 E-pentenyl, 1 E-hexenyl, 1 E-heptenyl, 3-butenyl, 3E-pentenyl, 3E-hexenyl, 3E-heptenyl, 4-pentenyl, 4Z-hexenyl, 4E-hexenyl, 4Z-heptenyl, 5-hexenyl, 6-heptenyl and the like. Groups having up to 5 carbon atoms are generally preferred.
The term "fluoroalkyl" preferably encompasses straight-chain groups having a terminal fluorine, i.e. fluoromethyl, 2-fluoroethyl, 3-fluoropropyl, 4-fluorobutyl, 5-fluoropentyl, 6-fluorohexyl and 7-fluoroheptyl. However, other positions of the fluorine are not excluded.
The term "oxaalkyl" or "alkoxyalkyl" preferably encompasses straight-chain radicals of the formula $C_nH_{2n+1}$-O-$(CH_2)_m$, in which n and m each, independently of one another, denote 1 to 10. Preferably, n is 1 and m is 1 to 6.
Compounds containing a vinyl end group and compounds containing a methyl end group have low rotational viscosity.
In the present application, high-frequency technology means applications of electromagnetic radiation having frequencies in the range of from 1 MHz to 1 THz, preferably from 1 GHz to 500 GHz, more preferably 2 GHz to 300

GHz, particularly preferably from about 5 GHz to 150 GHz.

The liquid-crystal media in accordance with the present invention may comprise further additives and chiral dopants in the usual concentrations. The total concentration of these further constituents is in the range from 0 % to 10 %, preferably 0.1 % to 6 %, based on the mixture as a whole. The concentrations of the individual compounds used are each preferably in the range from 0.1 % to 3 %. The concentration of these and similar additives is not taken into consideration when quoting the values and concentration ranges of the liquid-crystal components and liquid-crystal compounds of the liquid-crystal media in this application.

Preferably the media according to the present invention comprise one or more chiral compounds as chiral dopants in order to adjust their cholesteric pitch. Their total concentration in the media according to the instant invention is preferably in the range 0.05 % to 15 %, more preferably from 1 % to 10 % and most preferably from 2 % to 6 %.

Optionally the media according to the present invention may comprise further liquid crystal compounds in order to adjust the physical properties. Such compounds are known to the expert. Their concentration in the media according to the instant invention is preferably 0 % to 30 %, more preferably 0.1 % to 20 % and most preferably 1 % to 15 %.

The response times are given as rise time ($\tau_{on}$) for the time for the change of the relative tuning, respectively of the relative contrast for the electro-optical response, from 0 % to 90 % ($t_{90}$ - $t_0$), i.e. including the delay time ($t_{10}$ - to), as decay time ($\tau_{off}$) for the time for the change of the relative tuning, respectively of the relative contrast for the electro-optical response, from 100 % back to 10 % ($t_{100}$ - $t_{10}$) and as the total response time ($\tau_{total} = \tau_{on} + \tau_{off}$), respectively.

The liquid-crystal media according to the invention consist of a plurality of compounds, preferably 3 to 30, more preferably 4 to 20 and very preferably 4 to 16 compounds. These compounds are mixed in a conventional manner. In general, the desired amount of the compound used in the smaller amount is dissolved in the compound used in the larger amount. If the temperature is above the clearing point of the compound used in the higher concentration, it is particularly easy to observe completion of the dissolution process. It is, however, also possible to prepare the media in other conventional ways, for example using so-called pre-mixes, which can be, for example, homologous or eutectic mixtures of compounds, or using so-called "multibottle" systems, the constituents of which are themselves ready-to-use mixtures.

All temperatures, such as, for example, the melting point T(C,N) or T(C,S), the transition from the smectic (S) to the nematic (N) phase T(S,N) and the clearing point T(N,I) of the liquid crystals, are quoted in degrees Celsius. All temperature differences are quoted in differential degrees.

In the present invention and especially in the following examples, the structures of the mesogenic compounds are indicated by means of abbreviations, also referred to as acronyms. In these acronyms, the chemical formulae are abbreviated as follows using Tables A to D below. All groups $C_nH_{2n+1}$, $C_mH_{2m+1}$ and $C_lH_{2l+1}$ or $C_nH_{2n-1}$, $C_mH_{2m-1}$, and $C_lH_{2l-1}$ denote straight-chain alkyl or alkenyl, preferably 1-E-alkenyl, respectively, in each case having n, m or l C atoms. Table A lists the codes used for the ring elements of the core structures of the compounds, while Table B shows the linking groups. Table C gives the meanings of the codes for the left-hand or right-hand end groups. Table D shows illustrative structures of compounds with their respective abbreviations.

**Table A: Ring elements**

| | | | |
|---|---|---|---|
| **C** | 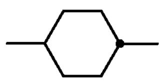 | | |
| **D** | 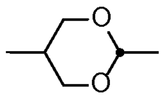 | **DI** | 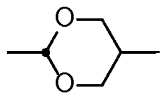 |
| **A** | 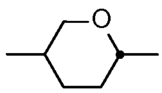 | **AI** | 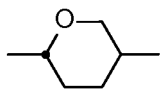 |
| **P** | 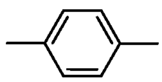 | **P(n,m)** | 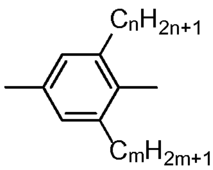 |
| **G** | 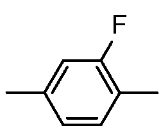 | **GI** | 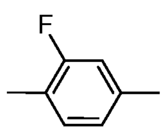 |

(continued)

| | | | |
|---|---|---|---|
| **U** | 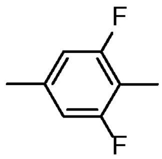 | **UI** | 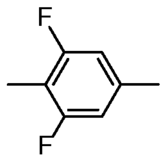 |
| **Y** | 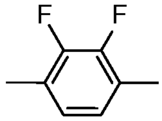 | | |
| **M** | 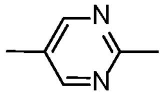 | **MI** | 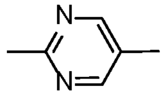 |
| **N** | 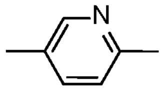 | **NI** | 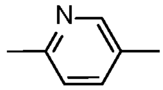 |
| **Np** | 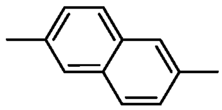 | | |
| **N3f** | 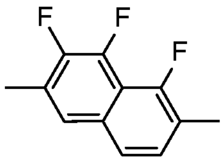 | **N3fI** | 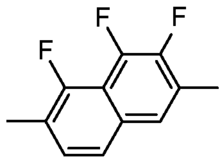 |
| **tH** | 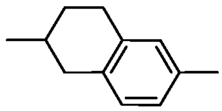 | **tHI** | 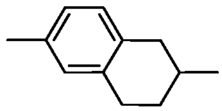 |
| **tH2f** | 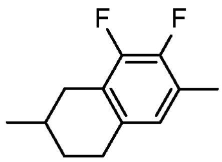 | **tH2fI** | 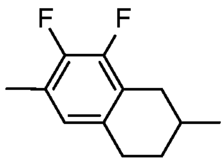 |
| **dH** | 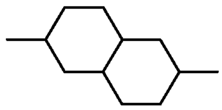 | | |
| **K** | 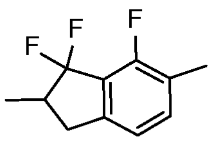 | **KI** | 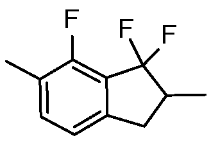 |
| **L** | 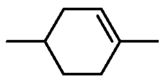 | **LI** | 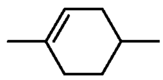 |
| **F** | 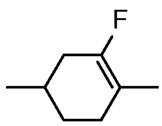 | **FI** | 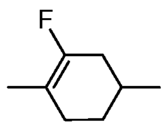 |
| **P(o)** | 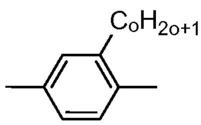 | **PI(o)** | 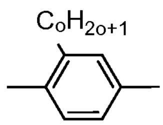 |

(continued)

**P(i3)** 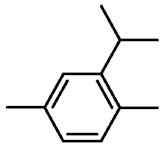

**PI(ic3)** 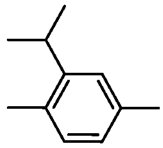

**P(t4)** 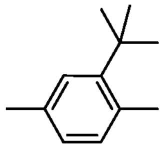

**PI(t4)** 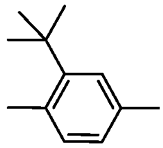

**P(c3)** 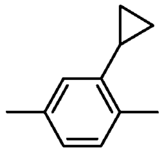

**PI(c3)** 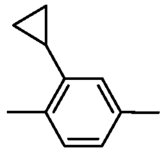

**P(c4)** 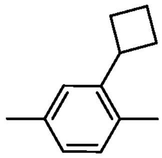

**PI(c4)** 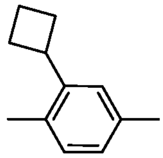

**P(c5)** 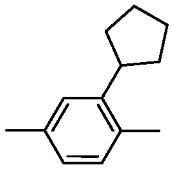

**PI(c5)** 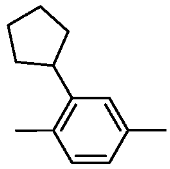

**P(e5)** 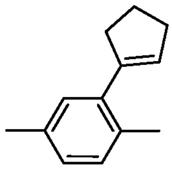

**PI(e5)** 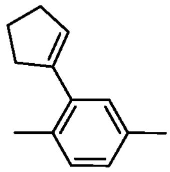

**P(c6)** 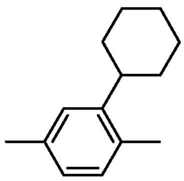

**PI(c6)** 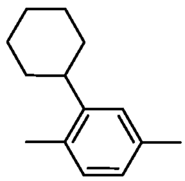

**P(e6)** 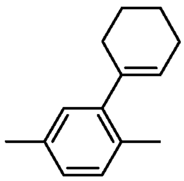

**PI(e6)** 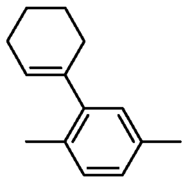

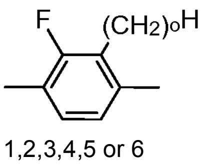

**GI(o)**
**in which** o = 1,2,3,4,5 or 6

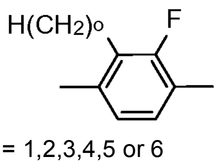

**G(o)**
**in which** o = 1,2,3,4,5 or 6

**GI(i3)**

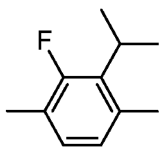

**G(i3)** 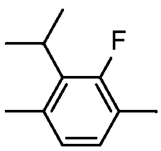

(continued)

GI(t4) 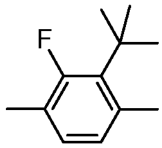 G(t4) 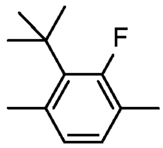

GI(c3) 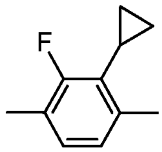 G(c3) 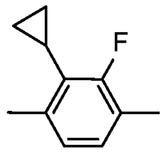

GI(c4) 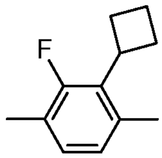 G(c4) 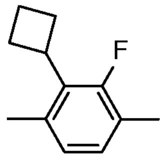

GI(c5) 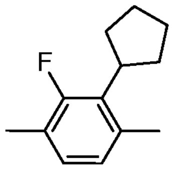 G(c5) 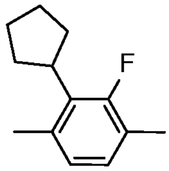

GI(e5) 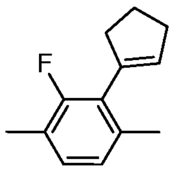 G(e5) 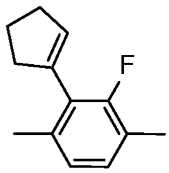

GI(c6) 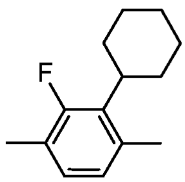 G(c6) 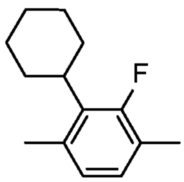

GI(e6) 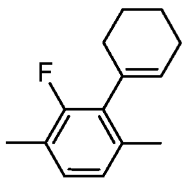 G(e6) 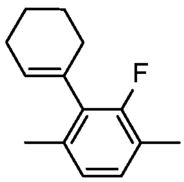

Np(1,4) 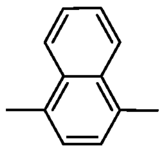

**Table B: Linking groups**

| | | | |
|---|---|---|---|
| **E** | $-CH_2CH_2-$ | **Z** | -CO-O- |
| **V** | -CH=CH- | **ZI** | -O-CO- |
| **X** | -CF=CH- | **O** | $-CH_2-O-$ |
| **XI** | -CH=CF- | **OI** | $-O-CH_2-$ |
| **B** | -CF=CF- | **Q** | $-CF_2-O-$ |
| **T** | -C≡C- | **QI** | $-O-CF_2-$ |
| **W** | $-CF_2CF_2-$ | | |

**Table B: End groups**

| Left-hand side | | Right-hand side | |
|---|---|---|---|
| | | **Used alone** | |
| **-n-** | $C_nH_{2n+1}$- | **-n** | -$C_nH_{2n+1}$ |
| **-nO-** | $C_nH_{2n+1}$-O- | **-On** | -O-$C_nH_{2n+1}$ |
| **-V-** | $CH_2$=CH- | **-V** | -CH=$CH_2$ |
| **-nV-** | $C_nH_{2n+1}$-CH=CH- | **-nV** | -$C_nH_{2n}$-CH=$CH_2$ |
| **-Vn-** | CH2=CH- CnH2n+1- | **-Vn** | -CH=CH-$C_nH_{2n+1}$ |
| **-nVm-** | $C_nH2_{n+1}$-CH=CH-$C_mH_{2m}$- | **-nVm** | -$C_nH_{2n}$-CH=CH-$C_mH_{2m+1}$ |
| **-N-** | N≡C- | **-N** | -C≡N |
| **-S-** | S=C=N- | **-S** | -N=C=S |
| **-F-** | F- | **-F** | -F |
| **-CL-** | Cl- | **-CL** | -Cl |
| **-M-** | $CFH_2$- | **-M** | -$CFH_2$ |
| **-D-** | $CF_2H$- | **-D** | -$CF_2H$ |
| **-T-** | $CF_3$- | **-T** | -$CF_3$ |
| **-MO-** | $CFH_2O$- | **-OM** | -$OCFH_2$ |
| **-DO-** | $CF_2HO$- | **-OD** | -$OCF_2H$ |
| **-TO-** | $CF_3O$- | **-OT** | -$OCF_3$ |
| **-FXO-** | $CF_2$=CH-O- | **-OXF** | -O-CH=$CF_2$ |
| **-A-** | H-C≡C- | **-A** | -C≡C-H |
| **-nA-** | $C_nH_{2n+1}$-C≡C- | **-An** | -C≡C-$C_nH2_{n+1}$ |
| **-NA-** | N≡C-C≡C- | **-AN** | -C≡C-C≡N |
| | **Used in combination with others** | | |
| **-...A...-** | -C≡C- | **-...A...** | -C≡C- |
| **-...V...-** | -CH=CH- | **-...V...** | -CH=CH- |
| **-...Z...-** | -CO-O- | **-...Z...** | -CO-O- |
| **-...ZI...-** | -O-CO- | **-...ZI...** | -O-CO- |
| **-...K...-** | -CO- | **-...K...** | -CO- |
| **-...W...-** | -CF=CF- | **-...W...** | -CF=CF- |

in which n and m each denote integers, and the three dots "..." are place-holders for other abbreviations from this table.

The following table shows illustrative structures together with their respective abbreviations. These are shown in order to illustrate the meaning of the rules for the abbreviations. They furthermore represent compounds which are preferably used.

**Table C: Illustrative structures**

The following illustrative structures are compounds, which are preferably additionally used in the media:

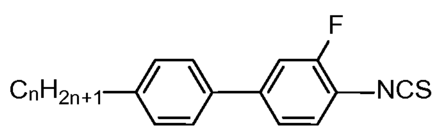

**PG-n-S**

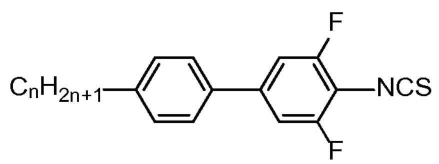

**PU-n-S**

(continued)

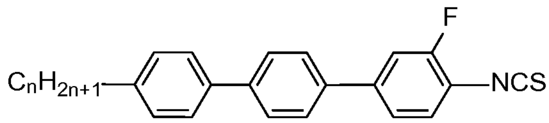

**PPG-n-S**

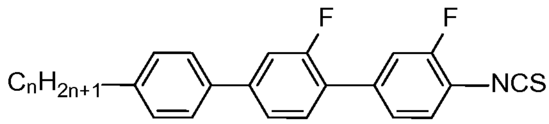

**PGG-n-S**

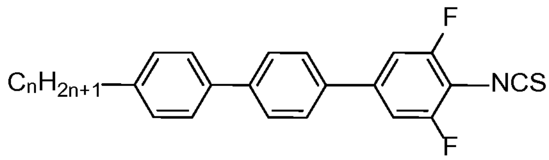

**PPU-n-S**

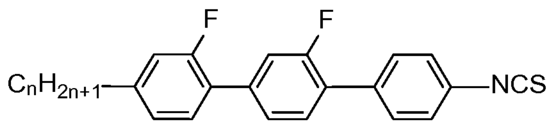

**GGP-n-S**

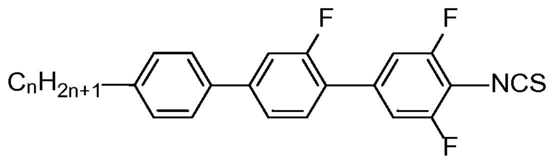

**PGU-n-S**

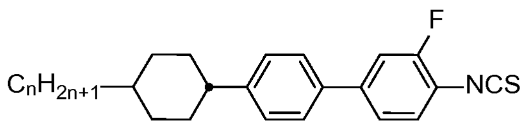

**CPG-n-S**

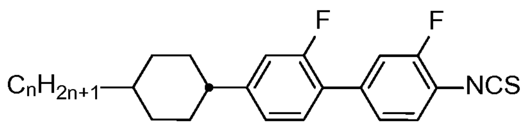

**CGG-n-S**

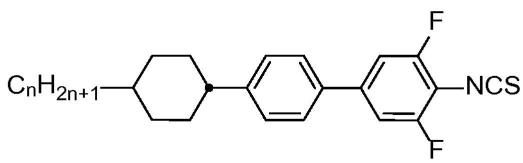

**CPU-n-S**

(continued)

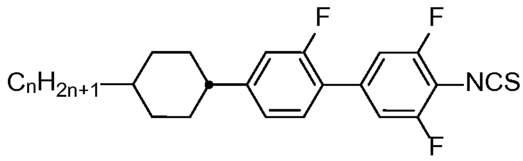

**CGU-n-S**

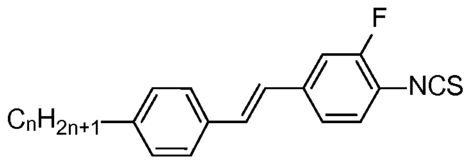

**PVG-n-S**

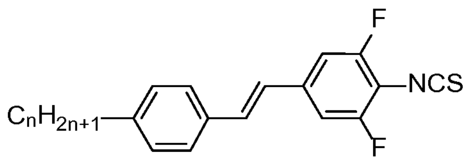

**PVU-n-S**

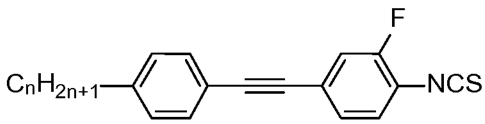

**PTG-n-S**

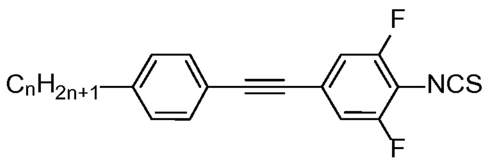

**PTU-n-S**

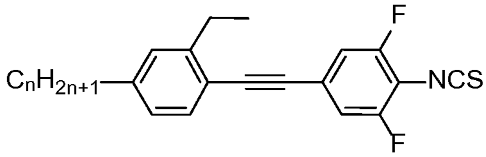

**P(2)TU-n-S**

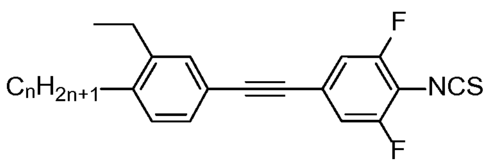

**PI(2)TU-n-S**

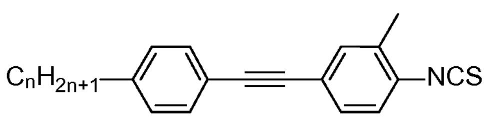

**PTP(1)-n-S**

(continued)

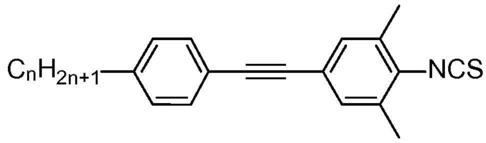

**PTP(1,1)-n-S**

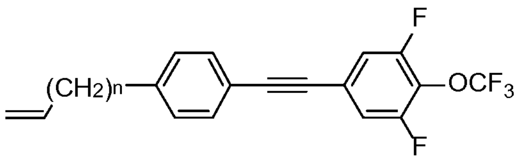

**PTU-Vn-OT**

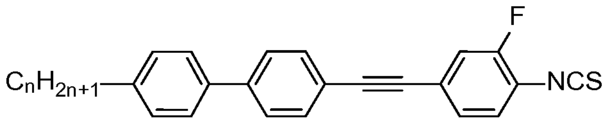

**PPTG-n-S**

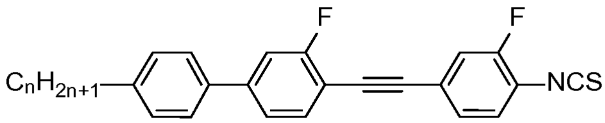

**PGTG-n-S**

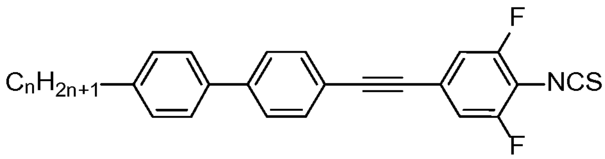

**PPTU-n-S**

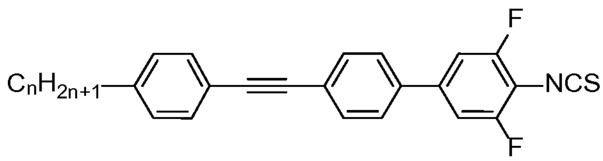

**PTPU-n-S**

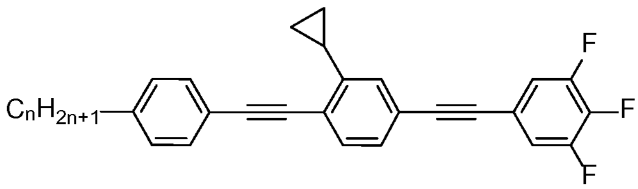

**PTPI(c3)TU-n-F**

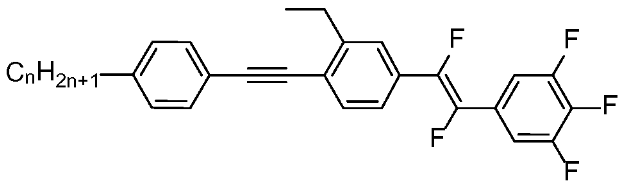

**PTPI(2)WU-n-F**

(continued)

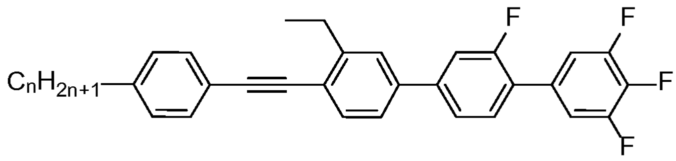

**PTPI(2)GU-n-F**

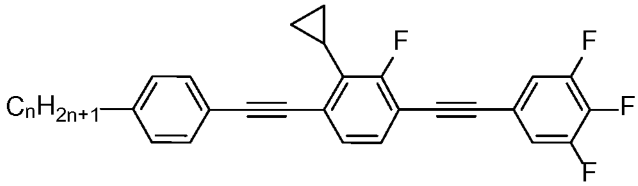

**PTG(c3)TU-n-F**

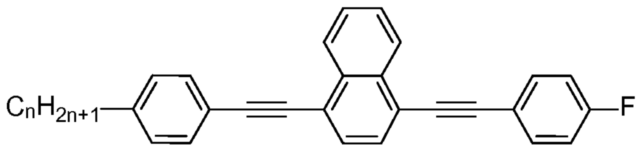

**PTN(1,4)TP-n-F**

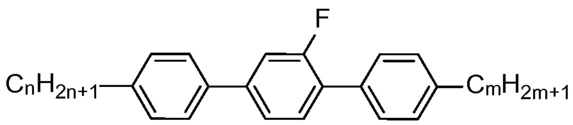

**PGP-n-m**

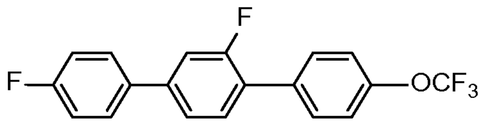

**PGP-F-OT**

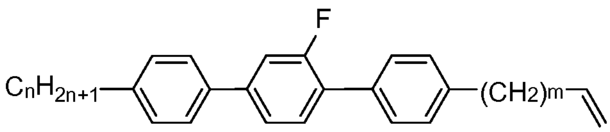

**PGP-n-mV**

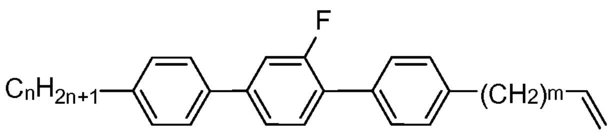

**PGP-n-mVI**

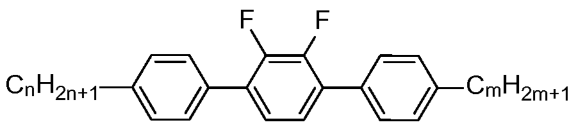

**PYP-n-m**

(continued)

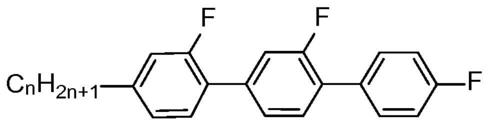

**GGP-n-F**

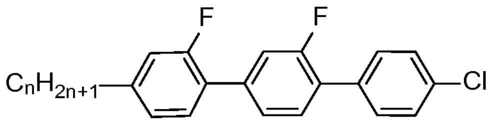

**GGP-n-CL**

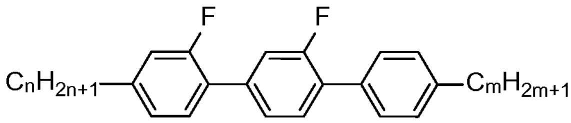

**GGP-n-m**

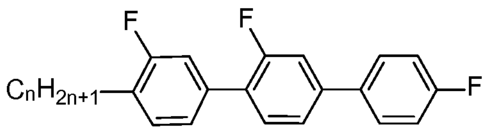

**PGIGI-n-F**

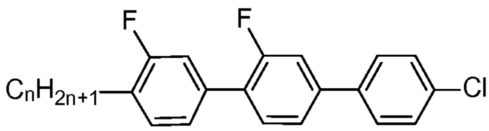

**PGIGI-n-CL**

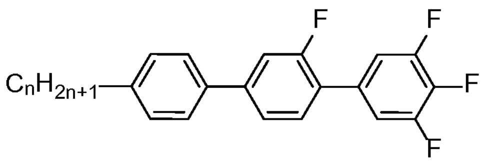

**PGU-n-F**

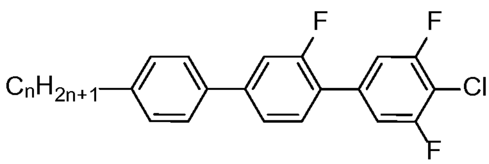

**PGU-n-CL**

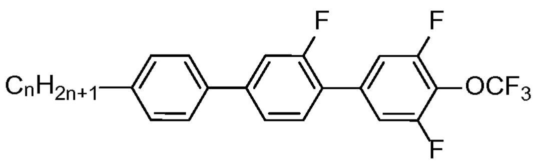

**PGU-n-OT**

(continued)

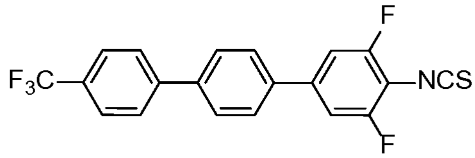

**PPU-T-S**

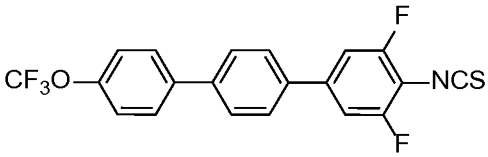

**PPU-TO-S**

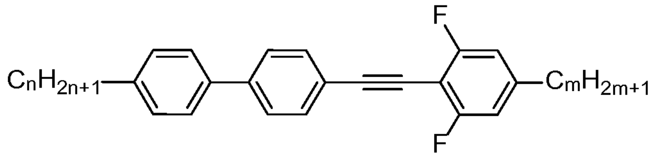

**PPTUI-n-m**

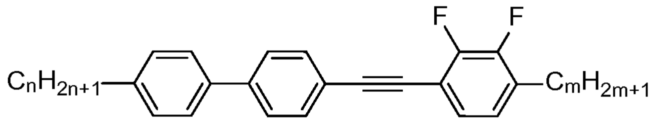

**PPTY-n-m**

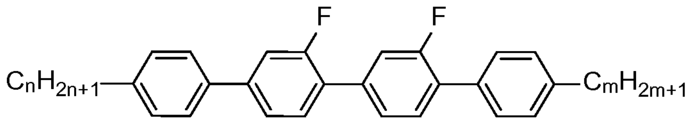

**PGGP-n-m**

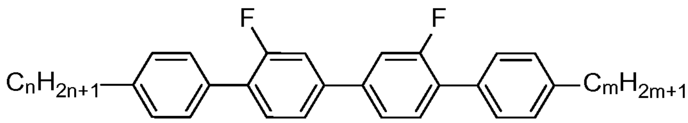

**PGIGP-n-m**

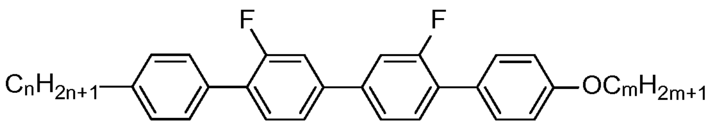

**PGIGP-n-Om**

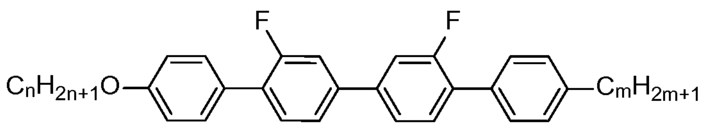

**PGIGP-nO-m**

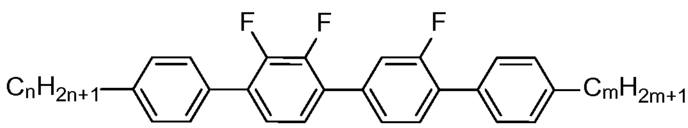

**PYGP-n-m**

(continued)

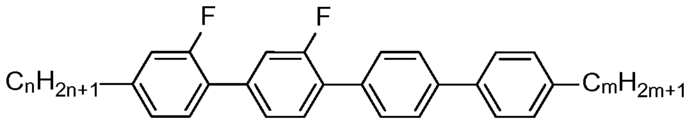

**GGPP-n-m**

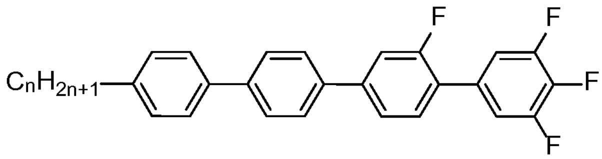

**PPGU-n-F**

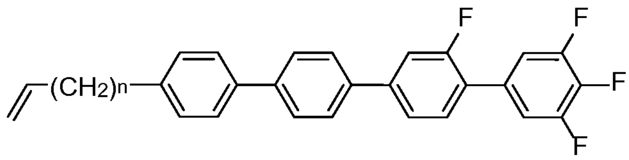

**PPGU-Vn-F**

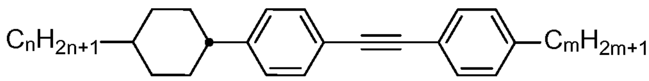

**CPTP-n-m**

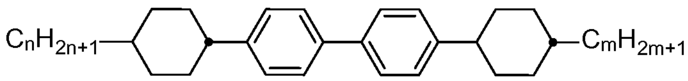

**CPPC-n-m**

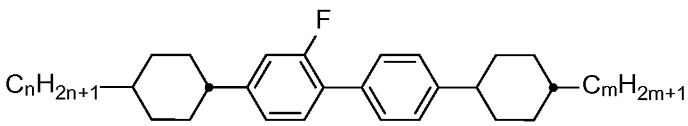

**CGPC-n-m**

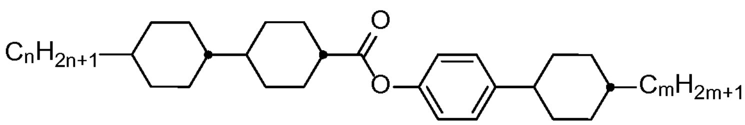

**CCZPC-n-m**

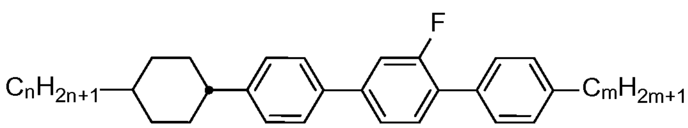

**CPGP-n-m**

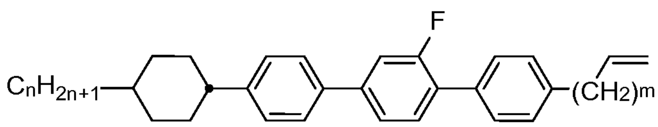

**CPGP-n-mV**

(continued)

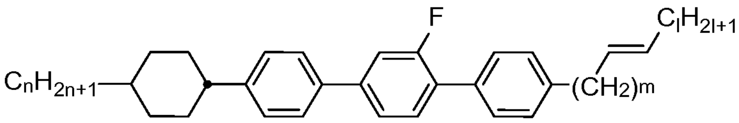

**CPGP-n-mVI**

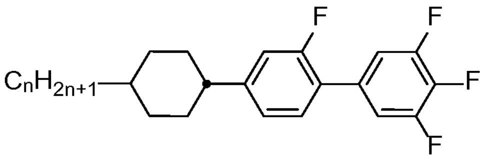

**CGU-n-F**

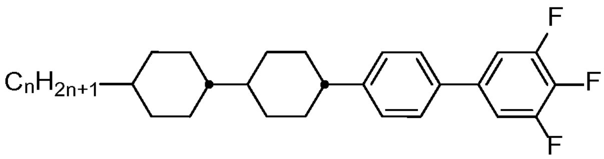

**CCPU-n-F**

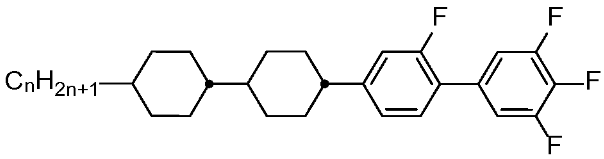

**CCGU-n-F**

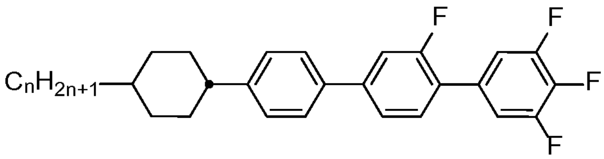

**CPGU-n-F**

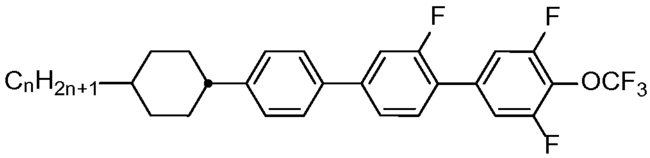

**CPGU-n-OT**

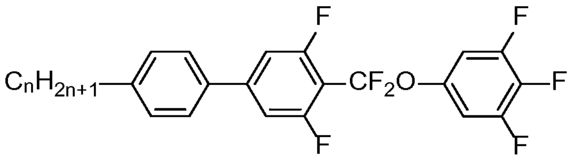

**PUQU-n-F**

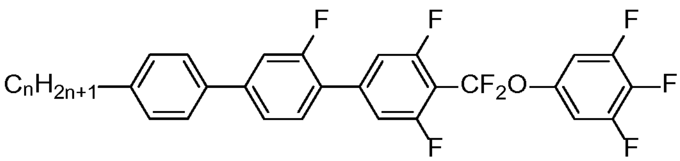

**PGUQU-n-F**

(continued)

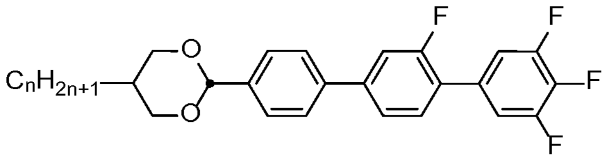

**DPGU-n-F**

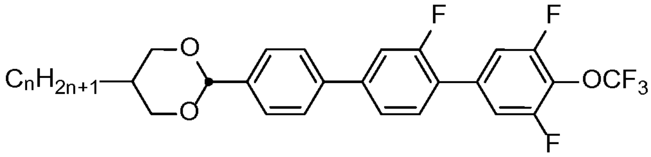

**DPGU-n-OT**

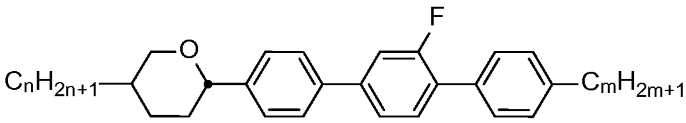

**APGP-n-m**

The following table, Table E, shows further illustrative compounds which can be used as stabiliser in the mesogenic media in accordance with the present invention. The total concentration of these and similar compounds in the media is preferably 5 % or less.

**Table E**

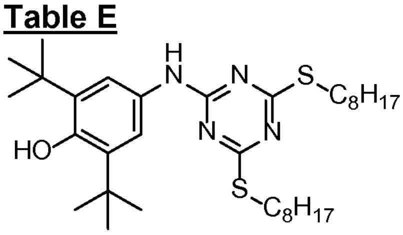

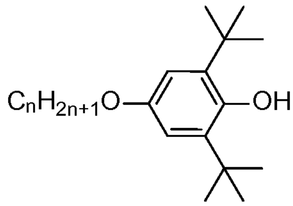

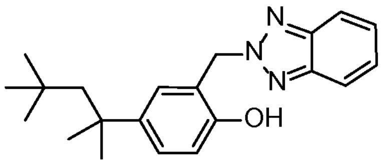

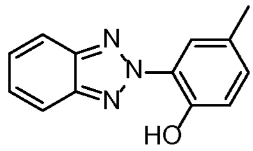

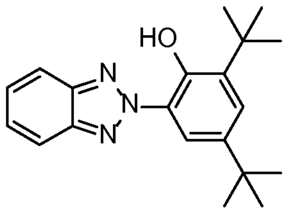

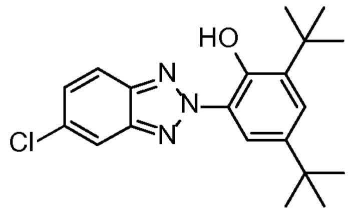

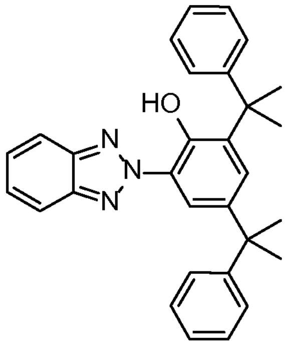

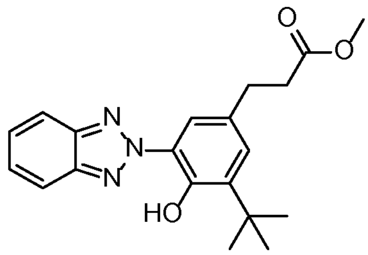

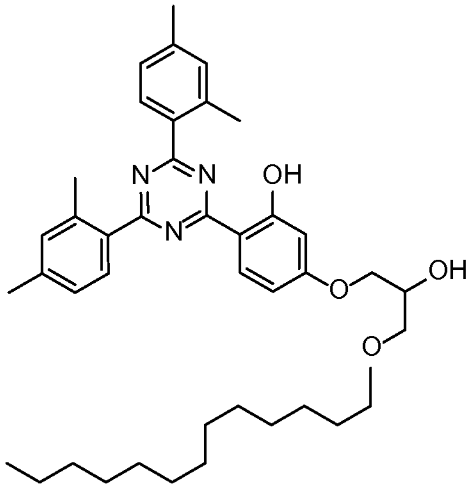

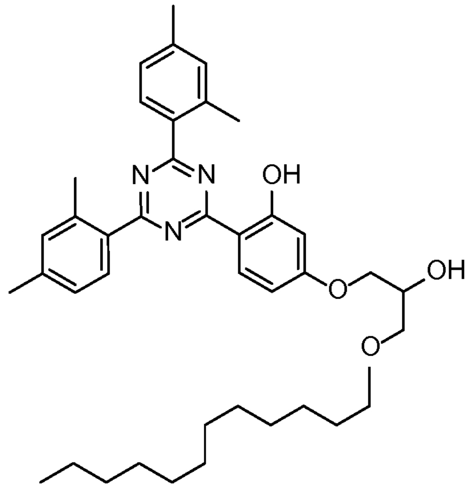

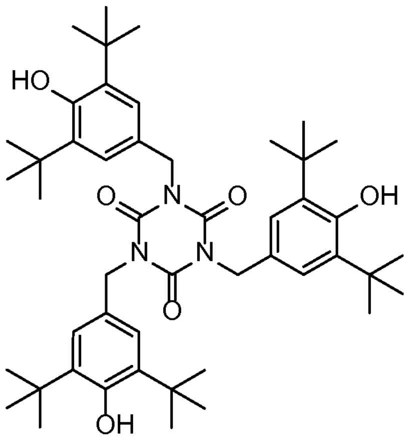

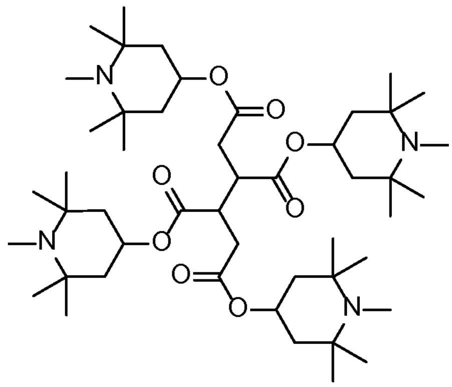

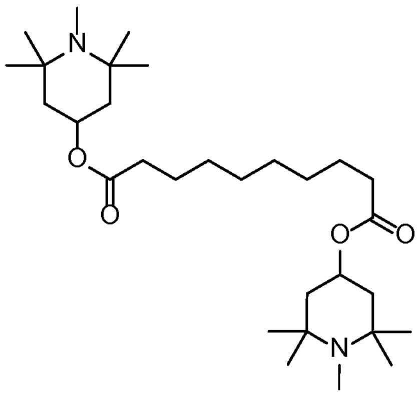

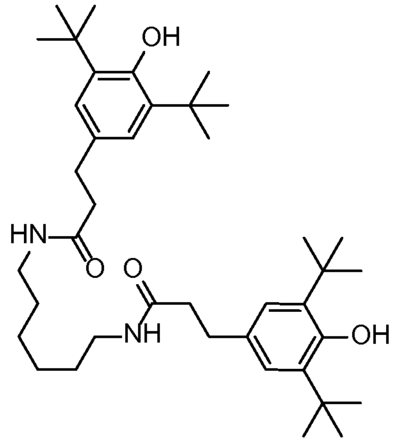

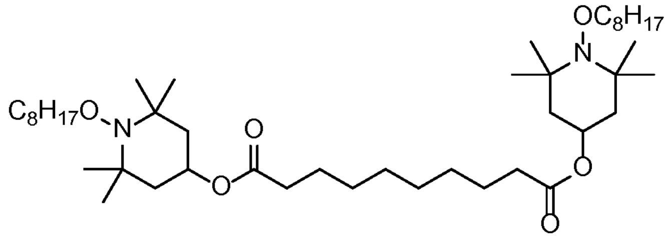

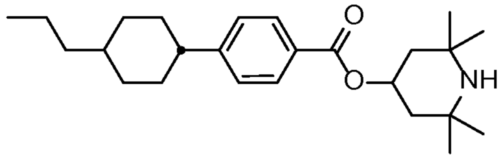

In a preferred embodiment of the present invention, the mesogenic media comprise one or more compounds selected from the group of the compounds from Table E.

The following table, Table F, shows illustrative compounds which can preferably be used as chiral dopants in the mesogenic media in accordance with the present invention.

## Table F

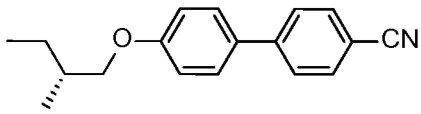

**C 15**

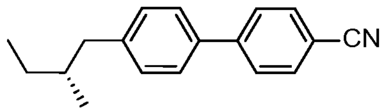

**CB 15**

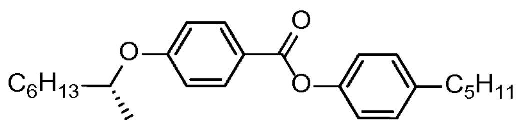

**CM 21**

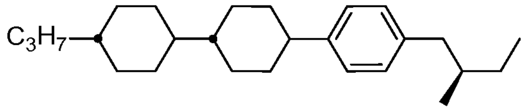

**CM 44**

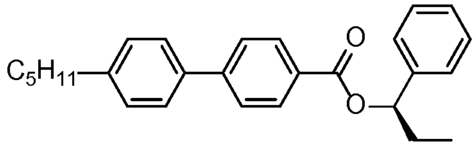

**CM 45**

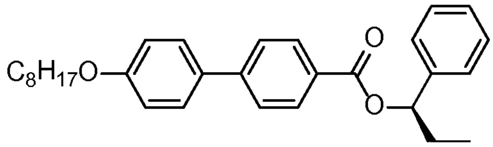

**CM 47**

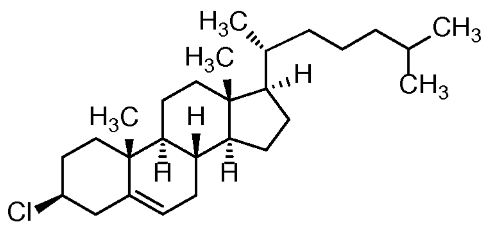

**CC**

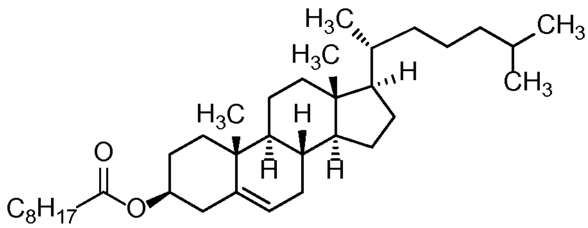

**CN**

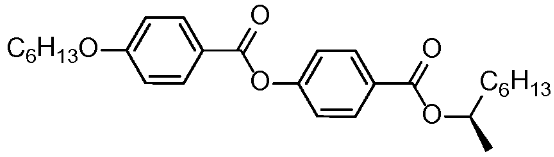

**R/S-811**

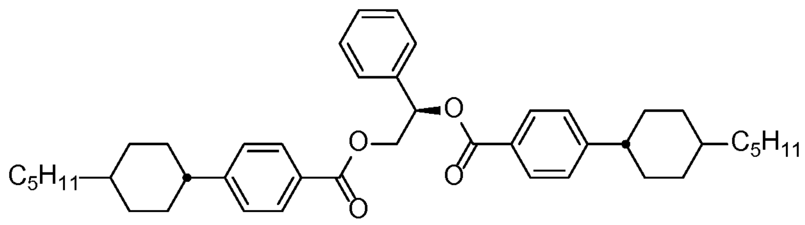

**R/S-1011**

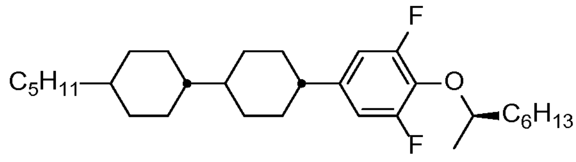

**R/S-2011**

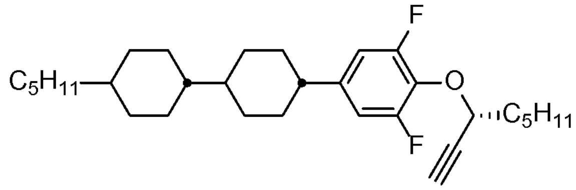

**R/S-3011**

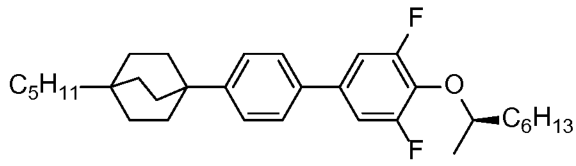

**R/S-4011**

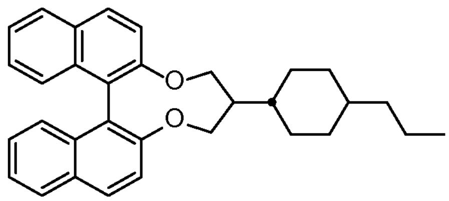

**R/S-5011**

In a preferred embodiment of the present invention, the mesogenic media comprise one or more compounds selected from the group of the compounds of Table F.

The mesogenic media in accordance with the present application preferably comprise two or more, preferably four or more, compounds selected from the group consisting of the compounds from the above tables.

The liquid-crystal media in accordance with the present invention preferably comprise

- seven or more, preferably eight or more, compounds, preferably compounds having three or more, preferably four or more, different formulae, selected from the group of the compounds from Table D.

Examples

The following examples illustrate the present invention without limiting it in any way.
However, it is clear to the person skilled in the art from the physical properties what properties can be achieved and in

what ranges they can be modified. In particular, the combination of the various properties which can preferably be achieved is thus well defined for the person skilled in the art.

The voltage holding ratio (VHR) is determined in test cells produced at Merck Japan. The test cells have alkali-free glass substrates and are provided with polyimide alignment layers with a layer thickness of 50 nm, which result in planar alignment of the liquid crystals. The layer gap is uniform (3.0 μm). The surface area of the transparent ITO electrodes is 1 cm2.

Unless indicated otherwise, the VHR is determined at 20°C (VHR20) and after 5 minutes in an oven at 100°C (VHR100) in a commercially available instrument from Autronic Melchers, Germany. The voltage used has a frequency of 60 Hz, unless indicated otherwise.

The accuracy of the VHR measurement values depends on the respective value of the VHR. The accuracy decreases with decreasing values. The deviations generally observed in the case of values in the various magnitude ranges are compiled in their order of magnitude in the following table.

| VHR range | | Deviation (relative) |
|---|---|---|
| VHR values | | $\Delta_G$VHR/VHR /% |
| from | to | Approx. |
| 99.6% | 100% | +/- 0.1 |
| 99.0% | 99.6% | +/-0.2 |
| 98% | 99% | +/- 0.3 |
| 95% | 98% | +/- 0.5 |
| 90% | 95% | +/- 1 |
| 80% | 90% | +/-2 |
| 60% | 80% | +/-4 |
| 40% | 60% | +/-8 |
| 20% | 40% | +/-10 |
| 10% | 20% | +/- 20 |

The stability to UV irradiation is investigated in a "Suntest CPS", a commercial instrument from Heraeus, Germany. The sealed test cells are irradiated for between 30 min and 2.0 hours, unless explicitly indicated, without additional heating. The irradiation power in the wavelength range from 300 nm to 800 nm is 765 W/m$^2$ V. A UV "cut-off' filter having an edge wavelength of 310 nm is used in order to simulate the so-called window glass mode. In each series of experiments, at least four test cells are investigated for each condition, and the respective results are indicated as averages of the corresponding individual measurements.

The decrease in the voltage holding ratio (ΔVHR) usually caused by the exposure, for example by heat, by UV irradiation or by LCD backlighting, is determined in accordance with the following equation (1):

$$\Delta VHR(t) = VHR(t) - VHR(t=0) \qquad (1).$$

Mixture Examples

Liquid-crystal mixtures N1 to N5 having the compositions and properties as indicated in the following tables are prepared and characterized with respect to their general physical properties and their applicability in microwave components at 19 GHz and 20°C. These data are given in the tables below the composition tables for the individual mixture examples.

Mixture N1

| | | | |
|---|---|---|---|
| PU-3-S | 10.0 % | $T_{(N,I)}$. [°C]: | 123.5 |

(continued)

| | | | |
|---|---|---|---|
| PTU-3-S | 10.0 % | Δε (1 kHz, 20°C): | 22.3 |
| PTU-5-S | 10.0 % | ε∥ (1 kHz, 20°C): | 26.9 |
| PGU-3-S | 16.0 % | ε⊥ (1 kHz, 20°C): | 4.7 |
| PPTU-4-S | 7.0 % | γ1 [mPa·s], (20°C): | 287 |
| PPTU-5-S | 7.0 % | $K_1$ [pN], (20°C): | 14.0 |
| CPU-2-S | 20.0 % | $K_3$ [pN], (20°C): | 19.5 |
| CPU-4-S | 20.0 % | $V_0$ [V] (20°C) | 0.84 |
| Σ | 100.0 % | | |

Mixture N2

| | | | |
|---|---|---|---|
| PTU-3-S | 10.0 % | $T_{(N,I)}$. [°C]: | 149.5 |
| PTU-5-S | 8.0 % | Δε (1 kHz, 20°C): | 23.3 |
| PGU-3-S | 18.0 % | ε∥ (1 kHz, 20°C): | 27.8 |
| PPTU-4-S | 7.0 % | ε⊥ (1 kHz, 20°C): | 4.5 |
| PPTU-5-S | 9.0 % | γ1 [mPa·s], (20°C): | 396 |
| PGTU-4-S | 6.0 % | $K_1$ [pN], (20°C): | 16.9 |
| CPU-2-S | 22.0 % | $K_3$ [pN], (20°C): | 20.8 |
| CPU-4-S | 22.0 % | LTS (bulk, -20°C) [h] | ≥1000 |
| Σ | 100.0 % | LTS (bulk, -30°C) [h] | 768 |

Mixture N3

| | | | |
|---|---|---|---|
| PTU-3-S | 16.0 % | $T_{(N,I)}$. [°C]: | 151 |
| PGU-3-S | 14.0 % | Δε (1 kHz, 20°C): | 22.7 |
| PPTU-5-S | 20.0 % | ε∥ (1 kHz, 20°C): | 27.0 |
| CPU-2-S | 35.0 % | ε⊥ (1 kHz, 20°C): | 4.4 |
| CPU-4-S | 15.0 % | γ1 [mPa·s], (20°C): | 384 |
| Σ | 100.0 % | | |

Mixture N4

| | | | |
|---|---|---|---|
| PU-3-S | 20.0 % | $T_{(N,I)}$. [°C]: | 128 |
| PGU-3-S | 20.0 % | Δε (1 kHz, 20°C): | 23.6 |
| PGU-4-S | 20.0 % | ε∥ (1 kHz, 20°C): | 28.2 |
| CPU-2-S | 20.0 % | ε⊥ (1 kHz, 20°C): | 5.0 |
| CPU-4-S | 20.0 % | $γ_1$ [mPa·s], (20°C): | 318 |
| Σ | 100.0 % | $K_1$ [pN], (20°C): | 13.7 |
| | | $K_3$ [pN], (20°C): | 18.6 |
| | | $V_0$ [V] (20°C) | 0.80 |

Mixture N5

| | | | |
|---|---|---|---|
| | 8.0 % | $T_{(N,I)}$. [°C]: | 151.5 |
| PTU-5-S | 8.0 % | Δε (1 kHz, 20°C): | 22.9 |
| PGU-3-S | 10.0 % | ε‖ (1 kHz, 20°C): | 27.4 |
| PGU-4-S | 6.0 % | ε⊥ (1 kHz, 20°C): | 4.5 |
| PGU-5-S | 4.0 % | γ1 [mPa·s], (20°C): | 403 |
| PPTU-4-S | 4.0 % | $K_1$ [pN], (20°C): | 17.3 |
| PPTU-5-S | 8.0 % | $K_3$ [pN], (20°C): | 20.4 |
| PGTU-4-S | 5.0 % | $V_0$ [V] (20°C) | 0.92 |
| PGTU-5-S | 5.0 % | LTS bulk [h, -30°C]: | 1000 |
| CPU-2-S | 22.0 % | LTS bulk [h, -40°C]: | 1000 |
| CPU-4-S | 20.0 % | τ [20°C, 19 GHz]: | 0.307 |
| Σ | 100.0 | $\varepsilon_{r,\parallel}$ [20°C, 19 GHz]: | 3.5830 |
| | | $\varepsilon_{r,\perp}$ [20°C, 19 GHz]: | 2.4838 |
| | | tan $\delta_{\varepsilon\ r,\parallel}$ [20°C, 19 GHz]: | 0.0058 |
| | | tan $\delta_{\varepsilon\ r,\perp}$ [20°C, 19 GHz]: | 0.0113 |
| | | η [20°C, 19 GHz]: | 27.2 |

The mixtures N1 to N5 are stabilised with the compound D-1c

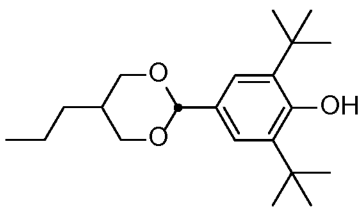

D-1c

The stabilised mixtures S1 to S5 consist of 99.90% of mixtures N1 to N5, respectively, and 0.10% of the compound D-1c.

Comparative Mixture C1 comprises the alternative stabiliser ST-3a-1 from the state of the art:

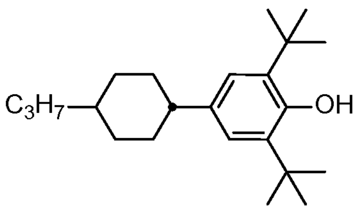

ST-3a-1

| Mixture | Host | c(D-1c) [%] |
|---|---|---|
| S1 | N1 | 0.10 |
| S2 | N2 | 0.10 |
| S3 | N3 | 0.10 |
| S4 | N4 | 0.10 |
| S5 | N5 | 0.10 |

| Mixture | Host | c(ST-3a-1) [%] |
|---|---|---|
| C1 | N1 | 0.10 |

The VHR of the mixtures N1 to N5, S1 to S5 and C1 is determined as described above ($VHR100_{initial}$). Next, the mixtures are split into two parts and are each filled into sealed ampoules under nitrogen and stored in an oven for 24 h and 100 h, respectively. Afterwards the VHR is determined again ($VHR_{heat\ load24}$ and $VHR_{heat\ load100}$). The results are summarised in the Table 1.

Table 1 VHR after heat load:

| Mixture | $VHR100_{initial}$ [%] | $VHR_{heat\ load\ 24}$ [%] | $VHR_{heat\ load\ 100}$ [%] |
|---|---|---|---|
| N1 | 88 | 38 | 13 |
| S1 | 86 | 78 | 65 |
| C1 | 85 | 80 | 15 |
| N2 | 85 | 60 | 17 |
| S2 | 85 | 78 | 55 |
| N3 | - | - | - |
| S3 | - | - | - |
| N4 | 78 | 80 | 20 |
| S4 | 82 | 82 | 82 |
| N5 | - | - | - |
| S5 | - | - | - |

The stabilised mixtures S1 to S5 exhibit significantly improved VHR values after heat load compared to the unstabilised mixtures N1 to N5. Furthermore, the VHR values of comparative mixture C1 show that the stabiliser D-1c according to the invention is also effective after long term stress of 100 h, whereas the use of the stabiliser ST-3a-1 from the state of the art gives a very similar result as the unstabilised mixture N1.

The liquid-crystal mixtures S6 to S9 and Ch1 to Ch6 are prepared according to the following tables. S6 to S9 and Ch1 to Ch6 show equally high VHR values after heat load as the examples above.

Mixture S6

| | | | |
|---|---|---|---|
| | 14.98 % | $T_{(N,I)}$. [°C]: | 124.0 |
| PTU-5-S | 14.98 % | $\Delta n$ [20°C, 589.3 nm] | 0.3628 |
| PGU-3-S | 14.98 % | $n_e$ [20°C, 589.3 nm] | 1.9034 |
| PPTU-5-S | 9.99 % | $n_o$ [20°C, 589.3 nm] | 1.5406 |
| CPU-2-S | 27.97 % | $\Delta\varepsilon$ (1 kHz, 20°C): | 22.1 |
| CPU-4-S | 16.98 % | $\varepsilon_{\parallel}$ (1 kHz, 20°C): | 26.7 |
| D-1c | 0.12 % | $\varepsilon_{\perp}$ (1 kHz, 20°C): | 4.6 |
| Σ | 100.00 % | $\gamma_1$ [mPa·s], (20°C): | 307 |
| | | $K_1$ [pN], (20°C): | 14.5 |
| | | $K_3$ [pN], (20°C): | 18.01 |
| | | LTS (bulk, -20°C) [h] | ≥1000 |
| | | $\tau$ [19 GHz, 20°C] | 0.305 |
| | | $\varepsilon_{r,\perp}$ [19 GHz, 20°C] | 3.5338 |
| | | $\varepsilon_{r,\parallel}$ [19 GHz, 20°C] | 2.4562 |
| | | tan $\delta_{\varepsilon\ r,\parallel}$ [19 GHz, 20°C] | 0.0064 |
| | | tan $\delta_{\varepsilon\ r,\perp}$ [19 GHz, 20°C] | 0.0116 |
| | | $\eta$ [19 GHz, 20°C] | 26.3 |

Mixture S7

| | | | |
|---|---|---|---|
| D-1c | 0.12 | Klärpunkt [°C]: | 151.5 |
| | 7.99 | $\Delta n$ [589 nm, 20°C]: | 0.3790 |
| PTU-5-S | 7.99 | $n_e$ [589 nm, 20°C]: | 1.9172 |
| PGU-3-S | 9.99 | $n_o$ [589 nm, 20°C]: | 1.5382 |
| PGU-4-S | 5.99 | $\Delta_\varepsilon$ [1 kHz, 20°C]: | 22.9 |
| PGU-5-S | 4.0 | $\varepsilon_\parallel$ [1 kHz, 20°C]: | 27.4 |
| PPTU-4-S | 4.0 | $\varepsilon_\perp$ [1 kHz, 20°C]: | 4.5 |
| PPTU-5-S | 7.99 | $\gamma_1$ [mPa s, 20°C]: | 403 |
| PGTU-4-S | 4.99 | $K_1$ [pN, 20°C]: | 17.3 |
| PGTU-5-S | 4.99 | $K_3$ [pN, 20°C]: | 20.4 |
| CPU-2-S | 21.97 | $K_3/K_1$ [pN, 20°C]: | 1.18 |
| CPU-4-S | 19.98 | $V_0$ [V, 20°C]: | 0.92 |
| $\Sigma$ | 100.0 | LTS bulk [h, -10°C]: | |
| | | LTS bulk [h, -20°C]: | |
| | | LTS bulk [h, -30°C]: | 1000 |
| | | LTS bulk [h, -40°C]: | 1000 |
| | | $\tau$ [20°C, 19 GHz]: | 0.307 |
| | | $\varepsilon_{r,\parallel}$ [20°C, 19 GHz]: | 3.5830 |
| | | $\varepsilon_{r,\perp}$ [20°C, 19 GHz]: | 2.4838 |
| | | tan $\delta_{\varepsilon\ r,\parallel}$ [20°C, 19 GHz]: | 0.0058 |
| | | tan $\delta_{\varepsilon\ r,\perp}$ [20°C, 19 GHz]: | 0.0113 |
| | | $\eta$ [20°C, 19 GHz]: | 27.2 |

Mixture S8

| | | | |
|---|---|---|---|
| D-1c | 0.12 | Klärpunkt [°C]: | 153.5 |
| | 7.99 | $\Delta n$ [589 nm, 20°C]: | 0.3754 |
| PTU-5-S | 7.99 | $n_e$ [589 nm, 20°C]: | 1.9124 |
| PGU-3-S | 7.99 | $n_o$ [589 nm, 20°C]: | 1.5370 |
| PPTU-4-S | 7.99 | $\Delta_\varepsilon$ [1 kHz, 20°C]: | 21.1 |
| PPTU-5-S | 7.99 | $\varepsilon_\parallel$ [1 kHz, 20°C]: | 25.3 |
| PGTU-4-S | 7.99 | $\varepsilon_\perp$ [1 kHz, 20°C]: | 4.2 |
| CPU-2-S | 27.97 | $\gamma_1$ [mPa s, 20°C]: | 353 |
| CPU-4-S | 23.97 | $K_1$ [pN, 20°C]: | 16.1 |
| $\Sigma$ | 100.0 | $K_3$ [pN, 20°C]: | 19.9 |
| | | $K_3/K_1$ [pN, 20°C]: | 1.24 |
| | | $V_0$ [V, 20°C]: | 0.92 |
| | | LTS bulk [h, -10°C]: | |
| | | LTS bulk [h, -20°C]: | 1000 |
| | | LTS bulk [h, -30°C]: | 1000 |
| | | LTS bulk [h, -40°C]: | 1000 |
| | | $\tau$ [20°C, 19 GHz]: | 0.313 |
| | | $\varepsilon_{r,\parallel}$ [20°C, 19 GHz]: | 3.5496 |
| | | $\varepsilon_{r,\perp}$ [20°C, 19 GHz]: | 2.4374 |
| | | tan $\delta_{\varepsilon\ r,\parallel}$ [20°C, 19 GHz]: | 0.0057 |
| | | tan $\delta_{\varepsilon\ r,\perp}$ [20°C, 19 GHz]: | 0.0106 |
| | | $\eta$ [20°C, 19 GHz]: | 29.5 |

Mixture S9

| | | | |
|---|---|---|---|
| D-1c | 0.12 | Klärpunkt [°C]: | 151 |
| | 15.98 | $\Delta n$ [589 nm, 20°C]: | 0.3779 |
| PGU-3-S | 13.98 | $n_e$ [589 nm, 20°C]: | 1.9169 |
| PPTU-5-S | 19.98 | $n_o$ [589 nm, 20°C]: | 1.5390 |
| CPU-2-S | 34.96 | $\Delta_\varepsilon$ [1 kHz, 20°C]: | 22.7 |
| CPU-4-S | 14.98 | $\varepsilon_\parallel$ [1 kHz, 20°C]: | 27.0 |
| $\Sigma$ | 100.0 | $\varepsilon_\perp$ [1 kHz, 20°C]: | 4.4 |
| | | $\gamma_1$ [mPa s, 20°C]: | 384 |
| | | $K_1$ [pN, 20°C]: | 16.8 |
| | | $K_3$ [pN, 20°C]: | 21.6 |
| | | $K_3/K_1$ [pN, 20°C]: | 1.29 |
| | | $V_0$ [V, 20°C]: | 0.91 |
| | | LTS bulk [h, -20°C]: | 1000 |
| | | LTS bulk [h, -30°C]: | 216 |
| | | LTS bulk [h, -40°C]: | 0 |
| | | $\tau$ [20°C, 19 GHz]: | 0.311 |
| | | $\varepsilon_{r,\parallel}$ [20°C, 19 GHz]: | 3.5851 |
| | | $\varepsilon_{r,\perp}$ [20°C, 19 GHz]: | 2.4705 |
| | | tan $\delta_{\varepsilon\ r,\parallel}$ [20°C, 19 GHz]: | 0.0059 |
| | | tan $\delta_{\varepsilon\ r,\perp}$ [20°C, 19 GHz]: | 0.0106 |
| | | $\eta$ [20°C, 19 GHz]: | 29.3 |

Preferred cholesteric mixtures are preferred using the chiral dopants A-II-1-1 or A-III-1-1 shown below.

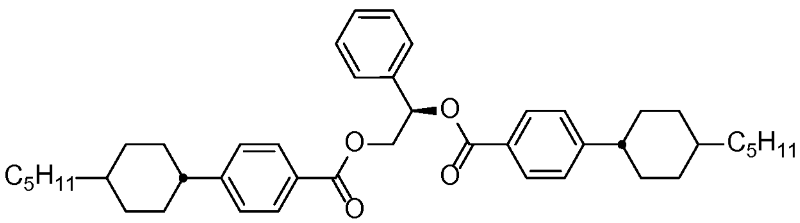

A-II-1-1

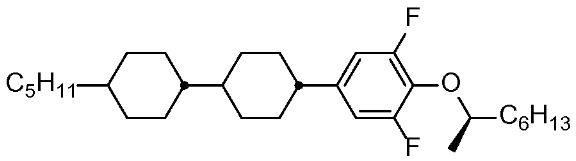

A-III-1-1

The cholesteric mixtures Ch1 to Ch6 have the following composition:

| Mixture | Host | % Host | Dopant | % Dopant |
|---|---|---|---|---|
| Ch1 | S7 | 99.90 | A-II-1-1 | 0.10 |
| Ch2 | S7 | 99.80 | A-II-1-1 | 0.20 |
| Ch3 | S7 | 99.70 | A-II-1-1 | 0.30 |
| Ch4 | S7 | 99.75 | A-III-1-1 | 0.25 |
| Ch5 | S7 | 99.50 | A-III-1-1 | 0.50 |

(continued)

| Mixture | Host | % Host | Dopant | % Dopant |
|---|---|---|---|---|
| Ch6 | S7 | 99.25 | A-III-1-1 | 0.75 |

The mixtures Ch1 to Ch6 show faster switching than the host mixture S7 without chiral dopant.

## Claims

**1.** Liquid-crystal medium, **characterized in that** it comprises

a) one or more compounds of the formula D,

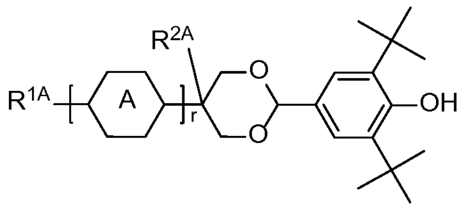

D

in which

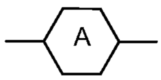

denotes

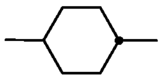,
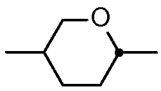

or

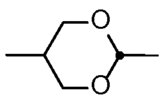

$R^{1A}$ denotes H, an alkyl, alkenyl or alkoxy radical having up to 15 C atoms, in which one or more $CH_2$-groups may be replaced by

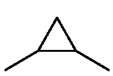,
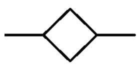,
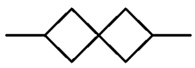,
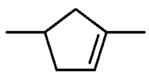

or

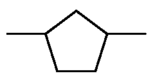,

and in which one or more H atoms may be replaced by halogen,
$R^{2A}$ denotes H, alkyl or alkenyl or alkoxy having up to 7 C atoms, in which one or more H atoms may be

replaced by halogen,
r is 0 or 1;

and
b) one or more compounds selected from the group of compounds of formulae I, II and III,

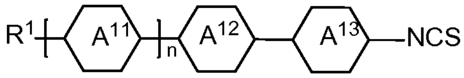
I

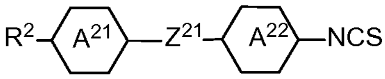
II

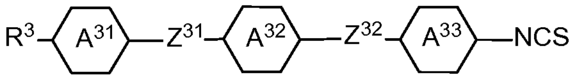
III

in which

$R^1$ denotes H, unfluorinated alkyl or unfluorinated alkoxy having 1 to 17 C atoms, or unfluorinated alkenyl, unfluorinated alkenyloxy or unfluorinated alkoxyalkyl having 2 to 15 C atoms, in which one or more $CH_2$-groups may be replaced by

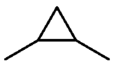,
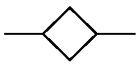,
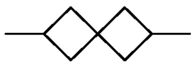,

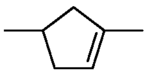
or
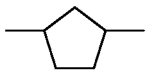,

n is 0, 1 or 2,

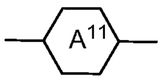

to

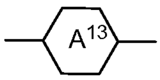,

on each occurrence, independently of one another, denote

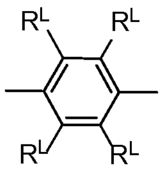,
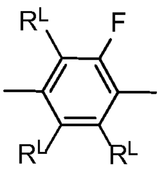,
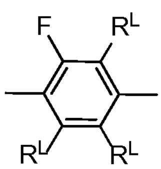,

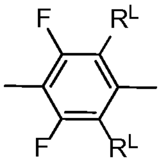, 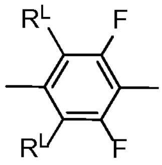, 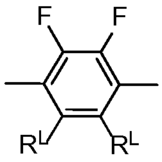

or,

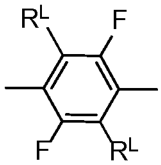,

in which $R^L$, on each occurrence identically or differently, denotes H or alkyl having 1 to 6 C atoms, and wherein

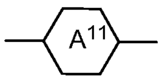

alternatively denotes

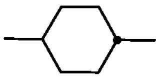, 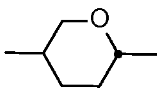, 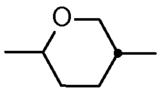, 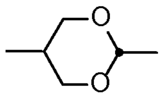,

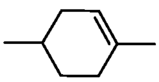 or 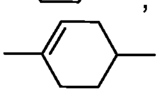,

$R^2$ denotes H, unfluorinated alkyl or unfluorinated alkoxy having 1 to 17 C atoms, or unfluorinated alkenyl, unfluorinated alkenyloxy or unfluorinated alkoxyalkyl having 2 to 15 C atoms, in which one or more $CH_2$-groups may be replaced by

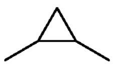, 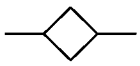, 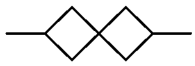,

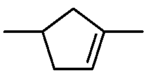 or 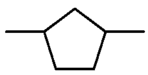,

$Z^{21}$ denotes *trans*-CH=CH-, *trans*-CF=CF- or -C≡C-, and

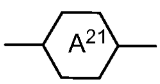 and 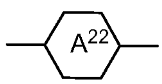,

independently of one another, denote

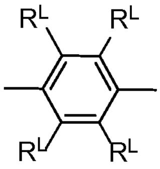, 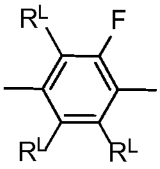, 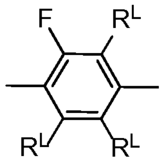,

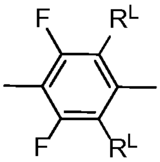, 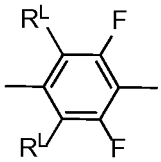, 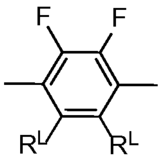

or,

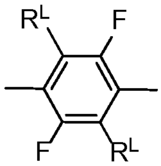,

in which $R^L$, on each occurrence identically or differently, denotes H or alkyl having 1 to 6 C atoms; $R^3$ denotes H, unfluorinated alkyl or unfluorinated alkoxy having 1 to 17 C atoms, or unfluorinated alkenyl, unfluorinated alkenyloxy or unfluorinated alkoxyalkyl having 2 to 15 C atoms, in which one or more $CH_2$-groups may be replaced by

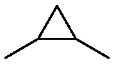, 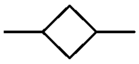, 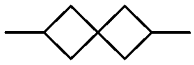,

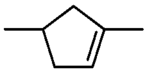 or 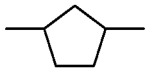,

one of $Z^{31}$ and $Z^{32}$, denotes *trans*-CH=CH-, *trans*-CF=CF- or -C≡C-and the other one, independently thereof, denotes - C≡C-, *trans*-CH=CH-, *trans*-CF=CF- or a single bond, and

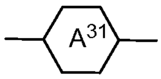

to

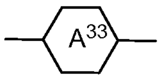,

independently of one another, denote

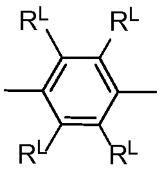, 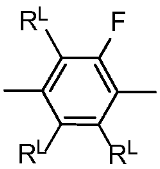, 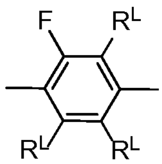,

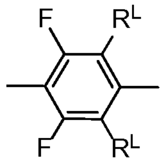, 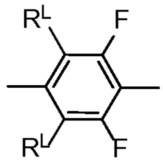, 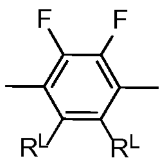

or,

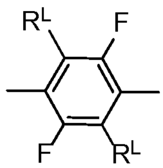,

in which $R^L$, on each occurrence identically or differently, denotes H or alkyl having 1 to 6 C atoms, and wherein

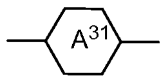

alternatively denotes

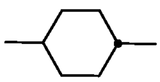, 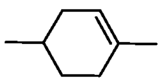 or 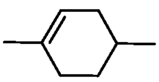.

**2.** Liquid-crystal medium according to claim 1, wherein the one or more compounds of formula D are selected from the group of compounds of formulae D-1 and D-2

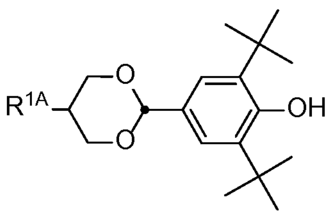

D-1

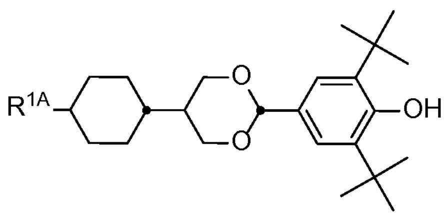

D-2

in which

$R^{1A}$ denotes alkyl having 1 to 7 C atoms.

**3.** Medium according to claim 1 or 2, wherein the total concentration of the compounds of the formula D in the medium is in the range of from 0.05 % to 1 % by weight.

**4.** Liquid-crystal medium according to one or more of claims 1 to 3, wherein the medium comprises one or more compounds selected from the group of compounds of formula I-1 to I-5

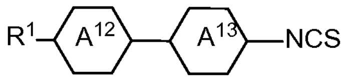

I-1

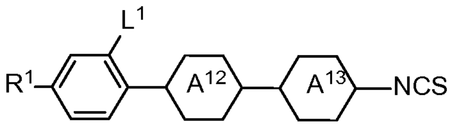

I-2

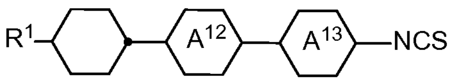

I-3

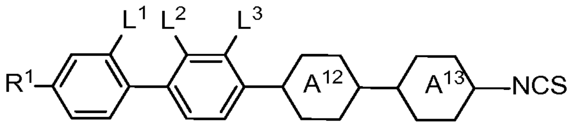

I-4

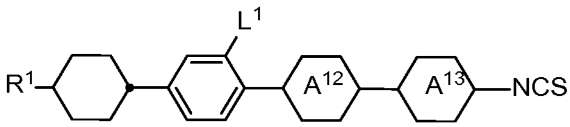

I-5

in which

$L^1$, $L^2$ and $L^3$ on each occurrence, identically or differently, denote H or F, and
$R^1$,

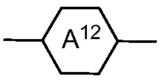 and 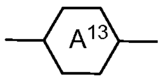

have the meanings given for formula I in claim 1.

**5.** Liquid-crystal medium according to one or more of claims 1 to 4, wherein the medium comprises one or more compounds selected from the group of compounds of the formulae II-1 to II-3

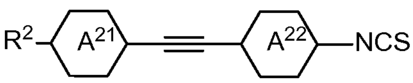

II-1

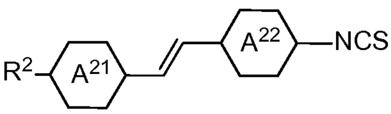

II-2

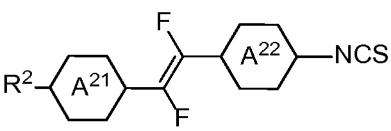

II-3

in which
$R^2$,

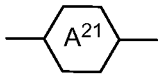 and 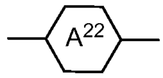

have the meanings given in claim 1 for formula II.

**6.** Liquid-crystal medium according to one or more of claims 1 to 5, wherein the medium comprises one or more compounds selected from the group of compounds of the formulae III-1 to III-6

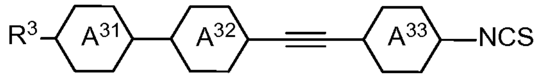

III-1

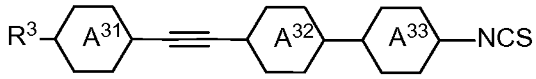

III-2

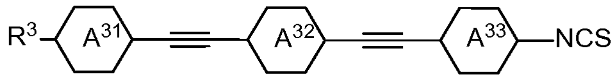

III-3

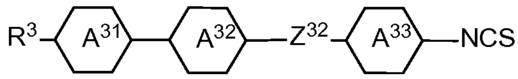

III-4

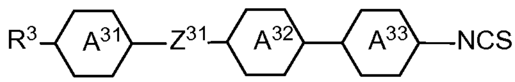

III-5

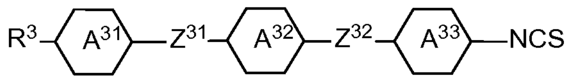

III-6

in which

$R^3$,

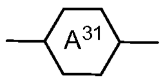, 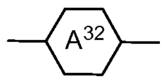 and 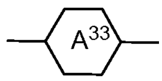

have the meanings given in claim 1 for formula III, and

$Z^{31}$ and $Z^{32}$ independently of one another, denote trans-CH=CH- or *trans*-CF=CF-, and in formula III-6 alternatively one of $Z^{31}$ and $Z^{32}$ may denote -C≡C-.

**7.** Liquid-crystal medium according to one or more of claims 1 to 6, wherein the medium additionally comprises one or more chiral compounds.

**8.** Component for high-frequency technology, **characterised in that** it comprises the liquid crystal medium according to one or more of claims 1 to 7.

**9.** Component according to Claim 8, wherein the component is suitable for operation in the microwave range.

**10.** Component according to Claim 8 or 9, wherein the component is a liquid-crystal based antenna element, a phase shifter, a tunable filter, a tunable metamaterial structure, a matching network or a varactor.

**11.** Microwave antenna array, **characterised in that** it comprises one or more components according to one or more of Claims 8 to 10.

**12.** Use of a liquid-crystal medium according to one or more of Claims 1 to 7 in a component for high-frequency technology.

**13.** Process for the preparation of a liquid-crystal medium according to one or more of claims 1 to 7, **characterised in that** one or more compounds of formula D are mixed with one or more compounds selected from the group of compounds of formulae I, II and III and optionally additional mesogenic compounds, and optionally a chiral compound are added.

## Patentansprüche

**1.** Flüssigkristallmedium, **dadurch gekennzeichnet, dass** es

a) eine oder mehrere Verbindungen der Formel D

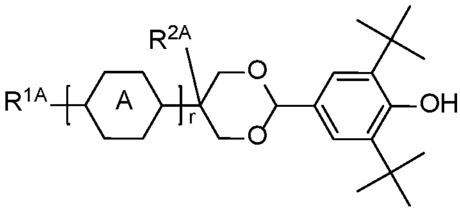

D

worin

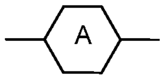

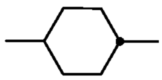 , 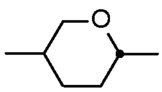

oder

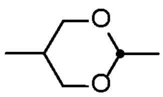

bedeutet,

$R^{1A}$ H, einen Alkyl-, Alkenyl- oder Alkoxyrest mit bis zu 15 C-Atomen bedeutet, worin eine oder mehrere $CH_2$-Gruppen durch

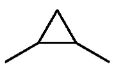 , 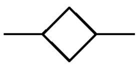 , 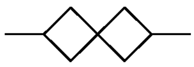 , 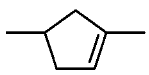

oder

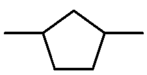

ersetzt sein können und worin ein oder mehrere H-Atome durch Halogen ersetzt sein können,
$R^{2A}$ H, Alkyl oder Alkenyl oder Alkoxy mit bis zu 7 C-Atomen bedeutet, worin ein oder mehrere H-Atome durch Halogen ersetzt sein können,

r 0 oder 1 ist;

und

b) eine oder mehrere Verbindungen, die ausgewählt sind aus der Gruppe der Verbindungen der Formeln I, II und III

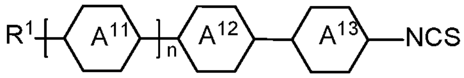

I

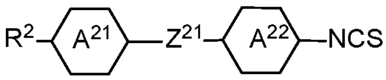

II

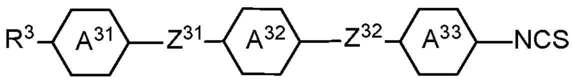

III

worin

$R^1$ H, unfluoriertes Alkyl oder unfluoriertes Alkoxy mit 1 bis 17 C-Atomen oder unfluoriertes Alkenyl, unfluoriertes Alkenyloxy oder unfluoriertes Alkoxyalkyl mit 2 bis 15 C-Atomen bedeutet, worin eine oder mehrere $CH_2$-Gruppen durch

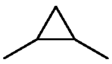, 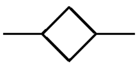, 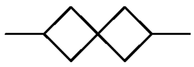,

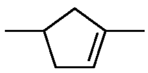 oder 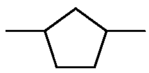

ersetzt sein können,

n 0, 1 oder 2 ist,

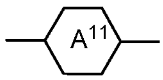

bis

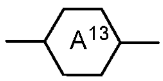

bei jedem Auftreten unabhängig voneinander

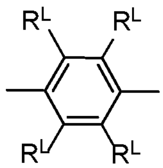, 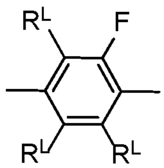, 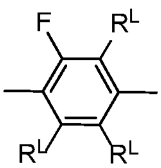,

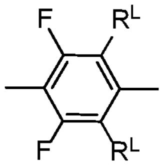, 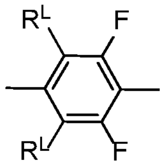, 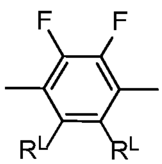

oder

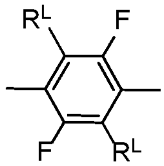

bedeuten, worin $R^L$ bei jedem Auftreten gleich oder verschieden H oder Alkyl mit 1 bis 6 C-Atomen bedeutet, und bei denen

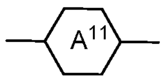

alternativ

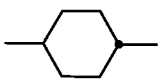, 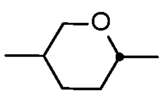, 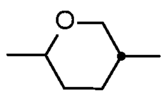, 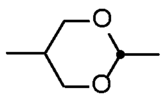,

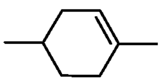 oder 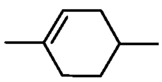

bedeutet,

$R^2$ H, unfluoriertes Alkyl oder unfluoriertes Alkoxy mit 1 bis 17 C-Atomen oder unfluoriertes Alkenyl, unfluoriertes Alkenyloxy oder unfluoriertes Alkoxyalkyl mit 2 bis 15 C-Atomen bedeutet, worin eine oder mehrere $CH_2$-Gruppen durch

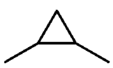, 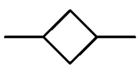, 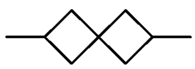,

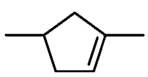 oder 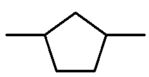

ersetzt sein können,

$Z^{21}$ *trans*-CH=CH-, *trans*-CF=CF- oder -C≡C- bedeutet und

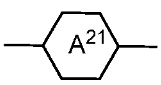 und 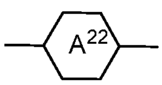

unabhängig voneinander

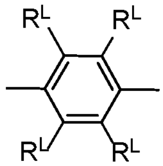, 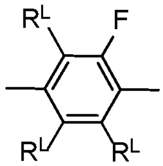, 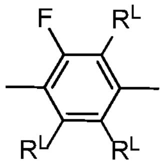,

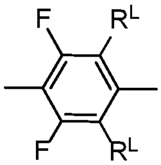, 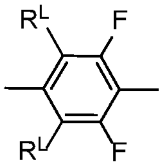, 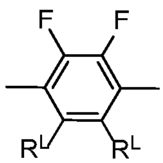

oder

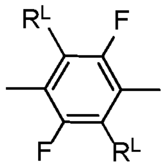

bedeuten, worin $R^L$ bei jedem Auftreten gleich oder verschieden H oder Alkyl mit 1 bis 6 C-Atomen bedeutet; $R^3$ H, unfluoriertes Alkyl oder unfluoriertes Alkoxy mit 1 bis 17 C-Atomen oder unfluoriertes Alkenyl, unfluoriertes Alkenyloxy oder unfluoriertes Alkoxyalkyl mit 2 bis 15 C-Atomen bedeutet, worin eine oder mehrere $CH_2$-Gruppen durch

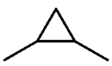, 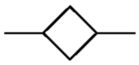, 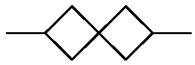,

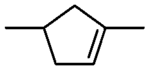 oder 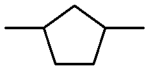

ersetzt sein können,
einer von $Z^{31}$ und $Z^{32}$ *trans*-CH=CH-, trans-CF=CF- oder -C=C-bedeutet und der andere unabhängig davon -C≡C-, trans-CH=CH-, trans-CF=CF- oder eine Einfachbindung bedeutet und

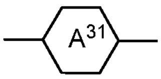

bis

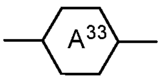

unabhängig voneinander

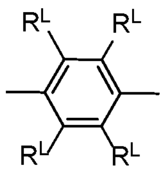, 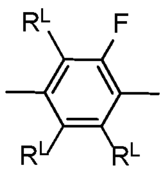, 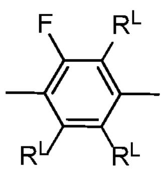,

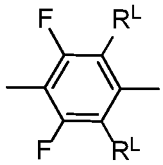, 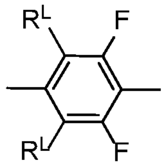, 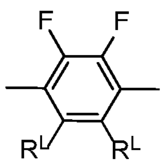

oder

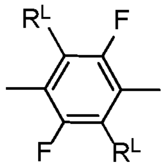

bedeuten,
worin $R^L$ bei jedem Auftreten gleich oder verschieden H oder Alkyl mit 1 bis 6 C-Atomen bedeutet, und bei denen

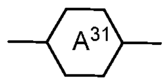

alternativ

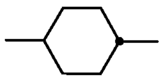, 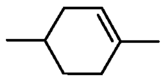 oder 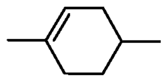

bedeutet,

enthält.

2. Flüssigkristallmedium nach Anspruch 1, bei dem die eine oder mehreren Verbindungen der Formel D ausgewählt sind aus der Gruppe der Verbindungen der Formeln D-1 und D-2

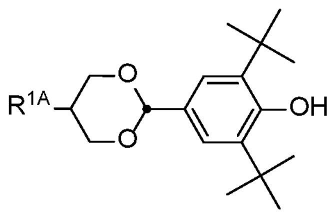

D-1

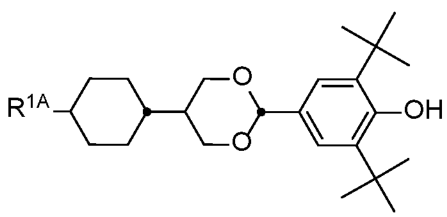

D-2

worin

$R^{1A}$ Alkyl mit 1 bis 7 C-Atomen bedeutet.

3. Medium nach Anspruch 1 oder 2, bei dem die Gesamtkonzentration der Verbindungen der Formel D in dem Medium

im Bereich von 0,05 Gew.-% bis 1 Gew.-% liegt.

**4.** Flüssigkristallmedium nach einem oder mehreren der Ansprüche 1 bis 3, bei dem das Medium eine oder mehrere Verbindungen enthält, die ausgewählt sind aus der Gruppe der Verbindungen der Formeln I-1 bis I-5

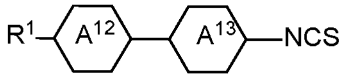

I-1

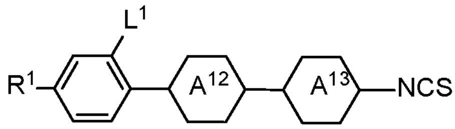

I-2

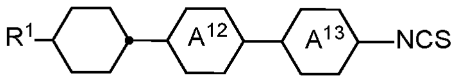

I-3

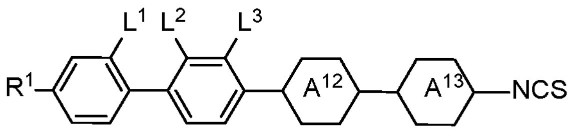

I-4

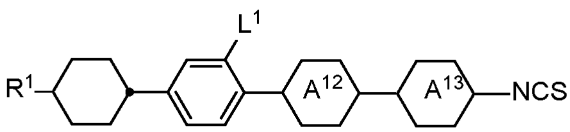

I-5

worin

$L^1$, $L^2$ und $L^3$ bei jedem Auftreten gleich oder verschieden H oder F bedeuten und $R^1$,

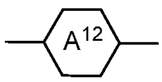

und

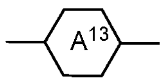

die für Formel I in Anspruch 1 gegebenen Bedeutungen besitzen.

**5.** Flüssigkristallmedium nach einem oder mehreren der Ansprüche 1 bis 4, bei dem das Medium eine oder mehrere Verbindungen enthält, die ausgewählt sind aus der Gruppe der Verbindungen der Formeln II-1 bis II-3

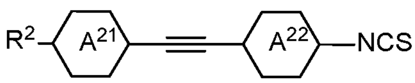

II-1

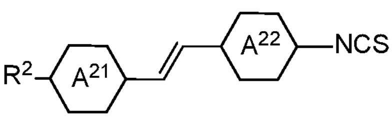

II-2

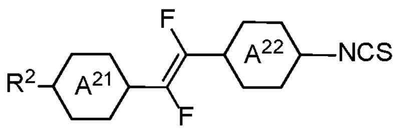

II-3

worin

$R^2$,

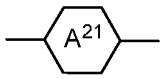 und 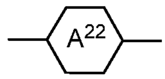

die in Anspruch 1 für Formel II gegebenen Bedeutungen besitzen.

**6.** Flüssigkristallmedium nach einem oder mehreren der Ansprüche 1 bis 5, bei dem das Medium eine oder mehrere Verbindungen enthält, die ausgewählt sind aus der Gruppe der Verbindungen der Formeln III-1 bis III-6

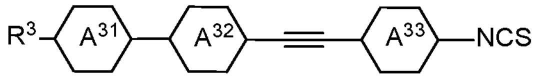

III-1

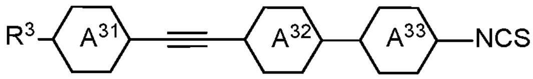

III-2

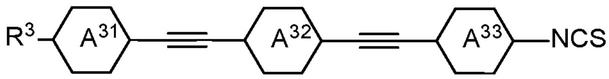

III-3

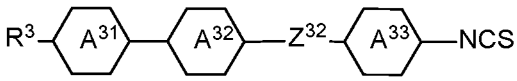

III-4

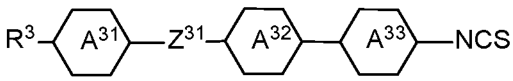

III-5

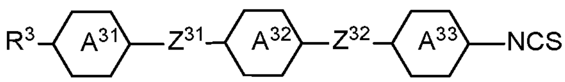

III-6

worin

$R^3$,

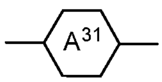 , 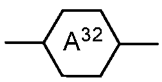 und 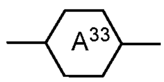

die in Anspruch 1 für Formel III gegebenen Bedeutungen besitzen und
$Z^{31}$ und $Z^{32}$ unabhängig voneinander trans-CH=CH- oder *trans*-CF=CF- bedeuten und in Formel III-6 alternativ einer von $Z^{31}$ und $Z^{32}$ -C=C- bedeuten kann.

**7.** Flüssigkristallmedium nach einem oder mehreren der Ansprüche 1 bis 6, bei dem das Medium zusätzlich eine oder mehrere chirale Verbindungen enthält.

**8.** Komponente für die Hochfrequenztechnologie, **dadurch gekennzeichnet, dass** sie das Flüssigkristallmedium nach

einem oder mehreren der Ansprüche 1 bis 7 enthält.

**9.** Komponente nach Anspruch 8, bei der sich die Komponente für den Betrieb im Mikrowellenbereich eignet.

**10.** Komponente nach Anspruch 8 oder 9, bei der es sich bei der Komponente um ein flüssigkristallbasiertes Antennenelement, einen Phasenschieber, ein abstimmbares Filter, eine abstimmbare Metamaterialstruktur, ein Anpassnetzwerk oder einen Varaktor handelt.

**11.** Mikrowellenantennenanordnung, **dadurch gekennzeichnet, dass** sie eine oder mehrere Komponenten nach einem oder mehreren der Ansprüche 8 bis 10 enthält.

**12.** Verwendung eines Flüssigkristallmediums nach einem oder mehreren der Ansprüche 1 bis 7 in einer Komponente für die Hochfrequenztechnologie.

**13.** Verfahren zur Herstellung eines Flüssigkristallmediums nach einem oder mehreren der Ansprüche 1 bis 7, **dadurch gekennzeichnet, dass** man eine oder mehrere Verbindungen der Formel D mit einer oder mehreren Verbindungen, die ausgewählt sind aus der Gruppe der Verbindungen der Formeln I, II und III, mischt und gegebenenfalls zusätzliche mesogene Verbindungen und gegebenenfalls eine chirale Verbindung zugibt.

## Revendications

**1.** Milieu cristallin liquide, **caractérisé en ce qu'**il comprend

a) un ou plusieurs composé(s) de la formule D,

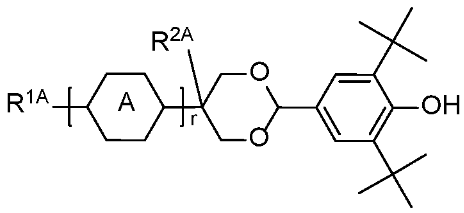

D

dans laquelle

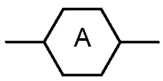

représente

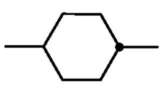

,

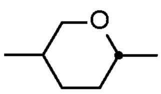

ou

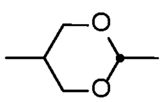

$R^{1A}$ représente H, un radical alkyle, alkényle ou alcoxy qui comporte jusqu'à 15 atomes de C, où un ou plusieurs groupe(s) $CH_2$ peut/peuvent être remplacé(s) par

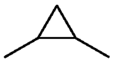, 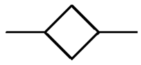,

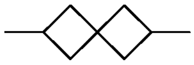, 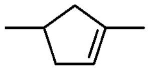 ou 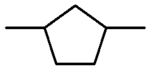,

et où un ou plusieurs atome(s) de H peut/peuvent être remplacé(s) par halogène,
$R^{2A}$ représente H, alkyle ou alkényle ou alcoxy qui comporte jusqu'à 7 atomes de C, où un ou plusieurs atome(s) de H peut/peuvent être remplacé(s) par halogène,
r est 0 ou 1 ;

et
b) un ou plusieurs composé(s) qui est/sont sélectionné(s) parmi le groupe de composés des formules I, II et III,

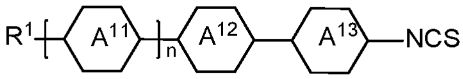 I

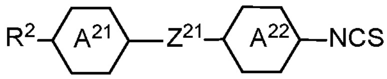 II

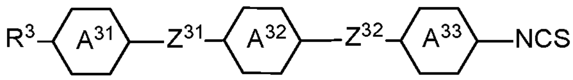 III

dans lesquelles

$R^1$ représente H, alkyle non fluoré ou alcoxy non fluoré qui comporte de 1 à 17 atome(s) de C, ou alkényle non fluoré, alkényloxy non fluoré ou alcoxyalkyle non fluoré qui comporte de 2 à 15 atome(s) de C, où un ou plusieurs groupe(s) $CH_2$ peut/peuvent être remplacé(s) par

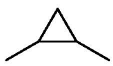, 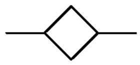, 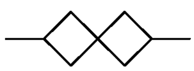, 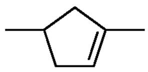

ou

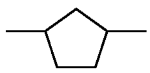,

n est 0, 1 ou 2,

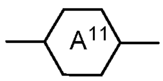

à

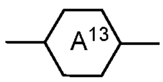,

représentent pour chaque occurrence, de manière indépendante les uns des autres,

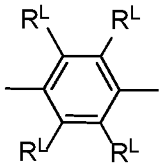, 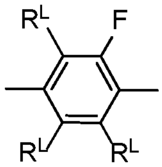, 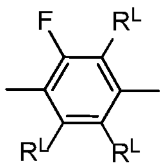,

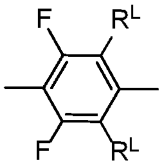, 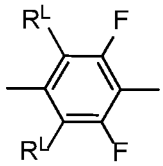, 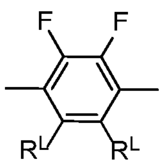

ou

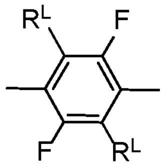,

où $R^L$ représente pour chaque occurrence, de manière identique ou différente, H ou alkyle qui comporte de 1 à 6 atome(s) de C, et où

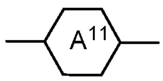

représente à titre d'alternative

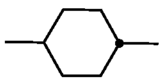, 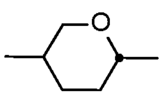, 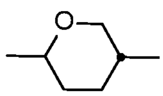, 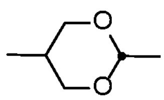,

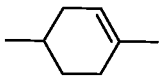 ou 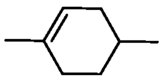,

$R^2$ représente H, alkyle non fluoré ou alcoxy non fluoré qui comporte de 1 à 17 atome(s) de C, ou alkényle non fluoré, alkényloxy non fluoré ou alcoxyalkyle non fluoré qui comporte de 2 à 15 atomes de C, où un ou plusieurs groupe(s) $CH_2$ peut/peuvent être remplacé(s) par

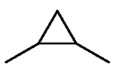, 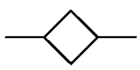, 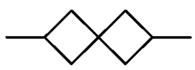, 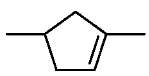

ou

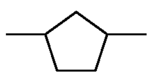,

$Z^{21}$ représente *trans*-CH=CH-, trans-CF=CF- ou -C=C-, et

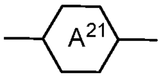 et 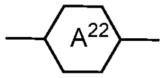 ,

représentent, de manière indépendante l'un de l'autre,

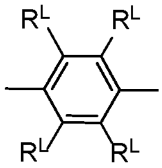 , 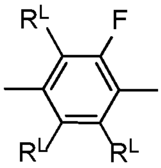 , 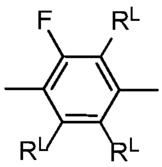 ,

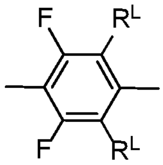 , 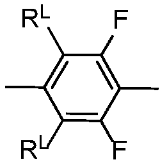 , 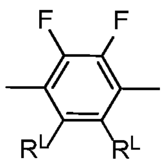

ou

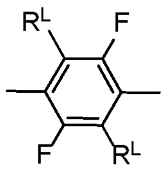 ,

où $R^L$ représente, pour chaque occurrence de manière identique ou différente, H ou alkyle qui comporte de 1 à 6 atome(s) de C ;
$R^3$ représente H, alkyle non fluoré ou alcoxy non fluoré qui comporte de 1 à 17 atome(s) de C, ou alkényle non fluoré, alkényloxy non fluoré ou alcoxyalkyle non fluoré qui comporte de 2 à 15 atomes de C, où un ou plusieurs groupe(s) $CH_2$ peut/peuvent être remplacé(s) par

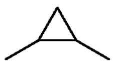 , 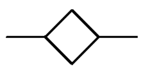 , 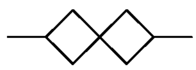 , 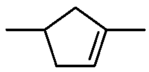

ou

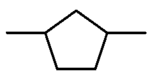 ,

l'un de $Z^{31}$ et de $Z^{32}$ représente *trans-CH=CH-,* trans-CF=CF- ou -C=C- et l'autre représente, de manière indépendante de celui-ci, -C=C-, *trans-CH=CH-,* trans-CF=CF- ou une liaison simple, et

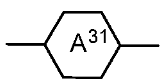

à

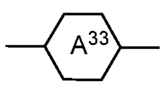 ,

représentent, de manière indépendante les uns des autres,

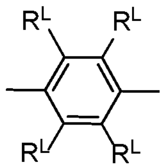, 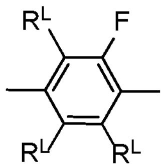, 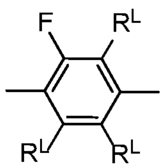,

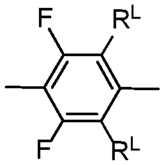, 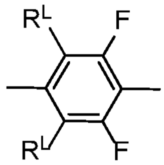, 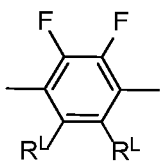

ou

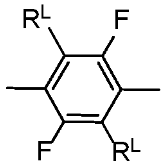,

où $R^L$ représente, pour chaque occurrence de manière identique ou différente, H ou alkyle qui comporte de 1 à 6 atome(s) de C,
et où

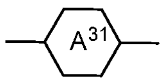

représente à titre d'alternative

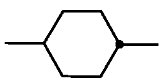, 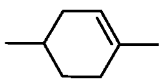 ou 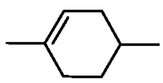.

2. Milieu cristallin liquide selon la revendication 1, dans lequel les un ou plusieurs composés de la formule D sont sélectionnés parmi le groupe de composés des formules D-1 et D-2

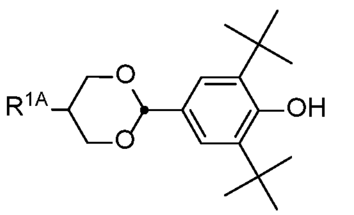

D-1

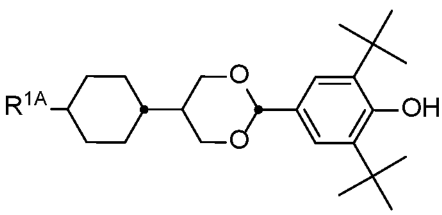

D-2

dans lesquelles

$R^{1A}$ représente alkyle qui comporte de 1 à 7 atome(s) de C.

3. Milieu cristallin liquide selon la revendication 1 ou 2, dans lequel la concentration totale des composés de la formule D dans le milieu s'inscrit à l'intérieur de la plage qui va de 0,05 % à 1 % en poids.

4. Milieu cristallin liquide selon une ou plusieurs des revendications 1 à 3, dans lequel le milieu comprend un ou plusieurs composé(s) qui est/sont sélectionné(s) parmi le groupe de composés des formules I-1 à I-5

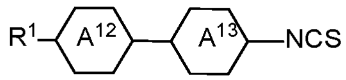

I-1

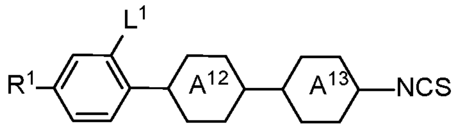

I-2

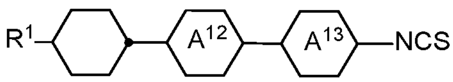

I-3

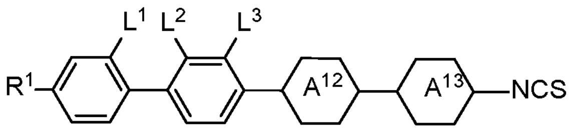

I-4

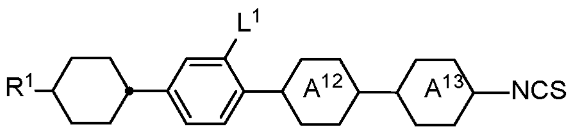

I-5

dans lesquelles

$L^1$, $L^2$ et $L^3$ représentent pour chaque occurrence, de manière identique ou différente, H ou F, et
$R^1$,

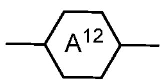
et
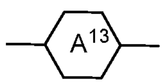

présentent les significations qui ont été données pour la formule I selon la revendication 1.

5. Milieu cristallin liquide selon une ou plusieurs des revendications 1 à 4, dans lequel le milieu comprend un ou plusieurs composé(s) qui est/sont sélectionné(s) parmi le groupe de composés des formules II-1 à II-3

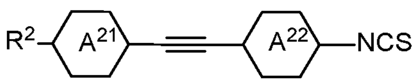

II-1

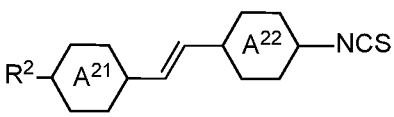

II-2

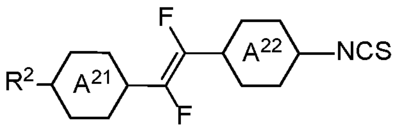

II-3

dans lesquelles
$R^2$,

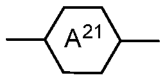 et 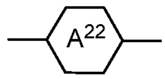

présentent les significations qui ont été données selon la revendication 1 pour la formule II.

**6.** Milieu cristallin liquide selon une ou plusieurs des revendications 1 à 5, dans lequel le milieu comprend un ou plusieurs composé(s) qui est/sont sélectionné(s) parmi le groupe de composés des formules III-1 à III-6

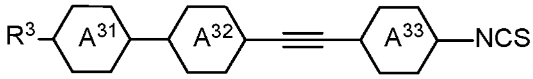

III-1

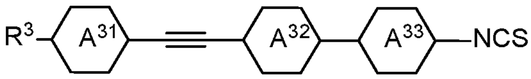

III-2

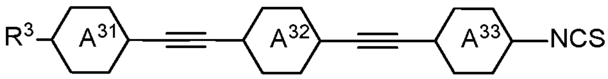

III-3

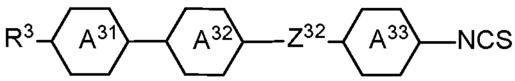

III-4

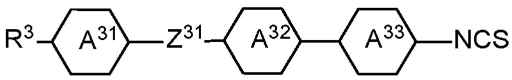

III-5

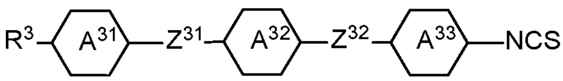

III-6

dans lesquelles

$R^3$,

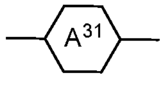, 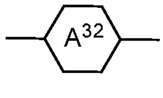 et 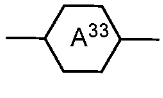

présentent les significations qui ont été données selon la revendication 1 pour la formule III, et
$Z^{31}$ et $Z^{32}$ représentent, de manière indépendante l'un de l'autre, *trans*-CH=CH- ou *trans*-CF=CF-, et dans la formule III-6 à titre d'alternative, l'un de $Z^{31}$ et $Z^{32}$ peut représenter -C≡C-.

**7.** Milieu cristallin liquide selon une ou plusieurs des revendications 1 à 6, dans lequel le milieu comprend de façon additionnelle un ou plusieurs composé(s) chiral/chiraux.

**8.** Composant pour la technologie des hautes fréquences, **caractérisé en ce qu'**il comprend le milieu cristallin liquide

selon une ou plusieurs des revendications 1 à 7.

**9.** Composant selon la revendication 8, dans lequel le composant convient pour un fonctionnement dans la plage des hyperfréquences.

**10.** Composant selon la revendication 8 ou 9, dans lequel le composant est un élément d'antenne basé sur cristaux liquides, un déphaseur, un filtre accordable, une structure métamatérielle accordable, un réseau d'adaptation ou un varacteur.

**11.** Antenne réseau hyperfréquences, **caractérisée en ce qu'**elle comprend un ou plusieurs composant(s) selon une ou plusieurs des revendications 8 à 10.

**12.** Utilisation d'un milieu cristallin liquide selon une ou plusieurs des revendications 1 à 7 dans un composant pour la technologie des hautes fréquences.

**13.** Procédé pour la préparation d'un milieu cristallin liquide selon une ou plusieurs des revendications 1 à 7, **caractérisé en ce qu'**un ou plusieurs composé(s) de la formule D est/sont mélangé(s) avec un ou plusieurs composé(s) qui est/sont sélectionné(s) parmi le groupe de composés des formules I, II et III et en option, des composés mésogènes additionnels et en option, un composé chiral sont ajoutés.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- DE 102004029429 A
- JP 2005120208 A
- EP 2982730 A1
- DE 3425503
- DE 3534777
- DE 3534778
- DE 3534779
- DE 3534780
- DE 4342280
- EP 01038941 A
- DE 19541820
- WO 9800428 A
- GB 2328207 A
- WO 0294805 A
- WO 0234739 A
- WO 0206265 A
- WO 0206196 A
- WO 0206195 A

### Non-patent literature cited in the description

- Direct Simulation of Material Permittivites using an Eigen-Susceptibility Formulation of the Vector Variational Approach. **A. GAEBLER ; F. GOELDEN ; S. MÜLLER ; A. PENIRSCHKE ; R. JAKOBY.** 12MTC 2009 - International Instrumentation and Measurement Technology Conference. IEEE, 2009, 463-467
- Merck Liquid Crystals, Physical Properties of Liquid Crystals. Merck KGaA, November 1997
- **A. PENIRSCHKE et al.** Cavity Perturbation Method for Characterization of Liquid Crystals up to 35 GHz. *34th European Microwave Conference,* 545-548
- Direct Simulation of Material Permittivities ... **A. GAEBLER et al.** 12MTC 2009 - International Instrumentation and Measurement Technology Conference. IEEE, 2009, 463-467
- **A. PENIRSCHKE et al.** *34th European Microwave Conference,* 545-548